(19) Europäisches Patentamt
European Patent Office
Office européen des brevets

(11) **EP 3 704 536 B1**

(12) **EUROPÄISCHE PATENTSCHRIFT**

(45) Veröffentlichungstag und Bekanntmachung des Hinweises auf die Patenterteilung:
**21.09.2022 Patentblatt 2022/38**

(21) Anmeldenummer: **18799433.0**

(22) Anmeldetag: **24.10.2018**

(51) Internationale Patentklassifikation (IPC):
**G02F 1/065** (2006.01)  **G02B 6/12** (2006.01)

(52) Gemeinsame Patentklassifikation (CPC):
**G02F 1/065;** G02B 2006/12142; G02F 2201/501

(86) Internationale Anmeldenummer:
**PCT/EP2018/000486**

(87) Internationale Veröffentlichungsnummer:
**WO 2019/086138 (09.05.2019 Gazette 2019/19)**

(54) **WELLENLEITER-BAUELEMENT**

WAVEGUIDE COMPONENT

COMPOSANT DE GUIDE D'ONDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.11.2017 DE 102017125581**

(43) Veröffentlichungstag der Anmeldung:
**09.09.2020 Patentblatt 2020/37**

(73) Patentinhaber: **Karlsruher Institut für Technologie 76131 Karlsruhe (DE)**

(72) Erfinder:
• **FREUDE, Wolfgang**
**76199 Karlsruhe (DE)**
• **KOOS, Christian**
**74936 Siegelsbach (DE)**
• **LAUERMANN, Matthias**
**74632 Neuenstein (DE)**
• **UMMETHALA, Sandeep**
**76137 Karlsruhe (DE)**

(56) Entgegenhaltungen:
**US-A1- 2003 169 958**

• **KORN D ET AL: "Silicon-organic hybrid (SOH) IQ modulator for 16QAM at 112 Gbit/s", 2013 CONFERENCE ON LASERS & ELECTRO-OPTICS EUROPE & INTERNATIONAL QUANTUM ELECTRONICS CONFERENCE CLEO EUROPE/IQEC, IEEE, 12. Mai 2013 (2013-05-12), Seite 1, XP032588408, DOI: 10.1109/CLEOE-IQEC.2013.6801453 [gefunden am 2014-04-17]**
• **FREUDE W ET AL: "100 Gbit/s electro-optic modulator and 56 Gbit/s wavelength converter for DQPSK data in silicon-organic hybrid (SOH) technology", PHOTONICS SOCIETY SUMMER TOPICAL MEETING SERIES, 2010 IEEE, IEEE, PISCATAWAY, NJ, USA, 19. Juli 2010 (2010-07-19), Seiten 96-97, XP031736177, ISBN: 978-1-4244-3730-6**
• **KOOS C ET AL: "Femtojoule modulation and frequency comb generation in silicon-organic hybrid (SOH) devices", 2014 16TH INTERNATIONAL CONFERENCE ON TRANSPARENT OPTICAL NETWORKS (ICTON), IEEE, 6. Juli 2014 (2014-07-06), Seiten 1-4, XP032627482, DOI: 10.1109/ICTON.2014.6876569 [gefunden am 2014-08-12]**

**Beschreibung**

Die Erfindung betrifft eine Vorrichtung zum Leiten von Licht insbesondere ein Wellenleiter-Bauelement im Bereich der integrierten Optik, insbesondere der wellenleiterbasierten elektro-optischen Modulatoren. Hierin ist unter einem elektro-optischen Material ein Material verstanden, das -seine optischen Eigenschaften bei Wechselwirkung mit einem elektrischen Feld ändert.

**Technisches Gebiet**

Integriert-optische Schaltkreise werden zunehmend auf Halbleitersubstraten wie z.B. auf sogenannten Silicon-on-Insulator-Substraten (SOI) realisiert, was es erlaubt, die verschiedensten Funktionen auf einem Chip zu vereinen. Schlüsselkomponenten sind dabei Modulatoren, mit denen sich elektrische Modulationssignale bzw. -spannungen auf eine Lichtwelle (einen "optischen Träger") aufprägen lassen. Unter dem Begriff "Modulationssignal" ist hierin zumindest ein Spannungs- oder Stromsignal zu verstehen. Ferner ist hierin unter dem Begriff "Wellenleiter" ein optischer Wellenleiter zu verstehen. Ein solcher Wellenleiter ist zumindest teilweise gegenüber Licht transparent bzw. transluzent und derart eingerichtet, dass durch einen solchen Wellenleiter zumindest teilweise Licht hindurch leitbar ist bzw. das durch einen solchen Wellenleiter Licht hindurch geführt werden kann. Außerdem ist hierin unter dem Begriff "transparent" eine Materialeigenschaft der offenbarten Wellenleiters und dessen Ausführungsformen zu verstehen, die es ermöglicht Licht über die Länge des Wellenleiter-Bauelements mit einer Dämpfung von bevorzugt weniger als 30 dB, besonders bevorzugt weniger als 20 dB, und ganz besonders bevorzugt weniger als 10 dB hindurch zu leiten. Des Weiteren ist hierin unter dem Begriff "Licht" zumindest ein Bereich der elektromagnetischen Strahlung bzw. des elektromagnetischen Spektrums zu verstehen. Darüber hinaus ist hierin unter dem Begriff "Licht" elektromagnetische Wellen mit Vakuumwellenlängen von ungefähr 10 nm bis ungefähr 1 mm und insbesondere zwischen ungefähr 30 nm und ungefähr $300\,\mu m$ (bzw. Frequenzen zwischen 1 THz und 10 PHz), zu verstehen. D.h. mit anderen Worten, dass unter dem Begriff "Licht" zumindest folgende Bereiche des elektromagnetischen Spektrums zu verstehen sind, wobei zumindest folgende Bereiche dabei umfasst sind: der Ultraviolettbereich (umfassend Vakuumwellenlängen in einem Bereich von ungefähr 10 nm bis ungefähr 380 nm bzw. Frequenzen in einem Bereich von ungefähr 790 THz bis ungefähr 10 PHz), der sichtbare Bereich (umfassend Vakuumwellenlängen in einem Bereich von ungefähr 380 nm bis ungefähr 780 nm bzw. Frequenzen in einem Bereich von ungefähr 380 THz bis ungefähr 790 THz) sowie der Infrarotbereich (umfassend Vakuumwellenlängen in einem Bereich von ungefähr 790 nm bis ungefähr 1 mm bzw. Frequenzen in einem Bereich von ungefähr 1 THz bis ungefähr 380 THz). Darüber hinaus ist Licht hierin ausschließlich das Licht zu verstehen, das innerhalb des Wellenleiter-Bauelements durch das Wellenleiter-Bauelement geführt werden kann. Solche Modulatoren könnten bspw. in der Telekommunikationsbranche, Messtechnik bzw. allgemein in der integrierten Photonik zum Einsatz kommen.

Viele der heute gebräuchlichen halbleiterbasierten integriert-optischen Modulatoren nutzen die Tatsache, dass die optischen Eigenschaften (Brechungsindex, Absorption) eines Halbleiters mit der Ladungsträgerdichte variiert werden können. Zumindest Teile des optischen Wellenleiters müssen daher elektrisch leitfähig sein, was unvermeidlich mit optischen Verlusten einhergeht. Eine geringere elektrische Leitfähigkeit (größerer elektrischer Widerstand R) setzt zwar die optischen Verluste herab, begrenzt aber die Modulationsbandbreite in Verbindung mit einer unvermeidlichen Modulatorkapazität C auf eine Grenzfrequenz der Größenordnung 1/(RC). Halbleiterbasierte Lichtmodulatoren sind daher in vielen Fällen einem Zielkonflikt zwischen hoher Modulationseffizienz, hoher Modulationsbandbreite und geringer optischer Einfügedämpfung unterworfen.

Alternativ zur Injektion von freien Ladungsträgern in einen Halbleiter lassen sich Lichtmodulatoren auch mit elektro-optischen Materialien realisieren, die auf ein extern angelegtes elektrisches Feld mit einer quasi-instantanen Änderung der optischen Eigenschaften wie Brechzahl oder Dämpfung reagieren. Zu diesen Materialien zählen unter anderem solche mit optischer Nichtlinearität zweiter Ordnung, die den sog. Pockels-Effekt aufweisen. Über den Pockels-Effekt kann man den Brechungsindex und damit die Phase eines optischen Trägers proportional zu einem (quasi-)statischen elektrischen Modulationsfeld ändern.

Für preiswerte integriert-optische Komponenten ist Silizium das bevorzugte Material. Aufgrund seiner zentrosymmetrischen Kristallstruktur weist Silizium allerdings keine Nichtlinearität zweiter Ordnung auf. Eine Möglichkeit, Pockels-Effekt-Modulatoren in Materialsystemen ohne Nichtlinearität zweiter Ordnung zu realisieren, ist die hybride Integration mit einem elektro-optischen Material, bspw. mit organischen oder polymerbasierten Substanzen. Die Lichtwelle wird in einem Lichtwellenleiter derart geführt, dass sie mit dem elektro-optischen Material in Wechselwirkung tritt, so dass die Ausbreitungseigenschaften des optischen Signals wesentlich durch den Real- und/oder Imaginärteil des komplexen Brechungsindex im elektrooptischen Materials beeinflusst werden. Der komplexe Brechungsindex des elektrooptischen Materials lässt sich durch eine extern angelegte Spannung oder einen extern eingeprägten Strom verändern. Über dieses externe Strom- oder Spannungssignal lassen sich, ggf. in Kombination mit einer interferometrischen Struktur, die Amplitude und/oder die Phase des optischen Ausgangssignals einstellen. Dazu muss der Wellenleiter so ausgestaltet werden, dass die Lichtwelle sich zumindest teilweise in dem elektro-optischen Material ausbreitet. Wenn in demselben Raumbereich auch das elektrische Feld, welches von der angelegten elektrischen Spannung erzeugt wird, vorhanden ist kann durch eine Nichtlinearität zweiter Ordnung im elektro-optischen Material eine quasi-instantanen Änderung der optischen Eigenschaften wie der Brechzahl und damit eine Änderung der Materialgeschwindigkeit der Lichtwelle realisiert werden. Eine effiziente Modulation wird dadurch erreicht, dass man bei gegebener Trägerleistung und gegebener Modulationsspannung durch Wahl eines kleinen, zumindest teilweise aus elektro-optischem Material bestehenden Wellenleiter-querschnitts möglichst hohe elektrische Feldstärken erzeugt.

## Stand der Technik

Am Karlsruher Institut für Technologie (Abk.: KIT) wurden sogenannte silizium-organische Hybrid-Modulatoren (silicon-organic hybrid, Abk.: SOH) erarbeitet und patentiert (siehe **[1], [3]**). Darauf bauen weitere Patente und zugehörige Veröffentlichungen wie die Referenzen **[4]-[6]** und [6a] bis [6c] auf. Bei diesen Bauteilen kann allerdings die Kombination von hoher Modulationseffizienz (niedriger Modulationsspannung) bei höchsten Bandbreiten nur um den. Preis hoher optischer Verluste erreicht werden: Der Zielkonflikt zwischen Modulationseffizienz, hoher Modulationsbandbreite und geringer optischer Einfügedämpfung kann hierdurch noch nicht aufgelöst werden.

Strukturen dieser Art werden bspw. in der vom KIT eingereichten Patentanmeldung **[1]** offenbart. Für eine hohe Modulationsfeldstärke muss eine vorgegebene elektrische Modulationsspannung mit optisch verlustarmen ("transparenten") elektrisch leitfähigen Leitungsbereiche ("Elektroden") möglichst nahe an das vom optischen Feld erfüllte elektro-optische Material herangeführt werden. Je näher allerdings die elektrisch leitfähigen Leitungsbereiche dem lichtführenden Bereich kommen, desto höher werden die optischen Verluste sein, was zu dem oben beschriebenen Zielkonflikt führt. Um die Verluste gering zu halten, ist die Dotierung der transparenten Elektroden nach oben begrenzt, was zu einer Beschränkung der Leitfähigkeit und damit zu Geschwindigkeitslimitierungen durch die zugehörige RC-Zeitkonstante führt. Weiterhin führt die begrenzte Leitfähigkeit der transparenten Elektroden zu erhöhten elektrischen Verlusten bei der Propagation des Modulationsfeldes entlang der Elektrode.

Die Druckschrift **[2]** offenbart ein elektro-optisches Bauteil, das über einen elektro-optisch aktiven Wellenleiterkern und über ein, aus zwei Schichten aufgebautes Mantelmaterial verfügt. Die erste, direkt an den Wellenleiterkern anschließende Schicht des Mantelmaterials weist einen geringeren elektrischen Brechungsindex und eine geringere Dicke auf als die zweite Schicht des Mantelmaterials, die zwischen der ersten Schicht und den Elektrodenschichten liegt. Für eine gegebene an den Elektroden angelegte Spannung wird es damit möglich, die für die elektro-optische Interaktion maßgebliche elektrische Feldstärke im Wellenleiterkern zu erhöhen, ohne dass die optischen Wellenführungseigenschaften des Wellenleiters durch eine dem Wellenleiterkern direkt benachbarte Schicht mit hohem elektrischen Brechungsindex und dadurch zumeist auch hohem optischen Brechungsindex oder hoher optischer Absorption beeinträchtigt werden. Die von [2] beschriebene Struktur unterscheidet sich in mehrfacher Hinsicht von der unserer Erfindung zugrundeliegenden Struktur, und ist infolgedessen nicht in der Lage, die unserer Erfindung zugrundeliegende Aufgabenstellung zu erfüllen: Zum einen liegt bei der von [2] beschriebenen Struktur die elektro-optische Aktivität lediglich im Wellenleiterkern des Wellenleiters vor, nicht jedoch im Mantel. Die Zielsetzung der von Suzuki beanspruchten Struktur besteht also darin, dass durch eine von außen angelegt Spannung im Wellenleiterkern erzeugte elektrische Feld zu maximieren und dementsprechend außerhalb des Kerns zu minimieren. Die Lösung gemäß [2] unterscheidet sich dadurch grundsätzlich von der hierin beanspruchten Lösung gemäß zumindest einem der Ansprüche 1 bis 26, das Feld in einem bestimmten Bereich außerhalb des Kerns zu maximieren, und dementsprechend im Wellenleiterkern zu minimieren. Die Tatsache, dass bei der von [2] beschriebenen Struktur die elektro-optische Aktivität lediglich im Wellenleiterkern des Wellenleiters vorliegt, schränkt zudem die Auswahl der Werkstoffe für die elektro-optische aktive Zone stark ein, da diese neben einem hohen elektro-optischen Koeffizienten auch noch einen hohen Brechungsindex aufweisen müssen, um eine gute Wellenführung zu gewährleisten. Diese Anforderungen werden nur von einer eingeschränkten Zahl von Materialien erfüllt und gehen in vielen Fällen zusätzlich mit einer hohen elektrischen Brechzahl einher, die wiederum die im Wellenleiterkern wirksame elektrische Feldstärke des Modulationsfeldes verringert. Dieser Zielkonflikt wird in unserer Struktur komplett vermieden, da hier eine hohe elektrische Feldstärke in Mantelmaterial angestrebt wird, das einen geringen elektrischen und optischen Brechungsindex aufweist. Ferner beruht die in [2] offenbarte Struktur auf einer geschichteten Anordnung von Strukturen, bei der die elektro-optisch aktive Schicht als Grundlage für eine weitere Abscheidung von Mantel- und Elektrodenschichten mit hoher elektrischer oder optischer Qualität dient. Dies schränkt die Wahl an Werkstoffen weiter ein - Suzuki erwähnt in seiner Patentschrift explizit, dass für den elektro-optischen Wellenleiterkern bevorzugt nichtlineare optische Kristalle wie z.B. Lithiumniobat verwendet werden, die zunächst durch Polierprozesse auf die Dicke des Wellenleiterkerns gebracht werden müssen. Dies führt zu komplexen Fertigungsprozessen mit hohen Präzisionsanforderungen, die für eine kostengünstige Massenproduktion ungeeignete sein dürften. Eine Prozessierung mit kommerziell verfügbaren, gut beherrschbaren und hochgradig skalierbaren Siliziumphotonischen Fertigungsprozessen erscheint damit nur schwer vorstellbar, ebenso wie die monolithische Ko-Integration mit weiteren Bauteilen oder die Herstellung der Modulatoren über eine laterale Strukturierung von optischen Wellenleitern, elektrisch leitfähigen Leiterbahnen und dazwischenliegenden dielektrischen Bereichen erreichen, auf die das elektro-optisch aktive Material mit vergleichsweise geringen Anforderungen bzgl. Schichtdicke, Schichtqualität und lateralen Abmessungen abgeschieden werden kann.

Schriften [7]und [8]beschreiben einen elektro-optischen Modulator, bei dem optimierte Hochfrequenzeigenschaften durch den Einsatz von Materialien mit hoher elektrischer Brechzahl erreicht werden. Dabei werden mehrschichtige Elektrodenstrukturen beschrieben, wobei die dem Wellenleiterkern am nächsten liegende Schicht aus einem Halbleiter mit geringer Dotierung besteht. Diese Halbleiterschichten werden außerhalb des Einflussbereiches des optischen Feldes elektrisch leitend mit den metallischen Zuleitungen verbunden. Der sich daraus ergebende Zuleitungswiderstand innerhalb der Halbleiterschichten führt in der Regel zu einem Tiefpassverhalten. Dieses wird durch eine zusätzliche kapazitive Kopplung zwischen den metallischen Zuleitungen und den leitfähigen Halbleiterschichten überwunden. Dazu werden die metallischen Zuleitungen bis in den Bereich des optischen Wellenleiters flächig ausgedehnt und über eine dielektrische Schicht hoher elektrischer Brechzahl kapazitiv an die leitfähigen Halbleiterschichten angekoppelt. Durch die hohe elektrische Brechzahl ergibt sich ein Kondensator hoher Kapazität, der bei hohen Frequenzen als Kurzschluss wirkt und einem Abfall des Frequenzganges der Elektrodenstrukturen entgegenwirkt.

Die in [7] und [8] beschriebene Struktur weist eine Reihe von Nachteilen gegenüber der hier beanspruchten Struktur auf. Zum einen werden zwingend leitfähige Bereiche nahe dem optischen Wellenleiter benötigt, da der Wellenleiterkern sog. Multi-Quantum-Wells enthält, bei denen sich der optische Brechungsindex nur durch eine Injektion oder eine Verarmung von freien Ladungsträgern ändern lässt. Mit der in [8] beschriebenen Struktur ist es insbesondere nicht möglich, leitfähige Bereiche in der Nähe des optischen Wellenleiters komplett zu eliminieren. Zudem ist eine kostengünstige Herstellung der in [8] beschrieben Strukturen in großen Stückzahlen nur schwer vorstellbar: Zum einen basiert die Struktur auf einem komplexen vertikalen Schichtaufbau, bei der die elektro-optisch wirksame Struktur aus einem möglichst defektfreien einkristallinen Halbleiter besteht, der als Basis für das weitere Aufwachsen von in der Regel kristallinen Halbleiterschichten dient. Dies schränkt die Wahl Materialien für die elektro-optisch wirksame Schicht auf Materialien ein, die als Grundlage für das Aufwachsen qualitativ hochwertiger Schichten dienen können - im vorliegenden Fall werden Multi-Quantum-Wells verwendet, die mit aufwendigen Halbleiter-Epitaxieverfahren als einkristalline Halbleiterfilme mit sehr präzise definierten Schichtdicken aufgewachsen werden müssen. Eine Verwendung hocheffizienter elektro-optischer Polymere ist damit nicht möglich. Darüber hinaus erfordert die in [7] und [8] offenbarte Struktur, wie im unabhängigen Anspruch von [8] beschreiben, zwingend die Entfernung des Substrates, was die Herstellung extrem verkompliziert. Zudem beruht die Struktur auf der im Vergleich zur Silizium-Technologie teuren und aufwendigen Indiumphosphid-Technologie (Abk.: InP-Technologie).

Im Gegensatz zur der in [8] beschriebenen Struktur ist es mit der hier vorliegenden Erfindung möglich, leitfähige Bereiche nahe dem Wellenleiter komplett zu vermeiden oder in ihrem Einfluss stark zu reduzieren. Weiterhin ermöglicht es die hier beanspruchte Erfindung, eine große Vielfalt an elektro-optischen Materialien zu verwenden, an die keine besonderen Anforderungen bzgl. der Prozessierbarkeit gestellt werden müssen. Damit wird es möglich, ein Material zu verwenden, dessen optische Eigenschaften bereits durch ein angelegtes elektrisches Feld variiert werden können, so dass kein Ladungsträgertransport notwendig ist. Um eine hohe Effizienz des Bauteils zu erreichen, wird gezielt eine Feldüberhöhung an der Grenzfläche eines dielektrischen Materials mit hoher elektrischer Brechzahl ausgenutzt, siehe unten im Abschnitt Lösung. Das hier beanspruchte Konzept ermöglicht ferner Bauteilstrukturen, bei denen zunächst eine laterale Strukturierung von optischen Wellenleitern, elektrisch leitfähigen Leiterbahnen und dazwischenliegenden dielektrischen Bereichen durchgeführt wird, auf die das elektro-optisch aktive Material nach Abschluss der Strukturierung mit vergleichsweise geringen Anforderungen bzgl. Schichtdicke, Schichtqualität und lateralen Abmessungen abgeschieden werden kann. Ferner kommt die hier beanspruchte Erfindung im Gegensatz Patent von Dagli et al. ohne die Entfernung des Substrates aus. Zur Herstellung können gängige Fertigungslinien für die Silizium-basierte Mikroelektronik oder die Silizium-Photonik verwendet werden.

Die Schrift [9]offenbart ein elektro-optisches Bauteil, das über ein elektro-optisch aktives Material im Mantelbereich des optischen Wellenleiters verfügt. Das Patent setzt sich von Strukturen ab, die elektro-optisch aktive Materialien im Wellenleiterkern verwenden, und verfolgt die Zielsetzung, die damit einhergehenden Einschränkungen im Hinblick auf die Auswahl der Materialien zu überwinden. Die Ansprüche beziehen sich auf die Ausgestaltung des optischen Wellenleiters, der aus einem anorganischen Wellenleiterkern und zwei elektro-optisch aktiven und den Wellenleiterkern einschließenden organischen Schichten besteht. Diese Struktur unterscheidet sich in mehrfacher Hinsicht von der in unserer Erfindungsmeldung beschriebenen Anordnung: Zum einen ist es zur Herstellung der von [9] beschriebenen Struktur notwendig, die elektro-optisch aktive Schicht als Grundlage für eine weitere Abscheidung von Elektrodenschichten zu verwenden. Dies schränkt die Wahl an Werkstoffen stark ein. Die von [9] beschriebene Konfiguration erlaubt es zudem nicht, zunächst eine laterale Strukturierung von optischen Wellenleitern, elektrisch leitfähigen Leiterbahnen und dazwischenliegenden dielektrischen Bereichen vorzunehmen, und erst dann in einem anschließenden Abscheidungsschritt das elektro-optisch aktiven Material unter vergleichsweise geringen Anforderungen bzgl. Schichtdicke, Schichtqualität und lateralen Abmessungen aufzubringen. Eine Prozessierung mit kommerziell verfügbaren, gut beherrschbaren und hochgradig skalierbaren Silizium-photonischen Fertigungsprozessen ist auf Basis der Schrift [9] ebenso wenig möglich wie die monolithische Ko-Integration mit weiteren Silizium-Bauteilen. Gemäß [9] wird außerdem nicht auf die vorliegenden Erfindung zugrundeliegende Möglichkeit eingegangen, die von einer äußeren Spannung erzeugte Modulationsfeldstärke im elektro-optisch aktiven Mantelbereich dadurch zu erhöhen, indem ein erster und zweiter Mantelbereiche mit verschiedenen elektrischen Brechungsindizes verwendet wird.

In Schrift [10] wird ein elektro-optischer Modulator beschrieben, welcher einen optischen Wellenleiter besitzt, der aus einem elektro-optisch aktiven Wellenleiterkern und zwei Mantelbereichen besteht. Die erste Mantelschicht besitzt einen niedrigen optischen Brechungsindex und einen niedrigen elektrischen Brechungsindex, der, zweite Mantelbereich besitzt einen moderaten optischen Brechungsindex und einen erhöhten elektrischen Brechungsindex. Diese Struktur besitzt eine hohe Ähnlichkeit mit [2]. Auch hier wird das Mantelmaterial mit hohem elektrischen Brechungsindex dazu genutzt, das elektrische Feld einer angelegten Spannung im Wellenleiterkern zu erhöhen, während bei unserer Erfindung das Feld im Mantelbereich erhöht wird und im Wellenleiterkern möglichst gering gehalten wird. Dadurch wird die Wahl der elektro-optisch aktiven Materialien gemäß [10] erheblich eingeschränkt: Da das elektro-optische Material den Wellenleiterkern bildet, sollte es vorzugsweise einen hohen optischen Brechungsindex besitzen, aber einen kleinen elektrischen Brechungsindex. Weiterhin wird in [10] wie auch in [2] ein Modulator beschrieben, der auf einem vertikal geschichteten Aufbau basiert. Gemäß [10] werden hierzu organische Materialien genutzt, die in einem komplexen Prozess mit hoher optischer Qualität aufeinander aufgebracht werden müssen. Eine einfachere laterale Strukturierung in der Herstellung des Modulators wie in der Aufgabenstellung unserer Erfindungsmeldung gefordert ist hier nicht möglich.

## Aufgabe

Infolgedessen ergibt sich somit die Aufgabe, einen integriertoptischen Modulator durch Materialwahl und Funktionsweise derart zu gestalten bzw. zu bilden, dass elektrisch leitfähigen Bereiche mit einer hohen Konzentration an freien Ladungsträgern im Wechselwirkungsbereich des im Wellenleiter geführten Lichtes vermieden oder deren Einfluss stark verringert werden kann, während die Forderungen nach hoher Modulationseffizienz, hoher Modulationsbandbreite und geringer optischer Einfügedämpfung weiterhin erfüllt werden. Als Wechselwirkungsbereich des im Wellenleiter geführten Lichtes wird hier derjenige Bereich angesehen, in dem die Intensität um weniger als einen Faktor 1000 schwächer ist als der höchste im Wellenleiterquerschnitt auftretenden Intensitätswert. Die zugrundeliegende Struktur soll zudem mit einem möglichst einfachen Herstellungsprozess in großen Stückzahlen erzeugt werden können, idealerweise unter Ausnutzung hochgradig skalierbarer Fertigungsprozesse aus der Silizium-basierten Mikroelektronik (z.B. sog. "Complementary Metal-Oxide Semiconductor", CMOS). Weiterhin soll die Struktur all Vorteile des in [1] beanspruchten Konzeptes beibehalten. Zu diesen Vorteilen zählt z.B. die Verwendung eines elektro-optischen Materials im Wellenleitermantel anstatt im Wellenleiterkern. Auf diese Weise wird es bspw. möglich, einfach strukturierbare Halbleitermaterialien mit hohem Brechungsindex (wie z.B. Silizium) für den Wellenleiterkern zu verwenden, auch wenn diese keine elektro-optische Aktivität aufweisen. Das hochbrechende Wellenleiterkernmaterial ermöglicht eine starke Konzentration des Lichtes und damit kleine Bauteilabmessungen kann dann mit einer großen Vielfalt an elektro-optischen Mantelmaterialien kombiniert werden, wobei die Wechselwirkung des im Wellenleiter geführten Lichtes durch ein besonderes Design des Wellenleiterkerns z.B. in Form eines Schlitzwellenleiters erreicht werden kann. Besonders vorteilhaft sind in diesem Zusammenhang Anordnungen, bei denen das elektro-optisch aktive Material nicht als Grundlage für eine weitere Abscheidung von Schichten mit hoher elektrischer oder optischer Qualität und womöglich einer kristallinen Kristallstruktur dienen muss. Mit solchen Anordnungen wird es insbesondere möglich, organische elektro-optische Materialien als aktives Material zu verwenden, die über extrem hohe elektro-optische Koeffizienten verfügen, sich aber nur bedingt oder nicht als Grundlage für weitere anorganische Schichten eignen. Mit diesen Materialien wird es unter anderem möglich, eine Modulation, des Brechungsindex und damit der optischen Phase allein durch Anlegen eines elektrischen Feldes zu erreichen, ohne dass ein Strom in den aktiven Bereich eingeprägt werden muss. Solche Konfigurationen lassen sich z.B. durch eine laterale Strukturierung von optischen Wellenleitern, elektrisch leitfähige Leiterbahnen und dazwischenliegenden dielektrischen Bereichen erreichen, auf die das elektro-optisch aktive Material nach Abschluss der Strukturierung mit vergleichsweise geringen Anforderungen bzgl. Schichtdicke, Schichtqualität und lateralen Abmessungen abgeschieden werden kann. Dabei ist es wünschenswert, zur Herstellung der Wellenleiterstrukturen weitgehend auf kommerziell verfügbare, gut beherrschbare und hochgradig skalierbare Silizium-basierte Fertigungsprozesse aus der Mikroelektronik zurückzugreifen ("Silizium-Photonik"), die im Gegensatz zur Fertigung auf III-V-Halbleitern wie Indiumphosphid eine deutlich verbesserte Skalierbarkeit zu hohen Stückzahlen und zu komplexen photonischen Schaltkreisen ermöglichen. Eine wichtige Anforderung besteht weiterhin darin, dass die Modulatorstrukturen in einem monolithischen Integrationsansatz möglichst nahtlos mit weiteren Bauteilen aus dem mittlerweile sehr umfangreichen Portfolio der Si-Photonik kombiniert werden können. Es ist weiterhin wünschenswert, auf komplexe Herstellungsprozesse, die z.B. das Entfernen des Halbleitersubstrates enthalten, komplett zu verzichten.

## Lösung

Diese zuvor genannte objektiv technische Aufgabe wird mit der Vorrichtung gemäß den Merkmalen des unabhängigen Anspruchs 1 gelöst. Hierauf bezogene Unteransprüche geben vorteilhafte Ausgestaltungen bzw. Ausführungsformen wieder. Vorteilhafte Weiterbildungen, welche einzeln oder in beliebiger Kombination realisierbar sind, sind in den abhängigen Ansprüchen dargestellt.

Der Vorteil der Erfindung ist die Lösung des Zielkonfliktes zwischen hoher Modulationsbandbreite, hoher Effizienz und der damit verbundenen geringen Betriebsspannung, und geringen optischen Verlusten. Dieses wird hauptsächlich dadurch erreicht, dass ein dielektrisches Material zwischen den elektrisch leitfähigen Leitungsbereichen und dem elektro-optisch aktivem Wellenleiter eingebracht wird. Das dielektrische Material hat eine hohe elektrische Brechzahl im Bereich der Modulationsfrequenzen, die typischerweise bei 1 -100 GHz liegen, aber eine kleine optische Brechzahl im Bereich der optischen Frequenzen, die typischerweise im Bereich von 200 THz liegen. Durch das idealerweise transparente dielektrische Material wird das Modulationsfeld verstärkt, ohne dass die Lichtführung beeinträchtigt wird.

Silizium-basierte photonische Schaltungen ermöglichen sehr kleine, hochintegrierte Transmittermodule, die in der optischen Kommunikation benötigt werden. Besonders energiesparende und extrem schnelle Modulatoren, wie sie hierin offenbart werden, könnten einen neuen Markt eröffnen. Bisherige konventionelle Silizium-Modulatoren erlauben Datenraten nur bis ca. 50 Gbit/s und benötigen Treiberspannungen von mehreren Volt. Die vorliegende Lösung bzw. eine der Ausführungsformen zumindest gemäß einem der Ansprüche 1 bis 26 mit kapazitiv gekoppelten Silicon-Organic-Hybrid-(SOH-)Modulatoren ermöglicht eine Reduktion der Treiberspannung um bis zu einem Faktor 10, eine vereinfachte Prozessierung sowie eine Erhöhung der Modulationsbandbreite und damit der möglichen Datenrate. Die nächste Generation optischer Datenverbindungen benötigt eine höhere Bandbreite bei geringerem Energieverbrauch als heute möglich ist. Diese können bspw. bei der Abdeckung des Bedarfs an optischen Interconnects in Datenzentren und für Hochleistungsrechner, aber auch bei optischen Metro-Netzwerken eingesetzt werden.

Im Folgenden werden die Begriffe "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Bspw. kann sich der Ausdruck "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, bspw. Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, bspw. bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise (bspw.)" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform" oder durch "in einer weiteren Ausführungsform" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleitete Merkmale mit anderen Merkmalen zu kombinieren, seien es optionale oder nicht-optionale Merkmale, unangetastet bleiben.

## Allgemeine Beschreibung und Ausführungsformen

Der Brechungsindex, auch die Brechzahl oder optische Dichte, ist eine optische Materialeigenschaft. Diese dimensionslose physikalische Größe gibt an, um welchen Faktor die Wellenlänge und die Phasengeschwindigkeit des Lichts kleiner sind als im Vakuum. Hierin werden gemäß dem letzten Absatz die Begriffe "Brechungsindex", "Brechzahl" und "optische Dichte" synonym verwendet. Auch die Begriffe "leiten" und "führen" werden hierin synonym verwendet, d.h. in Bezug auf eine erfindungsgemäße Wellenleiter-Vorrichtung, die derart eingerichtet ist, dass durch eine solche Wellenleiter-Vorrichtung Licht hindurch leitbar ist bzw. hindurch führbar ist.

Zur Unterscheidung der Brechzahlen eines Materials in unterschiedlichen Frequenzbereichen wird im Folgenden die "optische Brechzahl" für die Brechzahl im Frequenzbereich der Lichtwelle verwendet und die "elektrische Brechzahl" für die Brechzahl im Frequenzbereich des elektrischen Modulationssignals.

An der Grenzfläche zweier Medien unterschiedlicher Brechungsindizes wird Licht gebrochen und reflektiert.

Dabei nennt man das Medium mit dem höheren Brechungsindex das optisch dichtere. Dies ist nicht zu verwechseln mit der "optischen Dichte" als Maß für die Extinktion.

Die Bezeichnung "Brechungsindex" kommt vom Begriff Brechung und seinem Auftreten im Snelliusschen Brechungsgesetz. Der Brechungsindex n ist eine dimensionslose physikalische Größe. Er gibt das Verhältnis der Vakuumlichtgeschwindigkeit $c_0$ zur Ausbreitungsgeschwindigkeit $c_M$ des Lichts im Medium an, gemäß der folgenden Formel 1:

$$n = {c_0}/{c_M} \qquad\qquad (1)$$

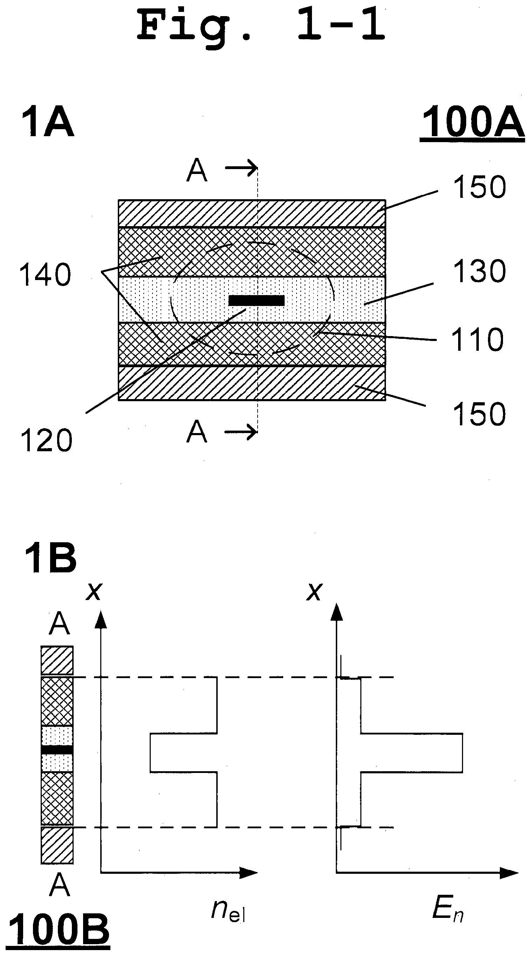

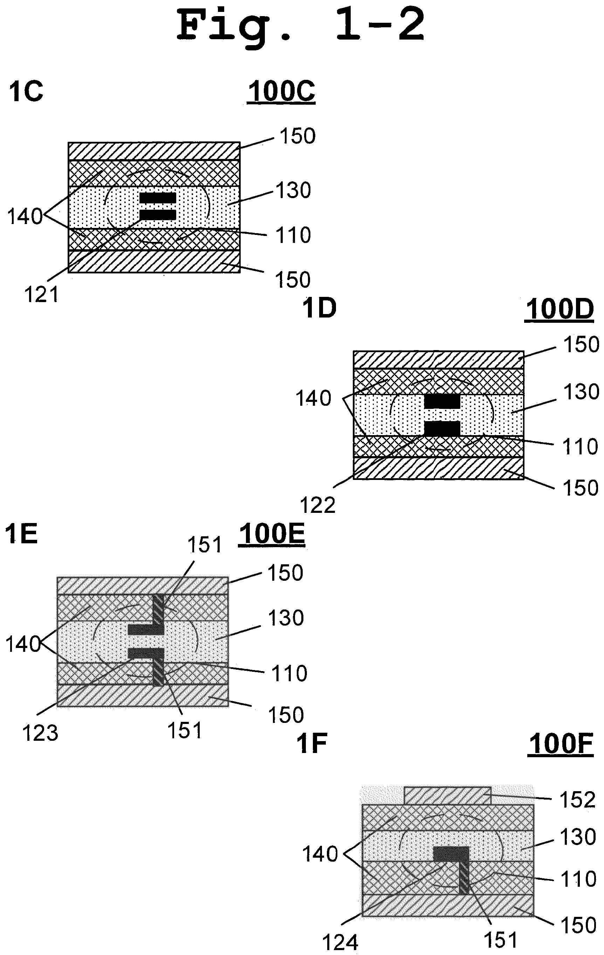

Eine erste Ausführungsform (vgl. Fig. 1-1, Subfigur 1A und die entsprechende detaillierte Beschreibung unten) umfasst einen einteiligen Wellenleiterkern, der mittels zumindest einem Streifenwellenleiter hoher optischer Brechzahl gebildet. Die optische Brechzahl des Kerns bei der Betriebswellenlänge beträgt bevorzugt mehr als 1,8, besonders bevorzugt mehr als 2,5, und ganz besonders bevorzugt mehr als 3,0. Der Wellenleiterkern selbst muss keine elektro-optische Aktivität aufweisen; dementsprechend kommen für seine Herstellung eine große Vielfalt an Materialien in Betracht wie z.B. Halbleiter wie bspw. Silizium oder Verbindungshalbleiter, Dielektrika wie z.B. Metalloxide oder Nitride mit hohem Brechungsindex, oder auch organische Materialien, die einen entsprechend hohen Brechungsindex aufweisen. Der Wellenleiterkern wird zumindest bereichsweise bzw. teilweise im Wechselwirkungsbereich des im Wellenleiter geführten Lichts von einem ersten Mantelbereich umgeben, der zumindest teilweise aus einem elektro-optischen aktiven Material besteht. Zusätzlich wird ein zweiter Mantelbereich im Bereich des Wellenleiterkerns zwischen dem elektro-optischen Material des ersten Mantelbereiches und den elektrisch leitfähigen Leitungsbereichen angeordnet. Der zweite Mantelbereich besteht aus einem dielektrischen Material, das nicht notwendigerweise elektro-optische Eigenschaften aufweisen muss. Maßgeblich für die Funktionalität der Erfindung ist die Tatsache, dass das dielektrische Material des zweiten Mantelbereiches im (elektrischen) Frequenzbereich der angelegten Modulationsspannung eine hohe elektrische Brechzahl $n_{e1}$, die größer ist als die elektrische Brechzahl des ersten Mantelbereiches. Dadurch kommt es zu einer Erhöhung des elektrischen Modulationsfeldes im Bereich des optischen Wellenleiters mit niedriger elektrischer Brechzahl und damit im elektro-optisch aktiven Mantelbereich, was wiederum einer erhöhten Modulationseffizienz des Bauteils führt, siehe unten. Die elektrische Brechzahl des zweiten Mantelbereiches ist bevorzugt größer als 4.5, besonders bevorzugt größer als 8, und ganz besonders bevorzugt größer als 12, während die elektrische Brechzahl des ersten Mantelbereiches bevorzugt geringer ist als 4.5, besonders bevorzugt geringer als 3.5, und ganz besonders bevorzugt geringer als 2.9. Das Verhältnis zwischen den elektrischen Brechungsindizes des ersten und zweiten Mantelbereiches ist bevorzugt größer als 2, besonders bevorzugt größer als 3, und ganz besonders bevorzugt größer als 4. Die elektrische Brechzahl des Wellenleiterkerns sollte so groß wie möglich gewählt werden. Anzumerken ist, dass gerade diese Tatsache die erfindungsgemäße Struktur von der in [2] offenbarten Struktur unterscheidet. Dort liegt die elektro-optische Aktivität im Wellenleiterkern des Wellenleiters vor, und es ist wünschenswert, ein Material mit möglichst kleinem elektrischen Brechungsindex zu verwenden, um die Feldstärke im Wellenleiterkern zu maximieren. Dieses Ziel steht oft im Widerspruch mit der Forderung, dass der Wellenleiterkern einen größeren optischen Brechungsindex als der erste Mantelbereich aufweisen muss, um überhaupt eine optische Lichtführung zu ermöglichen. Mit der vorliegenden, beanspruchten Konfiguration lässt sich dieser Widerspruch auflösen, da die Forderung nach einem Wellenleiterkernmaterial mit hohem Brechungsindex sowohl im elektrischen als auch im optischen Frequenzbereich wesentlich einfacher und von einer wesentlich größeren Vielfalt, von Materialien erfüllbar ist. Die optische Brechzahl des Wellenleiterkernmaterials liegt bevorzugt oberhalb von 2.1, besonders bevorzugt oberhalb von 2.8, und ganz besonders bevorzugt oberhalb von 3.3. Die optischen Brechzahlen müssen so gewählt werden, dass der erste Mantelbereich eine kleinere optische Brechzahl als der Wellenleiterkern aufweist. Die optische Brechzahl des zweiten Mantelbereiches kann kleiner gewählt werden als die optische Brechzahl des Kerns, muss aber nicht - im letzteren Fall muss die Dicke des ersten Mantelbereiches so groß gewählt werden, dass ein Abstrahlen von optischer Leistung in den zweiten Mantelbereich sicher vermieden wird. Zur Erklärung der Funktionsweise der ersten Ausführungsform muss die Kontinuitätsbedingung für die Normalkomponente $D_n = \varepsilon_0 \varepsilon_r E_n$ der dielektrischen Verschiebungsdichte $D_n$ des Modulationsfeldes beim Übergang von einem ersten Bereich mit relativer Dielektrizitätszahl $\varepsilon_{r,1}$ an der Grenzfläche zu einem zweiten Bereich mit relative Dielektrizitätszahl $\varepsilon_{r,2}$ beachtet werden. Brechzahl n und relative Dielektrizitätszahl $\varepsilon_r$ sind für den Fall unmagnetischer Materialien verknüpft, über $n^2 = \varepsilon_r$, gemäß folgender Formeln 2 und 3:

$$D_n = n_{el,1}^2 E_{n,1} = n_{el,2}^2 E_{n,2} = \mathrm{const.} \qquad\qquad (2),$$

und

$$\frac{E_{n,1}}{E_{n,2}} = \frac{n_{el,2}^2}{n_{el,1}^2} \qquad\qquad (3).$$

Im Falle von kleinen elektrischen Brechzahlen $n_{el}$ im ersten Mantelbereich und hohen elektrischen Brechzahlen $n_{el} \gg n_{el}$ im zweiten Mantelbereich ist die Modulationsfeldstärke $E_n$ im elektro-optisch aktiven ersten Mantelbereich bedeutend größer als die Feldstärke $E_n$ im zweiten Mantelbereich. In der unten detailliert beschriebenen Figur 1-1 in Subfigur 1B sind schematisch der Verlauf der elektrischen Brechzahl und der Verlauf des elektrischen Modulationsfeldes im Zentrum des Wellenleiter-Querschnitts dargestellt. Eine Modulationsspannung, die über die elektrisch leitfähigen Leitungsbereiche angelegt wird, fällt im Wesentlichen über dem ersten Mantelbereich ab, wenn die Wellenleitergeometrie und die elektrischen Brechzahlen der Mantel- und Wellenleiterkernmaterialien geeignet gewählt werden. Das Material des Wellenleiterkerns hat dabei bevorzugt eine elektrische Brechzahl größer oder gleich der elektrischen Brechzahl des ersten Mantelbereiches.

Bei gegebener Modulationsspannung konzentriert sich also für die erste Ausführungsform das elektrische Modulationsfeld auf den ersten Mantelbereich mit niedriger elektrischer Brechzahl, was zu einer erhöhten Wechselwirkung des Modulationsfelds mit der Lichtwelle im nichtlinearen elektro-optischen Mantelmaterial führt, wenn erfindungsgemäß ein dielektrisches Mantelmaterial im zweiten Mantelbereich verwendet wird, dessen elektrische Brechzahl über der des elektro-optischen Materials im ersten Mantelbereich liegt. Als Materialien mit hoher elektrischen Brechzahl im Frequenzbereich bis zu einigen Hundert Gigahertz kommen bspw. Oxide, insbesondere Oxide von Übergangsmetallen (bspw. ZrO2, $HfO_2$, $La_2O_3$, $Ta_2O_5$, $Y_2O_3$, $TiO_2$, ...), Titanate (bspw. BaTiO3, $SrTiO_3$, $BaSrTiO_3$, ...), Silikate (bspw. $HfSiO_4$, $ZrSiO_4$, ...), oder Kombinationen davon in Betracht. Aber auch andere dielektrische Materialien können verwendet werden, bspw. basierend auf organischen Verbindungen. Optional können bei der beanspruchten Struktur auch im Wellenleiterkern Materialien mit elektro-optischen Effekten verwendet werden, die die vom ersten Mantelbereich herrührenden elektro-optischen Wechselwirkungen verstärken.

In einer weiteren Ausführungsform (vgl. Fig. 1-2, Subfigur 1C und die entsprechende detaillierte Beschreibung unten) der erfindungsgemäßen Struktur besteht der Wellenleiterkern aus zwei Teilen, die durch einen Schlitz voneinander getrennt sind (optischer Schlitzwellenleiter). Der Schlitz ist mit dem zum ersten Mantelbereich gehörenden elektro-optischen Material gefüllt, dessen optische Brechzahl kleiner ist als die des zweigeteilten Kerns (Schlitzwellenleiter). Die Differenz der optischen Brechzahlen des Kerns und des ersten Mantelbereiches ist bevorzugt größer oder gleich 0.5, besonders bevorzugt größer oder gleich 1, und ganz besonders bevorzugt größer oder gleich 1.5. In dieser Geometrie wird die unstetige Feldüberhöhung der Normalkomponente des elektrischen Lichtfeldes $E_n$ an den Seitenwänden des Schlitzes und an den zu den elektrisch leitfähigen Leitungsbereichen hin orientierten Grenzflächen des Kerns ausgenutzt, um einen großen Teil des elektrischen Feldes der optischen Welle im Schlitz und damit im Material des ersten Mantelbereiches zu konzentrieren, so dass auch in dieser Ausführungsform die Kontinuitätsgleichungen 4 und 5 erfüllt sind, die hierbei lauten:

$$D_n = n_{opt,1}^2 E_{n,1} = n_{opt,2}^2 E_{n,2} = \mathrm{const.} \qquad\qquad (4),$$

und

$$\frac{E_{n,1}}{E_{n,2}} = \frac{n_{opt,2}^2}{n_{opt,1}^2} \qquad\qquad (5).$$

Die Normalkomponente der elektrischen Feldstärke $E_n$ des optischen Felds wird besonders groß, wenn bevorzugt ein dominant senkrecht zur Grenzfläche, im vorliegenden Fall also vertikal polarisiertes optisches Feld gewählt wird. Als Maß für die Wechselwirkung des im Wellenleiter geführten Lichtes mit dem Mantelmaterial wird üblicherweise der Feldinteraktionsfaktor $\Gamma$ herangezogen, hier beschrieben unter der Annahme, dass das optische Feld in x-Richtung polarisiert ist (vgl. beispielsweise vertikale Polarisation in Fig. 1-2, Subfigur 1C), wobei der Feldinteraktionsfaktor $\Gamma$ durch die Gleichung 6 definiert ist, welche lautet:

$$\Gamma \; = \; \frac{n_{opt}}{Z_0} \; \frac{\int_A |E_x|^2 \, dA}{2P(\omega_c)} \qquad\qquad (6).$$

Der Feldinteraktionsfaktor $\Gamma$ beschreibt den Anteil des optischen Feldes welcher im elektro-optischen Mantelmaterial mit dem Modulationsfeld wechselwirkt unter der Annahme, dass das entsprechende Tensorelement der nichtlinearen Suszeptibilität ungleich null ist. $E_x$ ist dabei die x-Komponente des optischen Feldes, P ist die Leistung des optischen Feldes, $n_{opt}$ der Brechungsindex des elektrooptischen Materials, $Z_0$ der Wellenwiderstand im Vakuum und A die Querschnittsfläche, in welcher das optische Feld mit dem Modulationsfeld im elektro-optischen Material wechselwirkt.

Auch bei dieser Struktur lässt sich das elektrische Modulationsfeld im den zweiteiligen Wellenleiterkern direkt umgebenden ersten Mantelbereich erfindungsgemäß dadurch erhöhen, dass ein zweiter Mantelbereich aus dielektrischem Material mit hoher elektrischer Brechzahl im Bereich des Wellenleiterkerns zwischen den elektrisch leitfähigen Leitungsbereichen und dem elektro-optischen Material des ersten Mantelbereiches angeordnet ist. Die Kombination von optischer und elektrischer Feldüberhöhung führt zu einer besonders starken Wechselwirkung des elektrischen und des optischen Feldes im elektro-optischen Material im Schlitz.

Eine weitere Ausführungsform (vgl. Fig. 1-2, Subfigur 1D und die entsprechende detaillierte Beschreibung unten) der erfindungsgemäßen Struktur schließt bspw. das dielektrische Material mit hoher elektrischer Brechzahl des zweiten Mantelbereiches direkt an den zweiteiligen Wellenleiterkern eines optischen Schlitzwellenleiters an. Auch hier führt die optische und elektrische Feldüberhöhung am Grenzflächen zwischen Bereichen mit hohem und geringem Brechungsindex zu einer starken Wechselwirkung der Felder mit dem zum ersten Mantelbereich gehörenden elektro-optischen Material im Schlitz.

Bei einer weiteren Ausführungsform (vgl. Fig. 1-2, Subfigur 1E und die entsprechende detaillierte Beschreibung unten) einer erfindungsgemäßen Struktur verbinden optisch transparente Leitungsbereiche die Einzelteile eines mehrteiligen Wellenleiterkerns mit elektrisch leitfähigen Leitungsbereichen. Das elektro-optische Material des ersten Mantelbereiches füllt den Schlitz zwischen den Teilen des Wellenleiterkerns. Der zweite Mantelbereich aus dielektrischem Material hoher elektrischer Brechzahl ist zwischen den elektrisch leitfähigen Leitungsbereichen und dem ersten Mantelbereich angeordnet. Analog zur zuvor oben beschriebenen Ausführungsform kann der zweite Mantelbereich auch direkt an den Wellenleiterkern anschließen. Bei moderater Leitfähigkeit der transparenten Leitungsbereiche wird mit dieser Struktur eine hohe Feldstärke für niedrige Frequenzen des elektrischen Modulationsfeldes im Schlitz erreicht (Tiefpasscharakteristik). Im Zusammenspiel mit der Feldüberhöhung des elektrischen Feldes durch das Material mit hoher elektrischer Brechzahl im zweiten Mantelbereich, welche auch für sehr hohe Frequenzen wirksam ist, kann ein optimaler Frequenzgang erreicht werden. Weiterhin können diese transparenten Leitungsbereiche auch mit niedriger Leitfähigkeit für genutzt werden, falls währen der Fabrikation ein Polungsprozess des elektro-optischen Materials erforderlich ist. Unter dem Polen elektro-optischer Materialien versteht man das Ausrichten von Molekülen oder Domänen eines elektro-optischen Materials, so dass sich ein makroskopischer elektro-optischer Effekt in dem gepolten Materialvolumen ausbildet. Dies kann in elektro-optischen Materialien, deren Moleküle bspw. ein Dipolmoment besitzen, unter anderem dadurch erreicht werden, indem über eine Gleichspannung ein starkes elektrisches Feld erzeugt wird, an deren Feldlinien sich die Moleküle ausrichten. Über die transparenten Leitungsbereiche lässt sich während des Polungsprozesses eine Gleichspannung anlegen, so dass ein starkes elektrisches Feld sich im Schlitz ausbildet und damit eine Polung ermöglicht.

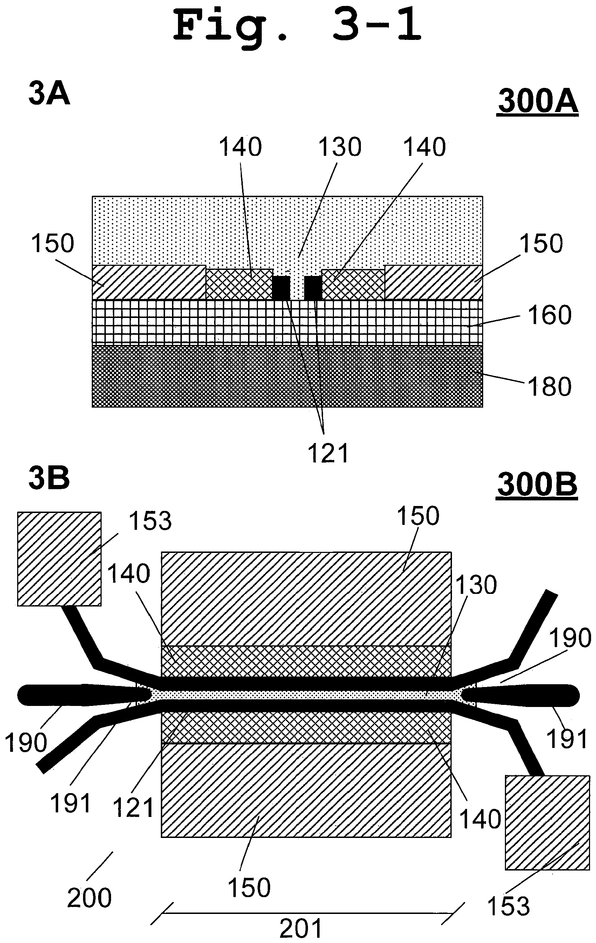

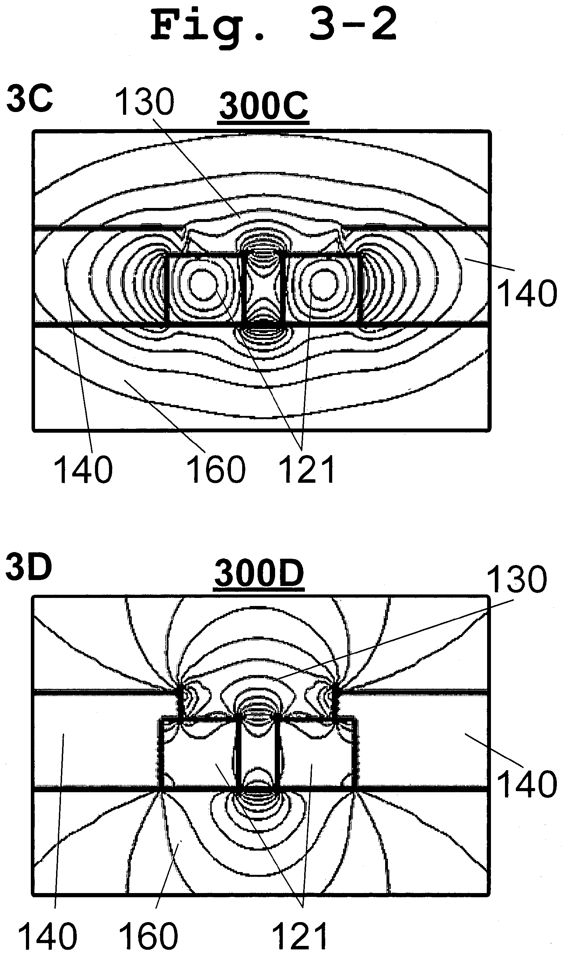

Da für eine Gleichspannung nur sehr geringe Leitfähigkeiten benötigt werden, lässt sich eine Struktur zum Polen bspw. auch mit Bauteilen aus den zuvor beschriebenen Ausführungsformen erreichen. Hierbei ist der Wellenleiterkern gering leitfähig, was sich bspw. in Silizium durch eine leichte Dotierung erreichen lässt. Außerhalb der Modulator-Struktur wird jeweils ein Teil des Wellenleiterkerns elektrisch mit einer dezidierte Polungselektrode verbunden, siehe hierzu Fig. 3-1, Subfigur 3B und deren Beschreibung unten. Über diese Polungselektroden und die gering leitfähigen Teile des Wellenleiterkerns lässt sich nun während der Fabrikation eine Gleichspannung anlegen, so dass das elektro-optische Material im Schlitz gepolt werden kann.

Bei einer weiteren Ausführungsform (vgl. Fig. 1-2, Subfigur 1F und die entsprechende detaillierte Beschreibung unten) einer erfindungsgemäßen Struktur verbindet ein transparenter Leitungsbereich verbindet einen Teil des Wellenleiterkerns mit einem elektrisch leitfähigen Leitungsbereich. Der erste Mantelbereich besteht aus elektro-optischem Material. Dielektrisches Material mit hoher elektrischer Brechzahl wird im zweiten Mantelbereich zwischen dem elektro-optischem Material und den elektrisch leitfähigen Leitungsbereichen platziert, so dass das elektrische Modulationsfeld im elektro-optischen Material des ersten Mantelbereiches bei gegebener angelegter Modulationsspannung erhöht wird. Die Wirkung ist hierbei äquivalent zu der in Subfigur 1E abgebildeten Struktur.

Das Konzept ein- oder mehrteiliger Wellenleiterkerne in Kombination mit einem Mantel aus teils nichtlinearen elektro-optischen, teils linearen Materialien mit hoher elektrischen Brechzahl lässt sich auf weitere Strukturen verallgemeinern. Für eine hohe Modulationseffizienz ist eine möglichst große Wechselwirkung des optischen Feldes mit dem elektrischen Modulationsfeld erforderlich. Diese Wechselwirkung im elektro-optischen Material wird durch eine Überhöhung von optischem Feld und elektrischem Modulationsfeld gesteigert. Dazu wird, wie in den vorstehenden Abschnitten beschrieben, die Kontinuitätsbedingung für die Normalkomponente der dielektrischen Verschiebungsdichte $D_n$ an dielektrischen Grenzflächen ausgenutzt.

Neben der Ausführung des Wellenleiterkerns als Streifen- oder Schlitzwellenleiter kann dieser auch durch periodische oder nicht-periodische Strukturen mit Strukturdetails wesentlich kleiner als die optische Wellenlänge gebildet werden, beispielsweise mit einem Wellenleiterkern, der aus Blöcken von Materialien hoher Brechzahl besteht, die unverbunden entlang der Ausbreitungsrichtung des Lichtes angeordnet sind (sog. "sub-wavelength grating waveguides"). Diese Strukturen können sowohl als Streifenwellenleiter als auch als Schlitzwellenleiter ausgebildet sein und ermöglichen eine stärkere Wechselwirkung der optischen Welle mit dem elektro-optischen Mantelmaterial. Weiterhin können der Wellenleiterkern oder umgebende Bereiche entlang der Ausbreitungsrichtung so strukturiert sein, dass die Ausbreitungseigenschaften des optischen Modus vorteilhaft beeinflusst werden. Dazu zählen bspw. sog. "Slow-Light-Strukturen", die die Gruppengeschwindigkeit des geführten Lichtes herabsetzen und damit die Interaktionszeit des optischen Feldes mit dem elektro-optischen Material erhöhen. Dies führt zu einer hohen elektro-optischen Wechselwirkung auf einer kurzen Strecke. Slow-Light-Strukturen können bspw. durch photonische Kristalle realisiert werden. Ebenso können Strukturen realisiert werden, die die Gruppengeschwindigkeit des optischen Feldes dem der elektrischen Modulationswelle anpassen.

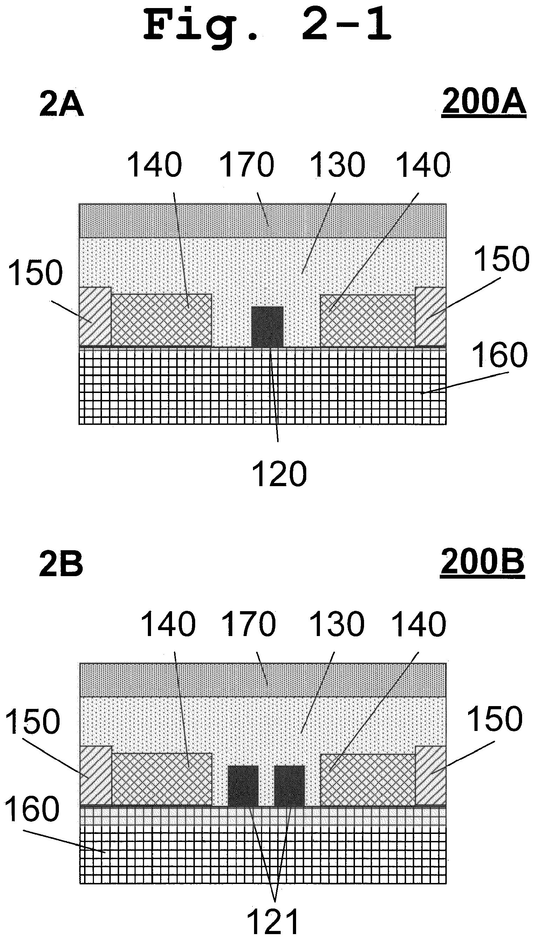

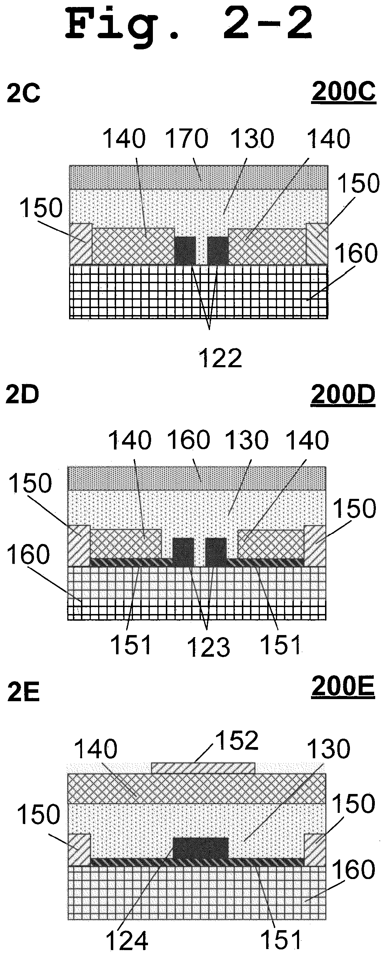

Wie vorhergehend erläutert, ist es vorteilhaft zur Fabrikation der elektro-optischen Modulatoren auf kommerziell verfügbare und skalierbare Fertigungsprozesse zurückzugreifen. Dafür ist es besonders vorteilhaft, anstelle einer vertikalen Strukturierung des Bauteils, eine laterale Strukturierung zu verwenden, bei der zunächst der optische Wellenleiterkern, die elektrisch leitfähigen Leitungsbereiche und die zum zweiten Bereich des Mantels gehörenden dielektrischen Strukturen in einer planaren Anordnung erzeugt werden, auf die dann das elektro-optisch aktive Material mit vergleichsweise geringen Anforderungen bzgl. Schichtdicke, Schichtqualität und lateralen Abmessungen aufgebracht werden kann. Fig. 2-1 und Fig. 2-2 zeigt derartige laterale Anordnungen von Strukturen, analog zu den in Fig. 1-1 und Fig. 1-2 dargestelltem, allgemeinem Bauteilkonzept. Als Substrat und gleichzeitig als unterer Wellenleitermantel fungiert ein optisch transparentes Material. Dabei kann es sich beispielsweise um ein Oxid wie $SiO_2$, $Al_2O_3$, ... handeln. Bei der Herstellung können zunächst der Wellenleiterkern bzw. dessen Bestandteile, der zweite Mantelbereich aus dielektrischem Material mit hoher elektrischer Brechzahl, die transparenten Leitungsbereiche, und die elektrisch leitfähigen Leitungsbereiche durch konventionelle laterale Strukturierungsverfahren nebeneinander auf dem Substrat abgeschieden werden, bevor der erste Mantelbereich aus zumindest teilweise elektro-optischem Material und ggf. weitere Deckschichten aufgebracht werden. Bei diesen Anordnungen ist es insbesondere nicht notwendig, weitere Schichten mit hoher elektrischer oder optischer Qualität und womöglich einer kristallinen Kristallstruktur auf dem elektro-optischen Material des ersten Mantelbereiches abzuscheiden. Dies vereinfacht die Herstellung drastisch und erweitert gleichzeigt das Spektrum der einsetzbaren elektro-optischen Materialien. Damit wird es insbesondere möglich, beispielsweise organische Materialien des ersten Mantelbereiches aus der Flüssigphase in das vorstrukturierte Bauelement einzubringen. Eine Entfernung des Substrates ist bei diesen Strukturen nicht notwendig.

In einer ersten Ausführungsform weist ein Wellenleiter-Bauelement auf: einen Wellenleiter, der zumindest teilweise gegenüber Licht transparent bzw. transluzent ist und derart eingerichtet ist, dass Licht zumindest teilweise durch den Wellenleiter hindurch leitbar ist bzw. durch diesen hindurch führbar ist, aufweisend: einen Wellenleiterkern, wobei der Wellenleiterkern aus einem Element oder aus mehreren, räumlich voneinander getrennten Elementen gebildet ist, die zumindest ein Wellenleiterkernmaterial aufweisen oder daraus gebildet sind; einen ersten Mantelbereich, der mindestens ein elektro-optisches Material aufweist oder daraus gebildet ist, wobei der erste Mantelbereich zumindest teilweiseweise mit im Wellenleiter geleitetem Licht in Wechselwirkung steht, und wobei der erste Mantelbereich zumindest teilweise um das eine Element oder die mehreren Elemente des Wellenleiterkerns angeordnet ist; und einem zweiten Mantelbereich, der mindestens ein dielektrisches Material aufweist oder daraus gebildet ist, wobei der zweite Mantelbereich zumindest teilweise um den ersten Mantelbereich und/oder den Wellenleiterkern angeordnet ist; mindestens -zwei Leitungsbereiche, die zumindest teilweise elektrisch leitfähig sind, wobei zwischen den Leitungsbereichen ein elektrische Modulationssignal angelegt ist, wobei die Leitungsbereiche zumindest teilweise derart entlang des optischen Wellenleiters angeordnet sind, dass sich die Leitungsbereiche gegenüberliegen und der Wellenleiter zumindest teilweise zwischen den Leitungsbereichen angeordnet ist; dadurch gekennzeichnet, dass das Modulationssignal, ein elektrisches Feld bildet, dessen Feldlinien zumindest teilweise sowohl den zweiten Mantelbereich als auch den ersten Mantelbereich durchdringen, und wobei das dielektrische Material des zweiten Mantelbereiches im Frequenzbereich des Modulationssignals eine höhere elektrische Brechzahl als das elektro-optische Material des ersten Mantelbereichs aufweist.

Es wird angemerkt, dass unter dem Merkmal: "und wobei der erste Mantelbereich zumindest teilweise um das eine Element oder die mehreren Elemente des Wellenleiterkerns angeordnet ist" hierin zu verstehen ist, dass der erste Mantelbereich derart um das eine Element oder die mehreren Element des Wellenleiterkerns angeordnet ist, dass der Mantelbereich und das Element oder die Elemente zumindest teilweise in einem direkten oder indirekten Kontakt zueinander stehen. Mit anderen Worten ist damit hierin gemeint, dass entweder der erste Mantelbereich und das Element oder die Elemente des Wellenleiterkerns zumindest teilweise direkt aneinander angrenzen oder dass zumindest teilweise zwischen dem ersten Mantelbereich und dem Element oder den Elementen des Wellenleiterkerns noch zusätzliche Elemente oder Materialien angeordnet sein können. In einer weiteren Ausführungsform liegt die elektrische Brechzahl des dielektrischen Materials im zweiten Mantelbereich bei einer Frequenz des Modulationssignals von 10 GHz um mehr als einen Faktor 1,8 über der elektrischen Brechzahl des elektro-optische Materials im ersten Mantelbereich. Durch die Differenz der elektrischen Brechzahl kommt es zu einer Feldüberhöhung und das elektrische Feld des Modulationssignals konzentriert sich auf den ers‚ten Mantelbereich mit niedriger elektrischer Brechzahl, was zu einer erhöhten Wechselwirkung des Modulationsfelds mit der Lichtwelle im nichtlinearen elektro-optischen Mantelmaterial führt und dadurch zu einer erhöhten Effizienz des Bauteils.

In einer weiteren Ausführungsform weist das dielektrische Material des zweiten Mantelbereiches eine elektrische Brechzahl von mindestens 3.5, 4.5, 8, 10, 15, 20 oder 25 in einem Frequenzbereich eines Modulationssignals zwischen 5 GHz und 40 GHz auf bzw. insbesondere mit einer relativen Dielektrizitätszahl $\varepsilon_r$ in einem Bereich von ungefähr 80 bis ungefähr 250. Je höher die elektrische Brechzahl im zweiten Mantelmaterial gewählt wird, desto größer die Feldüberhöhung im elektro-optischen Material, wenn dessen Brechzahl konstant gehalten wird. Dies führt wiederum zu einer erhöhten Effizienz des Bauteils.

In einer weiteren Ausführungsform ist die elektrische Brechzahl des Wellenleiterkerns höher als die elektrische Brechzahl des ersten Mantelbereiches. Dadurch kommt es zu einer Felderhöhung des Modulationsfeldes nicht nur an der Grenzfläche zwischen ersten und zweiten Mantelbereich, sondern auch an der Grenzfläche zwischen erstem Mantelbereich und Wellenleiterkern. Infolgedessen wird eine weitere Steigerung der Feldstärke im elektro-optischen Material des ersten Mantelbereichs erreicht welche die Effizienz des Bauteils steigert.

In einer weiteren Ausführungsform beträgt die elektrische Brechzahl des Wellenleiterkerns mindestens 3. Da oft die elektrische Brechzahl elektro-optischer Materialien geringer als 3 ist, ist es wünschenswert einen Wellenleiterkern zu nutzen, dessen elektrische Brechzahl mindestens 3 oder größer ist, um eine stärkere Feldüberhöhung des Modulationsfeldes im ersten Mantelbereich zu nutzen.

In einer weiteren Ausführungsform beträgt die elektrische Brechzahl des elektro-optischen Materials im ersten Mantelbereich (130) höchstens 9. Je kleiner die elektrische Brechzahl des ersten Mantelbereichs gewählt werden kann, desto stärker ist die Feldüberhöhung des Modulationsfeldes im ersten Mantelbereich gemäß Gleichung 2. Dadurch wird die Effizienz des Bauteils gesteigert. Weiterhin kann durch die Beschränkung auf Materialien mit einer elektrischen Brechzahl kleiner 9 im ersten Mantelbereich eine größere Anzahl an Materialien für den zweiten Mantelbereich nutzen, welche die Bedingung erfüllen, dass die elektrische Brechzahl größer als im ersten Mantelbereich ist.

In einer weiteren Ausführungsform weist das Wellenleiter-Bauelement eine laterale Strukturierung auf, bei der zunächst der Wellenleiterkern, die Leitungsbereiche und zumindest das dielektrische Material des zweiten Mantelbereiches in einer planaren Anordnung gebildet sind, auf welche dann elektro-optisch aktives Material aufgebracht wird. Dies vereinfacht die Fertigung wesentlich, insbesondere können beispielsweise organische Materialien des ersten Mantelbereiches aus der Flüssigphase in das vorstrukturierte Bauelement eingebracht werden und erweitert gleichzeigt das Spektrum der einsetzbaren elektro-optischen Materialien, insbesondere auch deshalb, weil die elektro-optisch aktive Schicht nicht als Grundlage für eine weitere Abscheidung von Mantel- und Elektrodenschichten mit hoher elektrischer oder optischer Qualität dienen muss.

In einer weiteren Ausführungsform sind der Wellenleiterkern, der erste Mantelbereich, der zweite Mantelbereich und die Leitungsbereiche zumindest teilweise nebeneinander auf einem gemeinsamen Substrat angeordnet. Diese Anordnung vereinfacht die Fabrikation deutlich, da auf vorhandene industrielle Technologien und Fertigungsprozesse wie beispielsweise die "Silicon-on-Insulator" Plattform zurückgegriffen werden kann. Weiterhin ist es dadurch nicht notwendig, weitere Schichten mit hoher elektrischer oder optischer Qualität auf dem elektro-optischen Material des ersten Mantelbereiches abzuscheiden, was die Herstellung weiter vereinfacht.

In einer weiteren Ausführungsform weist der Wellenleiterkern zumindest teilweise elektro-optische Eigenschaften (Abk.: EO-Eigenschaften) auf. Ein Wellenleiterkern, welcher zumindest teilweise elektro-optisch aktiv ist erhöht die Effizienz des Modulators dadurch, dass nicht nur im ersten Mantelbereich, sondern zusätzlich auch im Wellenleiterkern das elektrische Modulationssignal und die Lichtwelle in einem elektro-optisch aktiven Material miteinander wechselwirken können.

In einer weiteren Ausführungsform ist der Wellenleiterkern als Schlitzwellenleiter gebildet. Die Ausführung des Kerns als Schlitzwellenleiter führt zu einer Feldüberhöhung des elektrischen Feldes der Lichtwelle im ersten Mantelbereich, innerhalb des Schlitzes. Da auch das elektrische Feld des Modulationssignals im ersten Mantelbereich erhöht ist führt diese Anordnung zu einer weiteren Erhöhung der Modulationseffizienz.

In einer weiteren Ausführungsform beträgt die Differenz zwischen der optischen Brechzahl des Wellenleiterkernmaterials des Schlitzwellenleiter und der optischen Brechzahl des ersten Mantelmaterials mehr als 0,5 oder mehr als 1,0 oder mehr als 1,5. Je größer die Differenz zwischen dem hochbrechenden Wellenleiterkernmaterial des Schlitzwellenleiters und dem ersten Mantelmaterial mit der niedrigeren optischen Brechzahl ist, desto stärker ist die Feldüberhöhung des elektrischen Feldes der Lichtwelle im elektro-optisch aktiven ersten Mantelbereich. Dadurch lassen sich besonders effiziente Bauteile realisieren.

In einer weiteren Ausführungsform grenzt der zweite Mantelbereich zumindest teilweise direkt an die elektrisch leitfähigen'Leitungsbereiche an. D.h. mit anderen Worten, der zweite Mantelbereich steht zumindest teilweise in einem direkten Kontakt mit den elektrischen Bereichen. Dadurch, dass der zweite Mantelbereich, welcher eine hohe elektrische Brechzahl aufweist, direkt an den Leitungsbereich anschließt, wird vermieden, dass ein' Teil des elektrischen Modulationssignals den Bereich zwischen Leitungsbereich und zweitem Mantelbereich ausfüllt, welcher nicht vom Feld der Lichtwelle erfüllt ist und daher auch nicht zur Modulation beitragen kann. Dadurch wird eine Reduktion der Modulationseffizienz vermieden.

In einer weiteren Ausführungsform grenzt der zweite Mantelbereich zumindest teilweise direkt an den ersten Mantelbereich an. D.h. mit anderen Worten, der zweite Mantelbereich steht zumindest teilweise in einem direkten Kontakt mit dem ersten Mantelbereich. Da der erste Mantelbereich zumindest teilweise elektro-optisch aktiv ist, ist es wünschenswert dass das elektrische Feld des Modulationssignals hauptsächlich in diesem Bereich konzentriert ist. Durch die Vermeidung eines weiteren Bereichs zwischen ersten und zweiten Mantelbereich kann die Feldüberhöhung durch den Unterschied in der elektrischen Brechzahl optimal ausgenutzt werden.

In einer weiteren Ausführungsform grenzt der zweite Mantelbereich zumindest teilweise direkt an den Wellenleiterkern an. D.h. mit anderen Worten, dass der zweite Mantelbereich in einem direkten Kontakt mit dem Wellenleiterkern bzw. dessen Elementen steht. Insbesondere wenn ein Schlitzwellenleiter verwendet wird, kann dadurch die elektrische Feldstärke des Modulationssignals innerhalb des Schlitzes maximiert werden. Im Schlitz, welcher durch das elektrooptisch aktive Material des ersten Mantelbereichs gefüllt ist, ist typischerweise auch die Feldstärke der Lichtwelle am größten. Die Konzentration des Feldes der Lichtwelle und das des Modulationssignals im Schlitz führen zu einer hohen Interaktion im elektro-optisch aktiven Material und damit zu einer hohen Effizienz des Bauteils.

In einer weiteren Ausführungsform ist der Wellenleiterkern zumindest teilweise über einen weiteren, moderat leitfähigen und transparenten, Leitungsbereich mit dem Leitungsbereich elektrisch leitfähig verbunden. Insbesondere für Schlitzwellenleiter kann mit dieser Struktur eine hohe Feldstärke für niedrige Frequenzen des elektrischen Modulationsfeldes im Schlitz erreicht werden. Im Zusammenspiel mit der Feldüberhöhung des elektrischen Feldes durch das Material mit hoher elektrischer Brechzahl im zweiten Mantelbereich kann ein optimaler Frequenzgang erreicht werden. Weiterhin können diese transparenten Leitungsbereiche auch mit niedriger Leitfähigkeit für genutzt werden, falls während der Fabrikation ein Polungsprozess des elektro-optischen Materials erforderlich ist.

In einer weiteren Ausführungsform weist das Wellenleiter-Bauelement zusätzlich mindestens einen elektrisch leitfähigen Leitungsbereich bzw. Kontakt auf, der zumindest teilweise mit dem Wellenleiterkern elektrisch leitfähig verbunden ist. Diese Ausführung kann dazu genutzt werden um eine Gleichspannung an den Wellenleiterkern, der gering leitfähig sein kann, anzulegen, falls während der Fabrikation ein Polungsprozess des elektro-optischen Materials erforderlich ist.

In einer weiteren Ausführungsform beträgt die Konzentration an freien Ladungsträger zumindest im Wellenleiterkern weniger als $10^{19}$ cm$^{-3}$ oder weniger als $10^{18}$ cm$^{-3}$ oder weniger als $10^{17}$ cm$^{-3}$. Freie Ladungsträger fuhren zu optischen Verlusten im Wellenleiter. Je geringer die Ladungsträgerkonzentration gewählt wird, desto geringer sind die Verluste im Wellenleiter und damit im gesamten Bauteil.

In einer weiteren Ausführungsform ist das dielektrische Material im zweiten Mantelbereich transparent oder transluzent gegenüber Licht und derart eingerichtet, dass Licht zumindest teilweise durch den zweiten Mantelbereich hindurch leitbar ist bzw. durch diesen führbar ist. Transparente Materialien als zweiten Mantelbereich erlauben diesen nah an den Wellenleiterkern zu bringen ohne die optischen Verluste im Wellenleiter zu erhöhen. Je dichter der zweite Mantelbereich an den Wellenleiter gebracht werden kann, desto stärker ist das Modulationsfeld in der direkten Umgebung des Wellenleiterkerns und desto höher ist die Effizienz des Bauteils. In einer weiteren Ausführungsform weist das dielektrische Material des zweiten Mantelbereichs zumindest teilweise ein organisches Material auf oder ist daraus gebildet. Organische Materialien können die Fabrikation stark vereinfachen, da sie sich beispielsweise aus der Flüssigphase abscheiden lassen und keine komplizierten Schichten gewachsen werden müssen. Weiterhin können organische Materialien oft durch entsprechendes Moleküldesign auf ihren Einsatzzweck optimal angepasst werden. So ist es insbesondere möglich, organische Materialien im Hinblick auf einen möglichst hohen elektro-optischen Koeffizienten $r_{33}$ zu optimieren.

In einer weiteren Ausführungsform weist der zweite Mantelbereich zumindest ein Material aus der Gruppe von dielektrischen Materialien auf bzw. ist daraus gebildet, wobei die Gruppe von dielektrischen Materialien beispielsweise die folgenden Verbindungen beinhaltet: $Al_2O_3$, ZrO2, $ZrSiO_4$, $HfO_2$, $HfSiO_4$, $Pr_2O_3$, $Gd_2O_3$, $Y_2O_3$, $La_2O_3$, $Ta_2O_5$, $TiO_2$, BaTiO3, $SrTiO_3$, oder $BaSrTiO_3$ oder Kombinationen davon. Diese Materialien bzw. Materialklassen weisen typischerweise eine hohe elektrische Brechzahl auf. Dadurch wird sichergestellt, dass eine große Differenz der elektrischen Brechzahl zwischen dem zweiten und ersten Mantelmaterial vorliegt, welche die Feldüberhöhung im elektro-optisch aktiven Material ermöglicht.

In einer weiteren Ausführungsform weist der Wellenleiter zumindest teilweise Silizium auf oder ist daraus gebildet. Silizium hat als Wellenleiterkern vorteilhafte Eigenschaften. Es ist transparent für Licht im Infrarotbereich, was die optischen Verluste gering hält, und es hat eine hohe optische Brechzahl und eine relativ hohe elektrischen Brechzahl. Die hohe Brechzahl führt zu einer Feldüberhöhung der Lichtwelle und des Modulationssignals im elektro-optisch aktiven ersten Mantelbereich und damit zu einer hohen Effizienz des Bauteils. Weiterhin vereinfacht Silizium die Fabrikation. Die Strukturierung von Silizium, insbesondere auf planaren Substraten, ist mit standardisierten industriellen Prozessen, beispielsweise aus dem Bereich der CMOS-basierten Mikroelektronik einfach möglich.

In einer weiteren Ausführungsform weist das Wellenleiter-Bauelement zumindest ein Substrat auf, welches zumindest teilweise $SiO_2$ aufweist oder daraus gebildet ist. $SiO_2$ als Substratmaterial ist transparent, was die optischen Verluste im Wellenleiter verringert. Weiterhin erlaubt es eine einfache Fertigung insbesondere für eine planare Anordnung. $SiO_2$ ist insbesondere ein wichtiger Bestandteil sog. Silicon-on-Insulator-(Abk.: SOI-)Wafer, die sich als wichtiges Substrat für integriert-optische Schaltungen etabliert haben. Hier stehen bereits vorhandene industrielle Fertigungsprozesse zur Verfügung.

In einer weiteren Ausführungsform weist das elektro-optische Material des ersten Mantelbereichs zumindest teilweise ein organisches Material auf oder ist daraus gebildet.' Organische elektro-optische Materialien erreichen oft eine sehr hohe Nichtlinearität zweiter Ordnung, welche eine hohe Bauteileffizienz ermöglicht. Weiterhin erlauben organische Materialien eine einfache Prozessierung, beispielsweise das Abscheiden aus der Flüssigphase, was die Fertigung weiter vereinfacht.

In einer weiteren Ausführungsform weist das elektro-optischen Material des ersten Mantelbereichs zumindest teilweise ein ferroelektrisches Material auf oder ist daraus gebildet. Ferroelektrische Materialien weisen oft eine hohe Nichtlinearität zweiter Ordnung auf die in dieser Struktur für ein effizientes Bauteil genutzt werden kann.

In einer weiteren Ausführungsform weist der Wellenleiterkern Elemente mit einer maximalen Abmessung unterhalb der Materialwellenlänge oder unterhalb der halben Materialwellenlänge des Wellenleiterkernmaterials auf. Die Nanostrukturierung des Wellenleiterkerns, beispielsweise in Form sog. Sub-Wavelength-Grating-Wellenleiter, ermöglicht eine stärkere Wechselwirkung der optischen Welle mit dem elektro-optischen Mantelmaterial. Weiterhin kann durch ein entsprechendes Design der Strukturen die Gruppengeschwindigkeit der Lichtwelle beeinflusst werden und beispielsweise auf die Ausbreitungsgeschwindigkeit des Modulationssignals angepasst werden, was wiederum die Effizienz des Bauteils erhöht (sog. Traveling-Wave-Anordnung).

In einer weiteren Ausführungsform ist der Wellenleiter zumindest teilweise mittels photonischer Kristalle gebildet oder weist solche photonischen Kristalle auf. Diese können beispielsweise die Gruppengeschwindigkeit des geführten Lichtes herabsetzen und damit die Interaktionszeit des optischen Feldes mit dem elektro-optischen Material erhöhen. Dies führt zu einer hohen elektro-optischen Wechselwirkung auf einer kurzen Strecke und damit zu einer höheren Effizienz bei kleineren Abmessungen.

Wie oben beschrieben führt die Nutzung eines dielektrischen Materials mit hoher elektrischen Brechzahl zu einer Erhöhung des elektrischen Modulationsfeldes im Bereich des Wellenleiters und damit zu einer stärkeren Interaktion des Modulationsfeldes mit dem optischen Träger im elektro-optischen Material. Damit können effiziente und schnelle Bauteile realisiert werden ohne zusätzliche optische Verluste durch leitfähige Bereich nahe des optischen Wellenleiters. Oben ist das allgemeine Konzept eines wellenleiterbasierten elektro-optischen Bauteils beschrieben. Es kann sehr gut auf einer Wellenleiterplattform mit hohen optischen Indexkontrast realisiert werden. Bevorzugt ist der optische Brechungsindex des Wellenleiterkerns größer als 1.8 um eine hohe Integrationsdichte zu ermöglichen und der des Wellenleitermantels zwischen 1 und 3, wobei der Indexunterschied zwischen dem Wellenleiterkern und dem Mantel bevorzugt größer 0.5, besonders bevorzugt größer 1 beträgt. Besonders bevorzugt ist der Brechungsindex des Kerns größer als 3 und der Brechungsindex des Mantels zwischen 1.3 und 2. Die Realisierung in entsprechenden Plattformen mit Wellenleiterkernen aus z.B. Siliziumnitrid oder Silizium erlaubt eine sehr kompakte Bauform. Der Querschnitt des Wellenleiterkerns ist bevorzugt kleiner als 5 $\mu m^2$, besonders bevorzugt kleiner als 1 $\mu m^2$. Unter einem elektro-optischen Material wir ein Material verstanden, das seine optische Eigenschaften bei Wechselwirkung mit einem elektrischen Feld ändert. Bei der Realisierung von wellenleiterbasierten Modulatoren weist das elektro-optische Material bevorzugt einen Pockels-Effekt auf mit nichtlinearen Koeffizienten von $r_{33} > 30$ pm/V, besonders bevorzugt von $r_{33} > 80$ pm/V. Die optische Brechzahl des elektro-optischen Materials ist bevorzugt kleiner als 2.4; die elektrische Brechzahl im Frequenzbereich des elektrischen Modulationssignals bevorzugt kleiner 10. Elektro-optische Materialien, die die vorstehenden Eigenschaften erfüllen sind beispielsweise organische Materialien wie SEO100, SEO250, YLD124, PSLD41, oder JRD1. Das dielektrische Material mit hoher elektrischer Brechzahl hat idealerweise eine optischen Brechzahl im Bereich des Wellenleitermantels, bevorzugt kleiner 2.8, besonders bevorzugt kleiner 2.4. Die relative Dielektrizitätskonstante $\varepsilon_r$ ist bevorzugt größer 40, besonders bevorzugt größer 90 und ganz besonders bevorzugt größer 200. Die elektrischen Leitungsbereiche werden bevorzugt als metallische Elektroden ausgeführt, beispielsweise aus Gold oder Aluminium. Der Abstand der elektrischen Leitungsbereiche zu dem optischen Wellenleiter wird vorzugsweise so gewählt, dass die Intensität der geführten optischen Welle an den Leitungsbereichen mindestens einen Faktor 1000 geringer ist, als die maximale Intensität im Wellenleiter. Die Realisierung von transparenten Leitungsbereichen kann beispielsweise durch Indiumzinnoxid (Abk.: ITO) erfolgen oder bei Nutzung einer Fabrikationsplattform mit Siliziumwellenleiter bevorzugt durch leicht dotiertes Silizium. Die Ladungsträgerkonzentration für die transparenten Leitungsbereiche ist hier bevorzugt

im Bereich größer $10^{16}$ cm$^{-3}$ und kleiner $10^{19}$ cm$^{-3}$, besonders bevorzugt größer $10^{17}$ cm$^{-3}$ und kleiner $10^{18}$ cm$^{-3}$. Falls elektro-optische Materialien verwendet werden, die einen elektrischen Polungsprozess benötigen, kann dies über eine elektrisch leitfähige Verbindung vereinfacht werden. Über diese Verbindung kann eine Gleichspannung zur Polung angelegt werden, so dass die Polungsspannung nur über dem elektro-optischen Material anliegt. Hierfür ist die Ladungsträgerkonzentration der leitfähigen Verbindung bevorzugt kleiner $10^{18}$ cm$^{-3}$, besonders bevorzugt kleiner $10^{17}$ cm$^{-3}$.

## Kurzbeschreibung der Figuren

Weitere Einzelheiten und Merkmale der vorliegenden Erfindung ergeben sich aus der nachfolgenden Beschreibung eines bevorzugten Ausführungsbeispiels, insbesondere in Verbindung mit den abhängigen Ansprüchen. Hierbei können die jeweiligen Merkmale für sich alleine oder zu mehreren in Kombination miteinander verwirklicht sein. Die Erfindung ist nicht auf die Ausführungsbeispiele beschränkt.

Die Ausführungsbeispiele sind schematisch in den nachfolgenden Figuren dargestellt. Hierbei bezeichnen gleiche Bezugsziffern in den Figuren gleiche oder funktionsgleiche Elemente bzw. hinsichtlich ihrer Funktionen einander entsprechende Elemente.

Zur Veranschaulich und ohne einschränkende Wirkung ergeben sich weitere Merkmale und Vorteile der Erfindung aus der Beschreibung der beigefügten Zeichnungen. Darin zeigen:

**Fig. 1-1**  in Subfigur 1A eine schematische Querschnittsansicht einer ersten Ausführungsform 100A einer erfindungsgemäßen Vorrichtung und in Subfigur 1B ein schematisches Diagramm 100B bzgl. Brechzahl und Normalkomponente gemäß Figur 1A;

**Fig. 1-2**  in Subfiguren 1C bis 1F vier schematische Querschnittsansichten weiterer Ausführungsformen 100C bis 100F erfindungsgemäßer Vorrichtungen;

**Fig. 2-1**  in Subfiguren 2A und 2B zwei schematische Querschnittsansichten weiterer Ausführungsformen 200A und 200B erfindungsgemäßer Vorrichtungen;

**Fig. 2-2**  in Subfiguren 2C bis 2E drei schematische Querschnittsansichten weiterer Ausführungsformen 200C bis 200E erfindungsgemäßer Vorrichtungen;

**Fig. 3-1**  in Subfiguren 3A und 3B zwei schematische Querschnittsansichten weiterer Ausführungsformen 300A und 300B erfindungsgemäßer Vorrichtungen;

**Fig. 3-2**  in Subfiguren 3C und 3D zwei schematische Felddiagramme 300C und 300D gemäß den Ausführungsformen 300A und 300B in Subfiguren 3A und 3B;

**Fig. 4-1**  in Subfiguren 4A bis 4C drei schematische Querschnittsansichten weiterer Ausführungsformen 400A bis 400C erfindungsgemäßer Vorrichtungen; und

**Fig. 4-2**  in Subfiguren 4D bis 4F drei schematische Querschnittsansichten weiterer Ausführungsformen 400D bis 400F erfindungsgemäßer Vorrichtungen.

## Detaillierte Beschreibung

**Figur 1-1** zeigt in Subfigur **1A** eine schematische Querschnittsansicht einer ersten Ausführungsform einer erfindungsgemäßen Vorrichtung bzw. Struktur **100A** und in Subfigur **1B** ein schematisches Diagramm **100B** bzgl. Brechzahl und Normalkomponente gemäß der Subfigur 1A.

Schematische Querschnittsdarstellungen für'verschiedene Konzepte von elektro-optischen Modulatoren gemäß zumindest einem der Ansprüche 1 bis 26 die eine durch dielektrische Grenzflächen erreichte bzw. erzielte Erhöhung des Modulationsfeldes $E_n$ im optischen Wellenleiter **110** ausnutzen. In der Subfigur **1A** dargestellten Struktur bzw. Vorrichtung **100A** wird der Wellenleiter **110** durch einen Wellenleiterkern **120** mit hoher optischer Brechzahl $n_{opt,120}$ und einen den Wellenleiterkern **120** zumindest teilweise umgebenden, zumindest teilweise elektro-optischen ersten Mantelbereich **130** gebildet, wobei zwischen Wellenleiterkern **120** und ersten Mantelbereich **130** auch optional noch zusätzlich zumindest ein Element und/oder zumindest ein Material angeordnet sein kann. Ein zweiter Mantelbereich **140** aus dielektrischem Material mit hoher elektrischer Brechzahl $n_{e1,140}$ ist zumindest teilweise im Bereich des Wellenleiterkerns **120** zwischen zumindest zwei elektrisch leitfähigen Leitungsbereichen **150** und dem ersten Mantelbereich **130** angeordnet.

Die Subfigur **1A** zeigt ein Wellenleiter-Bauelement **100A,** welches zumindest folgende Elemente umfasst: einen optischen Wellenleiter **110,** aufweisend zumindest ein Material mit zumindest teilweise elektro-optischen Eigenschaften bzw. ist daraus gebildet; zumindest einen einteiligen Wellenleiterkern **120,** aufweisend zumindest ein Material mit hohem Brechungsindex bzw. ist daraus gebildet; zumindest einen ersten Mantelbereich **130** des Wellenleiters **110,** aufweisend zumindest ein Material mit zumindest teilweise elektrooptischen Eigenschaften bzw. ist daraus gebildet; zumindest einen zweiten Mantelbereich **140,** aufweisend zumindest ein dielektrisches Material mit hoher Permittivität bzw. ist daraus gebildet; zumindest zwei elektrisch leitfähige Leitungsbereiche **150,** welche bevorzugt als Metallelektroden realisiert sind bzw. aus mindestens einem Metall gebildet sind, wobei solche Metallelektroden zumindest ein Material aus der Gruppe von Materialien aufweist und wobei diese Gruppe umfasst: Eisen, Aluminium, Kupfer, Gold, Silber oder eine Legierung dieser zuvor genannten Materialien. D.h. Subfigur **1A** zeigt ein Wellenleiter-Bauelement **100A,** aufweisend: einen Wellenleiter **110,** der zumindest teilweise gegenüber Licht transparent bzw. transluzent ist und derart eingerichtet ist, dass Licht zumindest teilweise durch den Wellenleiter **110** hindurch leitbar ist, aufweisend: einen Wellenleiterkern **120,** wobei der Wellenleiterkern **120** zumindest aus einem Element oder aus mehreren, räumlich voneinander getrennten Elementen gebildet ist, die zumindest ein Wellenleiterkernmaterial aufweisen oder daraus gebildet sind; einen ersten Mantelbereich **130,** der mindestens ein elektro-optisches Material aufweist oder daraus gebildet ist, wobei der erste Mantelbereich **130** zumindest teilweiseweise mit im Wellenleiter **110** geleitetem Licht in Wechselwirkung steht, und wobei der erste Mantelbereich **130** zumindest teilweise um das eine Element oder die mehreren Elemente des Wellenleiterkerns **120** angeordnet ist; und einen zweiten Mantelbereich **140,** der mindestens ein dielektrisches Material aufweist oder daraus gebildet ist, wobei der zweite Mantelbereich **140** zumindest teilweise um den ersten Mantelbereich **130** und/oder den Wellenleiterkern **120** angeordnet ist; mindestens zwei Leitungsbereiche **150,** die zumindest teilweise elektrisch leitfähig sind, wobei zwischen den Leitungsbereichen **150** ein elektrische Modulationssignal angelegt ist, wobei die Leitungsbereiche **150** zumindest teilweise derart entlang des optischen Wellenleiters **110** angeordnet sind, dass sich die Leitungsbereiche **150** gegenüberliegen und der Wellenleiter **110** zumindest teilweise zwischen den Leitungsbereichen **150** angeordnet ist; dadurch gekennzeichnet, dass das Modulationssignal ein elektrisches Feld bildet, dessen Feldlinien zumindest teilweise sowohl den zweiten Mantelbereich **140** als auch den ersten Mantelbereich **130** durchdringen, und wobei das dielektrische Material des zweiten Mantelbereiches **140** im Frequenzbereich des Modulationssignals eine höhere elektrische Brechzahl als das elektro-optische Material des ersten Mantelbereichs **130** aufweist.

Die in Subfigur **1A** dargestellte Ausführungsform **100A** umfasst einen einteiligen Wellenleiterkern **120,** der mittels zumindest einem Streifenwellenleiter hoher optischer Brechzahl gebildet ist. Die optische Brechzahl $n_{opt, 120}$ des Wellenleiterkerns **120** bei der Betriebswellenlänge beträgt bevorzugt mehr als 1,8, besonders bevorzugt mehr als 2,5, und ganz besonders bevorzugt mehr als 3,0. Der Wellenleiterkern **120** selbst muss keine elektro-optische Aktivität aufweisen; dementsprechend kommen für seine Herstellung eine große Vielfalt an Materialien in Betracht wie z.B. Halbleiter wie bspw. Silizium oder Verbindungshalbleiter, Dielektrika wie z.B. Metalloxide oder Nitride mit hohem Brechungsindex, oder auch organische Materialien, die einen entsprechend hohen Brechungsindex aufweisen. Der Wellenleiterkern **120** wird zumindest bereichsweise bzw. teilweise im Wechselwirkungsbereich eines im Wellenleiter **110** geführten Lichts von einem ersten Mantelbereich **130** umgeben, der zumindest teilweise aus einem elektro-optischen aktiven Material besteht. Zusätzlich wird ein zweiter Mantelbereich **140** im Bereich des Wellenleiterkerns **120** zwischen dem elektro-optischen Material des ersten Mantelbereiches **130** und den elektrisch leitfähigen Leitungsbereichen **150** angeordnet. Der zweite Mantelbereich **140** besteht aus einem dielektrischen Material, das nicht notwendigerweise elektro-optische Eigenschaften aufweisen muss, jedoch auch solche Eigenschaften optional aufweisen kann. Maßgeblich für die Funktionalität der vorliegenden Erfindung ist die Tatsache, dass das dielektrische Material des zweiten Mantelbereiches **140** im (elektrischen) Frequenzbereich der angelegten Modulationsspannung eine hohe elektrische Brechzahl $n_{el, 140}$, die größer ist als die elektrische Brechzahl $n_{el, 130}$ des ersten Mantelbereiches **130.** Dadurch kommt es zu einer Erhöhung des elektrischen Modulationsfeldes im Bereich des optischen Wellenleiters **110** mit niedriger elektrischer Brechzahl $n_{el,130}$ und damit im elektro-optisch aktiven ersten Mantelbereich **130,** was wiederum einer erhöhten Modulationseffizienz des Wellenleiter-Bauelements **100A** führt, siehe unten. Die elektrische Brechzahl $n_{el,140}$ des zweiten Mantelbereiches **140** ist bevorzugt größer als 4.5, besonders bevorzugt größer als 8, und ganz besonders bevorzugt größer als 12, während die elektrische Brechzahl $n_{el, 130}$ des ersten Mantelbereiches **130** bevorzugt geringer ist als 4.5, besonders bevorzugt geringer als 3.5, und ganz besonders bevorzugt geringer als 2.9. Das Verhältnis zwischen den elektrischen Brechungsindizes $n_{el, 130}$ und $n_{el, 140}$ des ersten und zweiten Mantelbereiches, **130** und **140,** ist bevorzugt größer als 2, besonders bevorzugt größer als 3, und ganz besonders bevorzugt größer als 4. Die elektrische Brechzahl $n_{el, 120}$ des Wellenleiterkerns **120** sollte so groß wie möglich gewählt werden. Anzumerken ist, dass gerade diese Tatsache die erfindungsgemäße Struktur **100A** von der in [2] offenbarten Struktur unterscheidet. Dort liegt die elektro-optische Aktivität im Wellenleiterkern des Wellenleiters vor, und es ist wünschenswert, ein Material mit möglichst kleinem elektrischen Brechungsindex zu verwenden, um die Feldstärke im Wellenleiterkern zu maximieren. Dieses Ziel steht oft im Widerspruch mit der Forderung, dass der Wellenleiterkerneinen größeren optischen Brechungsindex als der erste Mantelbereich aufweisen muss, um überhaupt eine optische Lichtführung zu ermöglichen. Mit der vorliegenden, beanspruchten Konfiguration bzw. Ausführungsform **100A** lässt sich dieser Widerspruch auflösen, da die Forderung nach einem Wellenleiterkernmaterial mit hohem Brechungsindex, d.h. $n_{el}$ bzw. $n_{opt}$, sowohl im elektrischen als auch im optischen Frequenzbereich wesentlich einfacher und von einer wesentlich größeren Vielfalt von Materialien erfüllbar ist. Die optische Brechzahl $n_{opt}$ des Wellenleiterkernmaterials liegt bevorzugt oberhalb von 2.1, besonders bevorzugt oberhalb von 2.8, und ganz besonders bevorzugt oberhalb von 3.3. Die optischen Brechzahlen $n_{opt}$ müssen so gewählt werden, dass der erste Mantelbereich **130** eine kleinere optische Brechzahl $n_{opt, 130}$ als die optische Brechzahl $n_{opt, 120}$ des Materials des Wellenleiterkerns **120** aufweist. Die optische Brechzahl $n_{opt, 140}$ des zweiten Mantelbereiches **140** kann kleiner gewählt werden als die optische Brechzahl $n_{el,120}$ des Wellenleiterkerns **120,** muss aber nicht - im letzteren Fall muss die Dicke des ersten Mantelbereiches **130** so groß gewählt werden, dass ein Abstrahlen von optischer Leistung in den zweiten Mantelbereich **140** sicher vermieden wird.

Zur Erklärung der Funktionsweise der ersten Ausführungsform **100A** muss die Kontinuitätsbedingung für die Normalkomponente $D_n = \varepsilon_0 \varepsilon_r E_n$ der dielektrischen Verschiebungsdichte **D** des Modulationsfeldes **E** beim Übergang von einem ersten Mantelbereich bzw. Mantelbereich **130** mit relativer Dielektrizitätszahl $\varepsilon_{r, 130}$ an der Grenzfläche zu einem zweiten Mantelbereich **140** mit relative Dielektrizitätszahl $\varepsilon_{r, 140}$ beachtet werden. Die elektrische Brechzahl $n_{el}$ und relative Dielektrizitätszahl $\varepsilon_r$ sind für den Fall unmagnetischer Materialien verknüpft über $n^2_{el} = \varepsilon_r$, gemäß der folgenden Gleichungen **7** und **8**:

$$D_n = n^2_{el,\,130} E_{n,\,130} = n^2_{el,\,140} E_{n,\,140} = \mathrm{const.} \qquad (7),$$

und

$$\frac{E_{n,\,130}}{E_{n,\,140}} = \frac{n^2_{el,\,140}}{n^2_{el,\,130}} \qquad (8).$$

Im Falle von kleinen elektrischen Brechzahlen $n_{el, 130}$ im ersten Mantelbereich **130** und hohen elektrischem Brechzahlen $n_{el, 140}$ im zweiten Mantelbereich **140,** d.h. es gilt folgendes Verhältnis zwischen den oben genannten elektrischen Brechzahlen $n_{el, 140} \gg n_{el, 130}$, ist die Modulationsfeldstärke $E_{n, 130}$ im elektro-optisch aktiven ersten Mantelbereich **130** bedeutend bzw. signifikant größer als die Feldstärke $E_{n, 140}$ im zweiten Mantelbereich **140.**

In der Subfigur **1B** sind schematisch der Verlauf der elektrischen Brechzahl $n_{el}$ und der Verlauf des elektrischen Modulationsfeldes $E_n$ im Zentrum des Wellenleiter-Querschnitts der Ausführungsform **100A** in einem schematischen Diagramm **100B** dargestellt.

Darin sind die elektrische Brechzahl $n_{el}$ und Normalkomponente des elektrischen Modulationsfeldes $E_n$ längs der Querschnittsmitte der Struktur **100A** in Subfigur **1A** schematisch dargestellt. Die Schnittlinie ist als senkrechte, gepunktete Linie in Subfigur **1A** eingezeichnet. Die Unterschiede der elektrischen Brechzahlen, d.h. es gilt $n_{el, 130} \neq n_{el, 140}$, im elektro-optischen Material des ersten Mantelbereichs **130** und im dielektrischen Material des zweiten Mantelbereichs **140** führen durch eine Unstetigkeit an der Grenzfläche zu einem erhöhten elektrischen Modulationsfeld $E_n$ im Wellenleiterkern **120.**

Eine Modulationsspannung, die über die elektrisch leitfähigen Leitungsbereiche **150** angelegt wird, fällt im Wesentlichen über dem ersten Mantelbereich **130** ab, wenn die Wellenleitergeometrie und die elektrischen Brechzahlen $n_{el; 120, 130, 140}$ der Mantel- und Wellenleiterkernmaterialien geeignet gewählt werden. Das Material des Wellenleiterkerns **120** hat dabei bevorzugt eine elektrische Brechzahl $n_{el, 120}$ größer oder gleich der elektrischen Brechzahl $n_{el, 130}$ des ersten Mantelbereiches **130.**

Bei gegebener bzw. angelegter M'odulationsspannung konzentriert sich also für diese Ausführungsform **100A** das elektrische Modulationsfeld $E_n$ auf den ersten Mantelbereich **130** mit niedriger elektrischer Brechzahl $n_{el, 130}$, was zu einer erhöhten bzw. gesteigerten Wechselwirkung des Modulationsfelds $E_n$ mit der Lichtwelle im nichtlinearen elektro-optischen Mantelmaterial führt, wenn erfindungsgemäß ein dielektrisches Mantelmaterial im zweiten Mantelbereich **140** verwendet wird, dessen elektrische Brechzahl $n_{el, 140}$ über der elektrischen Brechzahl $n_{el, 130}$ des elektro-optischen Materials im ersten Mantelbereich **130** liegt. Als Materialien mit hoher elektrischen Brechzahl $n_{el}$ im Frequenzbereich bis zu einigen Hundert Gigahertz kommen bspw. Oxide, insbesondere Oxide von Übergangsmetallen (bspw. ZrO2, $HfO_2$, $La_2O_3$, $Ta_2O_3$, $Y_2O_3$, $TiO_2$, ...) , Titanate (bspw. BaTiO3, $SrTiO_3$, $BaSrTiO_3$, ...), Silikate (bspw. $HfSiO_4$, $ZrSiO_4$, ...), oder Kombinationen davon in Betracht, d.h. solche Materialien eignen sich zum Bilden des zweiten Mantelbereichs **140.** Mit anderen Worten, kann der zweite Mantelbereich **140** zumindest eines der zuvor genannten Oxide aufweisen bzw. daraus gebildet sein. Aber auch andere dielektrische Materialien können verwendet werden, bspw. basierend auf organischen Verbindungen. Optional können bei der hierin beanspruchten Struktur **100A** auch im Wellenleiterkern **120** Materialien mit elektro-optischen Effekten verwendet werden, die die vom ersten Mantelbereich **130** herrühren den elektro-optischen Wechselwirkungen verstärken bzw. steigern.

**Figur 1-2** zeigt in den Subfiguren **1C** bis **1F** vier schematische Querschnittsansichten weiterer Ausführungsformen erfindungsgemäßer Vorrichtungen **100C, 100D, 100C** und **100F.**

Subfigur **1C** zeigt eine weitere Ausführungsform **100C** basierend auf der Ausführungsform **100A** gemäß Subfigur **1A** sowie deren Beschreibung mit zweiteiligem Wellenleiterkern **121,** wobei ein solcher zweiteiliger Wellenleiterkern **121** zumindest aus zwei Elementen gebildet ist, die derart voneinander räumlich getrennt sind, dass ein Schlitz zwischen diesen Elementen gebildet ist. Im Schlitz, der mit elektro-optischem Material **130** zumindest teilweise gefüllt ist, wird sowohl das optische Trägerfeld als auch das elektrische Modulationsfeld $E_n$ durch Unstetigkeiten an dielektrischen Grenzflächen verstärkt. Mit anderen Worten, der Wellenleiterkern **121** umfasst zumindest zwei Teile bzw. ist daraus gebildet, die durch einen Schlitz voneinander räumlich getrennt sind (optischer Schlitzwellenleiter). Der Schlitz ist mit dem zum ersten Mantelbereich **130** gehörenden elektro-optischen Material zumindest teilweise gefüllt, dessen optische Brechzahl $n_{opt,\,130}$ kleiner ist als die des zweigeteilten Wellenleiterkerns **121** (Schlitzwellenleiter). Die Differenz der optischen Brechzahlen $n_{opt,\,121}$ des Wellenleiterkerns **121** und $n_{opt,\,130}$ des ersten Mantelbereiches **130** ist bevorzugt größer oder gleich 0.5, besonders bevorzugt größer oder gleich 1, und ganz besonders bevorzugt größer oder gleich 1.5. In dieser bzw. einer solchen Geometrie wird die unstetige Feldüberhöhung der Normalkomponente des elektrischen Lichtfeldes $E_n$ an den Seitenwänden des Schlitzes und an den zu den elektrisch leitfähigen Leitungsbereichen **150** hin orientierten Grenzflächen des Wellenleiterkerns **121** ausgenutzt, um einen großen Teil des elektrischen Feldes $E_n$ der optischen Welle bzw. dem Licht im Schlitz und damit im Material des ersten Mantelbereichs **130** zu konzentrieren, gemäß den folgenden Gleichungen **9** und **10:**

$$D_n = n^2_{opt,\,130}E_{n,\,130} = n^2_{opt,\,121}E_{n,\,121} = \mathrm{const.} \qquad (9),$$

und

$$E_{n,\,130}\Big/E_{n,\,121} = n^2_{opt,\,121}\Big/n^2_{opt,\,130} \qquad (10).$$

Die optische Normalkomponente der elektrischen Feldstärke $E_n$ wird besonders groß, wenn bevorzugt ein dominant vertikal polarisiertes optisches Feld gewählt wird. Als Maß für die Wechselwirkung eines im Wellenleiter **110** geführten Lichtes mit dem Mantelmaterial wird üblicherweise der Feldinteraktionsfaktor $\Gamma$ gemäß der folgenden Gleichung **11** herangezogen, hier beschrieben unter der Annahme, dass das optische Feld in x-Richtung polarisiert ist,

$$\Gamma = \frac{n_{opt,130}}{Z_0}\frac{\int_{A_{130}}|E_x|^2\,dA}{2P(\omega_c)} \qquad (11).$$

Der Feldinteraktionsfaktor $\Gamma$ beschreibt den Anteil des optischen Feldes welcher im elektro-optischen Mantelmaterial mit dem Modulationsfeld wechselwirkt unter der Annahme, dass das entsprechende Tensorelement der nichtlinearen Suszeptibilität ungleich null ist. $E_x$ ist dabei die x-Komponente des optischen Feldes, **P** ist die Leistung des optischen Feldes, $n_{opt,\,130}$ der Brechungsindex des elektro-optischen Materials, $Z_0$ der Wellenwiderstand im Vakuum und $A_{130}$ die Querschnittsfläche, in welcher das optische Feld mit dem Modulationsfeld im elektro-optischen Material wechselwirkt.

Auch bei dieser Struktur lässt sich das elektrische Modulationsfeld $E_n$ im zweiteiligen Wellenleiterkern **121** direkt umgebenden ersten Mantelbereich **130** dadurch erhöhen, dass ein zweiter Mantelbereich **140** aus dielektrischem Material mit hoher elektrischer Brechzahl $n_{el,\,140}$ im Bereich des Wellenleiterkerns **120** zwischen den elektrisch leitfähigen Leitungsbereichen **150** und dem elektro-optischen Material des ersten Mantelbereichs **130** angeordnet ist. Die Kombination von optischer und elektrischer Feldüberhöhung führt zu einer besonders starken Wechselwirkung des elektrischen und des optischen Feldes im elektro-optischen Material im Schlitz.

Subfigur **1D** zeigt eine weitere Ausführungsform **100D** basierend auf der Ausführungsform **100C** gemäß Subfigur **1C** sowie deren Beschreibung. Hierbei schließt der zweite Mantelbereich **140** direkt an den Wellenleiterkern **122** an, wobei der Wellenleiterkern **122** hier in dieser Ausführungsform **100D** als zweigeteilter Wellenleiterkern realisiert ist. Das dielektrische Material mit hoher elektrischer Brechzahl $n_{el,\,140}$ des zweiten Mantelbereichs **140** schließt dabei direkt an den zweiteiligen Wellenleiterkern **122** eines optischen Schlitzwellenleiters an. Auch hier führt die optische und elektrische Feldüberhöhung an Grenzflächen zwischen Bereichen mit hohem und geringem Brechungsindex $n_{el}$ zu einer stärken Wechselwirkung der Felder mit dem zum ersten Mantelbereich **130** gehörenden elektrooptischen Material im Schlitz.

Subfigur **1E** zeigt eine weitere Ausführungsform mit einem mehrteiligen Wellenleiterkern **123** mit elektro-optischem Material als ersten Mantelbereich **130,** der über jeweils transparente, elektrisch leitfähige Bereiche **151** mit elektrisch leitfähigen Leitungsbereichen **150** verbunden ist. Zwischen dem Wellenleiterkern **123** und den Leitungsbereichen **150** ist ein Material mit hoher elektrischer Brechzahl $n_{el,\ 140}$ als zweiter Mantelbereich **140** angeordnet, das zu Erhöhung des elektrischen Modulationsfeldes $E_n$ im an den Wellenleiterkern **123** anschließenden elektro-optischen Material führt. Hier verbinden optisch transparente Leitungsbereiche **151** die Einzelteileeines mehrteiligen Wellenleiterkerns **123** mit elektrisch leitfähigen Leitungsbereichen **150**. Das elektro-optische Material des ersten Mantelbereichs **130** füllt den Schlitz zwischen den Teilen des Wellenleiterkerns **123**. Der zweite Mantelbereich **140** aus dielektrischem Material hoher elektrischer Brechzahl $n_{el}$ ist zwischen den elektrisch leitfähigen Leitungsbereichen **150** und dem ersten Mantelbereich **130** angeordnet. Analog zu Subfigur **1D** kann der zweite Mantelbereich **140** auch direkt an den Wellenleiterkern **123** anschließen bzw. daran angeordnet sein. Bei moderater Leitfähigkeit der transparenten Leitungsbereiche **151** wird mit dieser Struktur **100E** eine hohe Feldstärke für niedrige Frequenzen des elektrischen Modulationsfeldes $E_n$ im Schlitz erreicht (Tiefpasscharakteristik). Im Zusammenspiel mit der Feldüberhöhung des elektrischen Feldes $E_n$ durch das Material mit hoher elektrischer Brechzahl $n_{el,\ 140}$ im zweiten Mantelbereich **140,** welche auch für sehr hohe Frequenzen wirksam ist, kann ein optimaler Frequenzgang erreicht werden. Weiterhin können diese transparenten Leitungsbereiche **151** auch mit niedriger Leitfähigkeit für genutzt werden, falls währen der Fabrikation ein Polungsprozess des elektro-optischen Materials erforderlich ist. Unter dem Polen elektro-optischer Materialien versteht man das Ausrichten von Molekülen oder Domänen eines elektrooptischen Materials, so dass sich ein makroskopischer elektrooptischer Effekt in dem gepolten Materialvolumen ausbildet. Dies kann in elektro-optischen Materialien, deren Moleküle beispielsweise ein Dipolmoment besitzen, unter anderem dadurch erreicht werden, indem über eine Gleichspannung ein starkes elektrisches Feld erzeugt wird, an deren Feldlinien sich die Moleküle ausrichten. Über die transparenten Leitungsbereiche **151** lässt sich während des Polungsprozesses eine Gleichspannung anlegen, so dass ein starkes elektrisches Feld sich im Schlitz ausbildet und damit eine Polung ermöglicht.

Da für eine Gleichspannung nur sehr geringe Leitfähigkeiten benötigt werden, lässt sich eine Struktur zum Polen beispielsweise auch mit Bauteilen aus den Ausführungsformen **100C** oder **100D** gemäß Subfigur **1C** oder Subfigur **1D** erreichen. Hierbei ist der Wellenleiterkern, **121** oder **122,** gering elektrisch leitfähig, was sich beispielsweise in Silizium durch eine leichte Dotierung erreichen lässt. Außerhalb der Modulator-Struktur wird jeweils ein Teil des Wellenleiterkerns **123** elektrisch mit mindestens einer dezidierten Polungselektrode (hierin nicht dargestellt) verbunden, vgl. hierzu bspw. Polungselektrode **153** gemäß der Ausführungsform **300B** aus Subfigur 3B in Fig. **3-1.** Über eine solche Polungselektroden **153** und die gering leitfähigen Teile des Wellenleiterkerns lässt sich nun während der Fabrikation eine Gleichspannung anlegen, so dass das elektro-optische Material im Schlitz gepolt werden kann.

Subfigur **1F** zeigt eine weitere Ausführungsform **100F** basierend auf der Ausführungsform gemäß Subfigur **1E** sowie deren Beschreibung, wobei diese mit einteiligem Wellenleiterkern **124,** der mit einem transparenten, elektrisch leitfähigen Bereich **151** an einen elektrisch leitfähigen Leitungsbereich **150** angebunden bzw. elektrisch leitfähig verbunden ist. Ein transparenter Leitungsbereich **151** verbindet zumindest einen Teil **124** des Wellenleiterkerns mit einem elektrisch leitfähigen Leitungsbereich **150**. Der erste Mantelbereich **130** besteht aus elektro-optischem Material. Dielektrisches Material mit hoher elektrischer Brechzahl $n_{el,\ 140}$ wird im zweiten Mantelbereich **140** zwischen dem elektro-optischem Material und den elektrisch leitfähigen Leitungsbereichen, **150** und **152** platziert, so dass das elektrische Modulationsfeld $E_n$ im elektro-optischem Material des ersten Mantelbereichs **130** bei gegebener bzw. angelegter Modulationsspannung erhöht wird. Die Wirkung ist äquivalent zu der in Subfigur **1E** abgebildeten Struktur **100E** sowie deren Beschreibung.

Die Leitungsbereiche **150** sowie **152** sind vorzugsweise als Metallelektroden, wobei solche Leitungsbereiche aus zumindest einem der zuvor genannten Materialien gebildet sind bzw. zumindest teilweise ein solches Material aufweisen.

Das Konzept ein- oder mehrteiliger Wellenleiterkerne, **120, 121, 122, 123** oder **124,** in Kombination mit einem Mantel, **130** und **140,** aus teils nichtlinearen elektro-optischen, teils linearen Materialien mit hoher elektrischen Brechzahl $n_{el}$ lässt sich auch auf weitere Strukturen verallgemeinern. Für eine hohe Modulationseffizienz ist eine möglichst große Wechselwirkung des optischen Feldes mit dem elektrischen Modulationsfeld $E_n$ erforderlich. Diese Wechselwirkung im elektro-optischen Material wird durch eine Überhöhung von optischem Feld und elektrischem Modulationsfeld $E_n$ gesteigert. Dazu wird, wie in den vorstehenden Abschnitten beschrieben, die Kontinuitätsbedingung für die Normalkomponente der dielektrischen Verschiebungsdichte $D_n$ an dielektrischen Grenzflächen ausgenutzt.

Neben der Ausführung des Wellenleiterkerns, **120, 121, 122, 123** oder **124,** als Streifen- oder Schlitzwellenleiter kann dieser auch durch periodische oder nicht-periodische Strukturen mit Strukturdetails wesentlich kleiner als die optische Wellenlänge gebildet werden, beispielsweise mit einem Wellenleiterkern, der aus Blöcken von Materialien hoher

Brechzahl $n_{el}$ besteht, die unverbunden entlang der Ausbreitungsrichtung des Lichtes angeordnet sind (sog. "sub-wavelength grating waveguides"). Diese Strukturen können sowohl als Streifenwellenleiter als auch als Schlitzwellenleiter ausgebildet sein und ermöglichen eine stärkere Wechselwirkung der optischen Welle mit dem elektro-optischen Mantelmaterial. Weiterhin können der Wellenleiterkern oder umgebende Bereiche entlang der Ausbreitungsrichtung so strukturiert sein, dass die Ausbreitungseigenschaften des optischen Modus vorteilhaft beeinflusst werden. Dazu zählen beispielsweise sog. "Slow-Light-Strukturen", die die Gruppengeschwindigkeit des geführten Lichtes herabsetzen und damit die Interaktionszeit des optischen Feldes mit dem elektro-optischen Material erhöhen. Dies führt zu einer hohen elektro-optischen Wechselwirkung auf einer kurzen Strecke. "Slow-Light-Strukturen" können beispielsweise durch photonische Kristalle realisiert werden. Ebenso können Strukturen realisiert werden, die die Gruppengeschwindigkeit des optischen Feldes dem der elektrischen Modulationswelle anpassen.

**Figuren 2-1** und 2-2 zeigen schematische Querschnittszeichnung der Konzepte für erfindungsgemäße elektro-optische Modulatoren in lateraler Anordnung, analog zu den Figuren **1-1** und **1-2** sowie deren Beschreibung. Die Subfiguren **2A, 2B, 2C, 2D** und **2E** entsprechen in Aufbau und Funktion ihrem Gegenstück **1A, 1C, 1D, 1E** und **2F** in Fig. **1-1** und **1-2** mit dem Unterschied, dass hierbei die Strukturen **200A** bis **200E** jeweils lateral auf einem optisch transparenten Substrat **160** angeordnet sind. Mit anderen Worten sind bei diesen Ausführungsformen, **200A** bis **200E,** der mindestens eine Wellenleiterkern, **120, 121, 122, 123** oder **124,** der mindestens eine erste Mantelbereich **130,** der mindestens eine zweite Mantelbereich **140** und die mindestens zwei elektrisch leitfähigen Leitungsbereiche **150** analog zu den Ausführungsformen **100A** und **100C** bis **100F** der Subfiguren **1A** und **1C** bis **1F** in den Figuren **1-1** und **1-2** sowie deren Beschreibung seitwärts bzw. lateral über zumindest einem Substrat **160** angeordnet, wobei über einer solchen Anordnung noch zumindest eine zusätzliche Deckschicht **170** angeordnet ist und wobei das Substrat **160** aus mindestens einer Schicht gebildet ist. Über dem ersten Mantelbereich **130** können somit noch eine oder mehrere Deckschichten **170** aufgebracht werden. Hierin ist unter dem Begriff "laterale Anordnung" eine Anordnung zu verstehen, die jeweils von der Körpermitte seitwärts orientiert bzw. gebildet ist. Somit ist damit in Analogie zu den Ausführungsformen **100A** und **100C** bis **100F** aus den Figuren **1-1** und **1-2** sowie deren Beschreibung zu verstehen, dass diese offenbarten Ausführungsformen **100A** und **100C** bis **100F** gemäß den Ausführungsformen **200A** bis **200E** und deren Beschreibung seitwärts bzw. lateral über einem Substrat **160** angeordnet sind.

Wie bereits oben erläutert, ist es vorteilhaft zur Fabrikation der elektro-optischen Modulatoren gemäß zumindest einem der Ansprüche 1 bis 26 auf kommerziell verfügbare und skalierbare Fertigungsprozesse zurückzugreifen. Dafür ist es besonders vorteilhaft, anstelle einer vertikalen Strukturierung des Bauteils, eine laterale Strukturierung zu verwenden, bei der zunächst der optische Wellenleiterkern, d.h. **120, 121, 122, 123** oder **124,** die elektrisch leitfähigen Leitungsbereiche **150** und **152** und die zum zweiten Bereich **140** des Mantels gehörenden dielektrischen' Strukturen in einer planaren Anordnung erzeugt werden, auf die dann das elektro-optisch aktive Material mit vergleichsweise geringen Anforderungen bzgl. Schichtdicke, Schichtqualität und lateralen Abmessungen aufgebracht werden kann. Fig. **2-1** und **2-2** zeigt derartige laterale Anordnungen von Strukturen, analog zu den in Fig. **1-1** und **1-2** dargestellten allgemeinen Bauteilkonzepten bzw. Ausführungsformen sowie deren Beschreibung oben. Als Substrat und gleichzeitig als unterer Wellenleitermantel **160** fungiert ein optisch transparentes Material. Dabei kann es sich beispielsweise um zumindest teilweise ein Oxid wie $SiO_2$, $Al_2O_3$, ... handeln bzw. zumindest teilweise daraus gebildet sein bzw. ein solches aufweisen. Bei der Herstellung können zunächst der Wellenleiterkern bzw. dessen Bestandteile, d.h. **120, 121, 122, 123** oder **124),** der zweite Mantelbereich **140** aus dielektrischem Material mit hoher elektrischer Brechzahl $n_{el}$, die transparenten Leitungsbereiche **151,** und die elektrisch leitfähigen Leitungsbereiche **150** durch konventionelle laterale Strukturierungsverfahren nebeneinander auf dem Substrat abgeschieden werden, bevor der erste Mantelbereich **130** aus zumindest teilweise elektro-optischem Material und ggf. weitere Deckschichten **170** aufgebracht werden, wobei eine solche Deckschicht oder solche Deckschichten mindestens ein Material aus der Gruppe von Deckschichtmaterialien aufweist, wobei diese Gruppe umfasst beispielsweise: Kristalline Strukturen oder amorphe Strukturen (bspw. Gläser) auf Basis von Oxiden wie beispielsweise $SiO_2$, Nitriden wie $Si_3N_4$, oder organische Materialien wie beispielsweise Polymere und Epoxid. Die Deckschicht kann transparent sein. Sie bietet Schutz vor mechanischen Beschädigungen. Die Deckschichtmaterialien sind typischer Weise elektrisch isolierend wodurch eine Passivierung des Bauteils erreicht wird. Weiterhin kann durch die Deckschichtmaterialien das Bauteil vor Umgebungseinflüssen wie beispielsweise Feuchtigkeit oder Sauerstoff geschützt werden. Bei diesen Anordnungen bzw. Ausführungsformen, **200A** bis **200E,** ist es insbesondere nicht notwendig, weitere Schichten mit hoher elektrischer oder optischer Qualität und womöglich einer kristallinen Kristallstruktur auf dem elektro-optischen Material des ersten Mantelbereichs **130** abzuscheiden. Dies vereinfacht die Herstellung drastisch und erweitert gleichzeig das Spektrum der einsetzbaren elektro-optischen Materialien. Damit wird es insbesondere möglich, beispielsweise organische Materialien des ersten Mantelbereichs **130** aus der Flüssigphase in das vorstrukturierte Bauelement einzubringen. Eine Entfernung des Substrates ist bei diesen Strukturen nicht notwendig. Mit anderen Worten, dass Substrat bzw. der Wellenleitermantel **160** kann zumindest teilweise Teil der jeweiligen Ausführungsform, **200A** bis **200E,** sein bzw. ein solches aufweisen.

In Ausführungsform **200A** in Subfigur **2A** in Figur **2-1** ist über einem Substrat bzw. Wellenleitermantel **160** eine laterale Struktur, die analog zur Ausführungsform **100A** in Subfigur **1A** in Figur **1-1** sowie deren Beschreibung gebildet ist, angeordnet. In dieser Struktur ist um einen einteiligen Wellerileiterkern **120** lateral bzw. seitwärts zumindest teilweise mindestens ein erster Mantelbereich **130** angeordnet bzw. umgibt diesen zumindest teilweise sowie zumindest teilweise zu beiden Seiten des ersten Mantelbereichs **130** jeweils mindestens ein zweiter Mantelbereich **140**. Außerdem ist in dieser Struktur lateral bzw. seitwärts zumindest teilweise zu beiden Seiten des zweiten Mantelbereichs **140** jeweils zumindest teilweise mindestens ein elektrisch leitfähiger Leitungsbereich **150** angeordnet. In Ausführungsform **200A** erstreckt sich der erste Mantelbereich **130** über der lateralen Struktur derart, dass der einteilige Wellenleiterkern **120** sowie die beiden zweiten Mantelbereiche **140** und die beiden elektrisch leitfähigen Leitungsbereiche **150** zumindest teilweise vom ersten Mantelbereich **130** umgeben sind, wobei der erste Mantelbereich **130** nur teilweise die Bereiche der lateralen Struktur umgibt, die nicht an das Substrat bzw. Wellenleitermantel **160** angrenzen. In dieser Ausführungsform **200A** bildet der erste Mantelbereich **130** über der lateralen Struktur eine erste Deckschicht, wobei über dieser Deckschicht zumindest eine weitere bzw. zumindest eine zusätzliche Deckschicht **170** angeordnet ist, wobei die Deckschicht **170** auch optional aus mehr als einer Schicht gebildet sein bzw. mehrere Schichten aufweisen kann.

In Ausführungsform **200B** in Subfigur **2B** in Figur **2-1** ist analog zur Ausführungsform **100C** in Subfigur **1C** in Figur **1-2** sowie deren Beschreibung die darin offenbarte Struktur lateral bzw. seitwärts über einem Substrat bzw. Wellenleitermantel **160** angeordnet. In dieser Struktur ist um einen zweiteiligen Wellenleiterkern **121** (analog zur o.g. Ausführungsform **100C**) lateral bzw. seitwärts zumindest teilweise mindestens ein erster Mantelbereich **130** angeordnet bzw. umgibt diesen zumindest teilweise sowie zumindest teilweise zu beiden Seiten des ersten Mantelbereichs **130** jeweils mindestens ein zweiter Mantelbereich **140**; wobei in dieser Ausführungsform **200B** der zweite Mantelbereich **140** und der zweiteilige Wellenleiterkern **121** räumlich voneinander getrennt sind. Außerdem ist in dieser Struktur lateral bzw. seitwärts zumindest teilweise zu beiden Seiten des zweiten Mantelbereichs **140** jeweils zumindest teilweise mindestens ein elektrisch leitfähiger Leitungsbereich **150** angeordnet. In Ausführungsform **200B** erstreckt sich der erste Mantelbereich **130** zumindest teilweise innerhalb des Schlitzes des zweiteiligen Wellenleiterkerns **121** bzw. zwischen den beiden Elementen des zweiteiligen Wellenleiterkerns **121** sowie über der lateralen Struktur derart, dass der zweiteilige Wellenleiterkern **121** sowie die beiden zweiten Mantelbereiche **140** und die beiden elektrisch leitfähigen Leitungsbereiche **150** zumindest teilweise vom ersten Mantelbereich **130** umgeben sind, wobei der erste Mantelbereich **130** nur teilweise die Bereiche dieser lateralen Struktur umgibt, die nicht an das Substrat bzw. Wellenleitermantel **160** angrenzen. In dieser Ausführungsform **200A** bildet der erste Mantelbereich über dieser lateralen Struktur eine erste Deckschicht, wobei über dieser Deckschicht zumindest eine weitere bzw. zumindest eine zusätzliche Deckschicht **170** angeordnet ist, wobei die Deckschicht **170** auch optional aus mehr als einer Schicht gebildet sein bzw. mehrere Schichten aufweisen kann.

In Ausführungsform **200C** in Subfigur **2C** in Figur **2-2** ist analog zur Ausführungsform **100D** in Subfigur **1D** in Figur **1-2** sowie deren Beschreibung, die darin offenbarte Struktur lateral bzw. seitwärts über einem Substrat bzw. Wellenleitermantel **160** angeordnet. In dieser Struktur ist um einen zweiteiligen Wellenleiterkern **122** (analog zur o.g. Ausführungsform **100D**) lateral bzw. seitwärts zumindest teilweise mindestens ein erster Mantelbereich **130** angeordnet bzw. umgibt diesen zumindest teilweise sowie zumindest teilweise zu beiden Seiten des ersten Mantelbereichs **130** jeweils mindestens ein zweiter Mantelbereich **140,** wobei gemäß dieser Ausführungsform **200C** der zweiteilige Wellenleiterkern **122** zumindest teilweise direkt an den zweiten Mantelbereich **140** angrenzt. Außerdem ist in dieser Struktur lateral bzw. seitwärts zumindest teilweise zu beiden Seiten des zweiten Mantelbereichs **140** jeweils zumindest teilweise mindestens ein elektrisch leitfähiger Leitungsbereich **150** angeordnet. In Ausführungsform **200C** erstreckt sich der erste Mantelbereich **130** zumindest teilweise innerhalb des Schlitzes des zweiteiligen Wellenleiterkerns **122** bzw. zwischen den beiden Elementen des zweiteiligen Wellenleiterkerns **122** sowie über der lateralen Struktur derart, dass der zweiteilige Wellenleiterkern **122** sowie die beiden zweiten Mantelbereiche **140** und die beiden elektrisch leitfähigen Leitungsbereiche **150** zumindest teilweise vom ersten Mantelbereich **130** umgeben sind, wobei der erste Mantelbereich **130** nur teilweise die Bereiche der lateralen Struktur umgibt, die nicht an das Substrat bzw. Wellenleitermantel **160** angrenzen. In dieser Ausführungsform **200C** bildet der erste Mantelbereich **130** über dieser lateralen Struktur eine erste Deckschicht, wobei über dieser Deckschicht zumindest eine weitere bzw. zumindest eine zusätzliche Deckschicht **170** angeordnet ist, wobei die Deckschicht **170** auch optional aus mehr als einer Schicht gebildet sein bzw. mehrere Schichten aufweisen kann.

In Ausführungsform 200D in Subfigur **2D** in Figur **2-2** ist analog zur Ausführungsform **100E** in Subfigur **1E** in Figur. **1-2** sowie deren Beschreibung die darin offenbarte Struktur lateral bzw. seitwärts über einem Substrat bzw. Wellenleitermantel **160** angeordnet bzw. gebildet. In dieser Struktur ist um einen zweiteiligen Wellenleiterkern **123** (analog zur o.g. Ausführungsform **100E**) lateral bzw. seitwärts zumindest teilweise mindestens ein erster Mantelbereich **130** angeordnet bzw. umgibt diesen zumindest teilweise sowie zumindest teilweise zu beiden Seiten des ersten Mantelbereichs **130** jeweils mindestens ein zweiter Mantelbereich **140,** wobei in Ausführungsform **200D** der zweite Mantelbereich **140** und der zweiteilige Wellenleiterkern **123** räumlich voneinander getrennt sind. Darüber hinaus sind jeweils ein Element des zweiteiligen Wellenleiterkerns **123** und einer der elektrisch leitfähigen Leitungsbereiche **150** mittels jeweils eines transparenten elektrisch leitfähige Leitungsbereichs **151** miteinander elektrisch leitfähig verbunden, wobei zumindest teilweise jeweils ein zweiter Mantelbereich **140** über einen der beiden transparenten elektrisch leitfähige Leitungsbereiche **151** angeordnet ist. Außerdem ist in dieser Struktur lateral bzw. seitwärts zumindest teilweise zu beiden Seiten des zweiten Mantelbereichs **140** jeweils zumindest teilweise mindestens ein elektrisch leitfähiger Leitungsbereich **150** angeordnet. In Ausführungsform **200D** erstreckt sich der erste Mantelbereich **130** zumindest teilweise innerhalb des Schlitzes des zweiteiligen Wellenleiterkerns **123** bzw. zwischen den beiden Elementen des zweiteiligen Wellenleiterkerns **123** sowie über der lateralen Struktur derart, dass der zweiteilige Wellenleiterkern **123** sowie die beiden zweiten Mantelbereiche **140** und die beiden elektrisch leitfähigen Leitungsbereiche **150** zumindest teilweise vom ersten Mantelbereich **130** umgeben sind, wobei der erste Mantelbereich **130** nur teilweise die Bereiche der lateralen Struktur umgibt, die nicht an das Substrat bzw. Wellenleitermantel **160** angrenzen. In dieser Ausführungsform **200D** bildet der erste Mantelbereich **130** über dieser lateralen Struktur eine erste Deckschicht, wobei über dieser Deckschicht zumindest eine weitere bzw. zumindest eine zusätzliche Deckschicht **170** angeordnet ist, wobei die Deckschicht **170** auch optional aus mehr als einer Schicht gebildet sein bzw. mehrere Schichten aufweisen kann.

In Ausführungsform **200E** in Subfigur **2E** in Figur **2-2** ist über einem Substrat bzw. Wellenleitermantel **160** eine laterale Struktur, die analog zur Ausführungsform **100F** in Subfigur **1F** in Figur **1-2** sowie deren Beschreibung gebildet ist, angeordnet. In dieser Struktur ist zumindest teilweise um einen einteiligen Wellenleiterkern **124** lateral bzw. seitwärts mindestens ein erster Mantelbereich **130** angeordnet bzw. umgibt diesen zumindest teilweise. Der Wellenleiterkern **124** ist zumindest teilweise über einem transparenten, elektrisch leitfähigen Bereich **151** angeordnet bzw. darüber gebildet. Zu beiden Seiten des ersten Mantelbereichs **130** ist lateral jeweils mindestens ein elektrisch leitfähiger Leitungsbereich **150** angeordnet, wobei die beiden Leitungsbereiche **150** mittels des transparenten, elektrisch leitfähigen Bereichs **151** elektrisch leitfähig miteinander verbunden sind. Über dem Wellenleiterkern **124** und dem ersten Mantelbereich **130** ist zumindest teilweise mindestens ein zweiter Mantelbereich **140** angeordnet bzw. gebildet. Über dem zweiten Mantelbereich **140** ist zumindest teilweise ein zusätzlicher, elektrisch leitfähiger Leitungsbereich **152** angeordnet bzw. gebildet.

**Fig. 3-1** zeigt in Subfiguren **3A** und **3B** zwei schematische Querschnittsansichten weiterer Ausführungsformen **300A und 300B** erfindungsgemäßer Vorrichtungen. Ausführungsform **300A** und **300B** sind Ausführungsformen erfindungsgemäßer kapazitiv gekoppelter SOH Modulatoren.

Ausführungsform **300A** weist einen ähnlichen Aufbau wie Ausführungsform **200C** in Subfigur **2C** in Figur **2-2** auf bzw. ist demgemäß lateral gebildet. Darin ist über einem Substrat **160,** welches zumindest teilweise über einer Halbleiterschicht **180,** eingerichtet um eine mechanische Stabilisierung des Substrats **160** zu gewährleisten, eine laterale Struktur angeordnet. Diese laterale Struktur ist ähnlich der Ausführungsform **200C** gebildet und weist zumindest einen mindestens zweiteiligen Schlitzwellenleiterkern **121,** mindestens einen ersten Mantelbereich **130,** mindestens einen zweiten Mantelbereich **140** sowie mindestens zwei elektrisch leitfähige Leitungsbereiche **150** auf bzw. ist daraus gebildet. Der Zwischenraum im Schlitzwellenleiterkern **121** ist zumindest teilweise mittels des ersten Mantelbereichs **130** gefüllt. An den Schlitzwellenleiterkern **121** sind direkt daran angrenzend lateral bzw. seitwärts zu beiden Seiten jeweils ein zweiter Mantelbereich **140** angeordnet. Wiederum zu beiden Seiten der beiden zweiten Mantelbereiche **140** ist jeweils lateral ein elektrisch leitfähiger Leitungsbereich **150** angeordnet. Der erste Mantelbereich **130,** der zumindest teilweise den Zwischenraum im Schlitzwellenleiterkern **121** füllt erstreckt sich zusätzlich zumindest teilweise über der lateralen Struktur, gebildet aus zumindest dem Schlitzwellenleiterkern **121,** den beiden zweiten Mantelbereichen **140** und den beiden elektrisch leitfähigen Leitungsbereichen **150.**

Mit anderen Worten, eine Ausführungsform **300A** umfasst einen Schlitzwellenleiter **121** aus Silizium, der zumindest teilweise in ein erstes elektro-optisches Mantelmaterial **130** eingebettet ist, sowie zumindest ein oder mehrere zweite dielektrische Mantelbereiche **140** und elektrisch leitfähige Leitungsbereiche **150.** Das dielektrische Material des zweiten Mantelbereichs bzw. der zweiten Mantelbereiche **140** schließt direkt an die elektrisch leitfähige Leitungsbereiche **150** und den Schlitzwellenleiterkern **121** an. Das Bauelement kann auf einer standardisierten SOI-Plattform mit 3$\mu$m dickem vergrabenen Oxid bzw. Substrat **160** und Silizium-Basiswafer bzw. Halbleiterschicht **180** mit gängigen bzw. konventionellen lateralen Strukturierungsverfahren realisiert werden, wobei diese Strukturierungsverfahren zumindest ein Verfahren aus der Gruppe von Strukturierungsverfahren aufweist, und wobei diese Gruppe umfasst: Optische Lithografie-Verfahren wie Fotolithografie und UV-Lithografie aber auch Elektronenstrahllithografie, sowie Trockenätzprozesse oder nasschemische Ätzprozesse.

Ein Querschnitt durch einer solchen erfindungsgemäßen Ausführungsform **300A** eines kapazitiv gekoppelten SOH-Phasenmodulators ist schematisch in Subfigur **3A** dargestellt. Die nachfolgend angegebenen Maße beziehen sich exemplarisch auf eine optische Vakuumwellenlänge von ca. 1550 nm und ein Höhe des Silizium-Wellenleiters von ungefähr $h_{silicon}$ = 220nm. Die Maße haben lediglich beispielhaften Charakter für eine exemplarische Ausführungsform gemäß den zuvor genannten Maßen und sind für andere bzw. davon abweichende Wellenlängen bzw. Wellenleiter-Dicken dementsprechend anzupassen. Der optische Wellenleiterkern wird durch einen Schlitzwellenleiterkern **121** aus z.B. Silizium gebildet, die einzelnen Streifen haben bevorzugt eine Breite $w_{rail}$ bspw. in einem Bereich von ungefähr 100 nm bis zu ungefähr 500 nm, besonders bevorzugt liegt bspw. $w_{rail}$ in einem Bereich von ungefähr 150 nm bis zu ungefähr 350 nm; die Breite des Schlitzes $w_{slot}$ liegt bevorzugt bspw. in einem Bereich von ungefähr 30 nm bis zu ungefähr 400 nm, besonders bevorzugt liegt $w_{slot}$ bspw. in einem Bereich von ungefähr 60 nm bis zu ungefähr 250 nm. Direkt daran anschließend wird das dielektrische Material des zweiten Mantelbereichs **140** mit hoher elektrischer Brechzahl deponiert bzw. abgeschieden, mit einer Breite $w_{dielectric}$, die bevorzugt bspw. in einem Bereich von ungefähr 0.2 $\mu$m bis zu ungefähr 5 $\mu$m liegt, besonders bevorzugt bspw. in einem Bereich von ungefähr 0.5 $\mu$m bis zu ungefähr 3 $\mu$m liegt, und einer Höhe $h_{dielectric}$, die bspw. bevorzugt in einem Bereich von 50 nm bis zu ungefähr 500 nm, liegt. Ein typisches Material, das gut als Dünnfilm prozessiert werden kann, ist Titandioxid. Andere Möglichkeiten sind unter anderem Hafniumoxid, Bariumtitanat oder Barium-Strontiumtitanat. Diese Materialien weisen typischerweise eine relative Dielektrizitätszahl $\epsilon_r$ bspw. in einem Bereich von ungefähr 50 bis zu ungefähr 500 in einem Frequenzbereich bis zu ungefähr 100 GHz und einen optischen Brechungsindex $n$ bspw. kleiner oder gleich, $n = 2.5$ bei 1550 nm auf. An das dielektrische Material des zweiten Mantelbereichs schließen Metallelektroden bzw. elektrisch leitfähige Leitungsbereiche **150** an, diese haben bspw. eine Höhe $h_{metal}$ von mindestens = 50 nm und sind im vorliegenden Ausführungsbeispiel als koplanare, differenzielle Wanderwellenelektrode mit einem Wellenwiderstand von 50 Ohm ausgelegt. Als oberes Mantelmaterial des ersten Mantelbereichs **130** für einen solchen optischen Wellenleiter wird bspw. ein elektro-optisches Material verwendet mit bspw. einer relativen elektrischen Dielektrizitätszahl $\epsilon_r$, die typischerweise bspw. in einem Bereich von ungefähr 5 bis zu ungefähr 10 liegt, einem typischen optischen Brechungsindex $n$ in einem Bereich von ungefähr 1.5 bis zu ungefähr 2.0 und einem elektro-optischen Koeffizienten $r_{33}$ von bevorzugt mehr als $r_{33} = 30$ pm/V, besonders bevorzugt mehr als $r_{33} = 80$ pm/V.

Ein Ausführungsbeispiel **300B** für den kapazitiv gekoppelten Silicon-Organic Hybrid Modulatoren ist die Implementation als Phasenmodulator, basierend auf einem Silicon-on-Insulator-(bzw. SOI-)Schlitzwellenleiter, siehe Subfigur **3B** in Figur **3-1.** Standard SOI-Streifenwellenleiter (beispielhafte Breite $w_{strip} = 500$ nm, beispielhafte Höhe $h_{silicon}$ = 220nm) werden als Verbindungswellenleiter **190** zur optische Anbindung des Modulationsbereiches **201** verwendet. Der Modulationsbereich **201** wird durch eine kapazitiv gekoppelte SOH-Struktur realisiert. Dazu wird ein Streifenwellenleiter **190** in einer Strip-to-Slot Kopplerstruktur **191** an einen SOH Schlitzwellenleiter **121** angebunden.

Subfigur **3B** zeigt eine schematische Querschnittsansicht eines Phasenmodulators gemäß einer Ausführungsform **300B** basierend auf Ausführungsform **300A**. Solche SOI Streifenwellenleiter **190** werden als Zugangswellenleiter verwendet. In Strip-to-Slot Konvertern **191** wird das optische Feld in einen Schlitzwellenleiter eingekoppelt. Das dielektrische Material des zweiten Mantelbereichs **140** mit hoher Permittivität schließt lateral sowohl an den Wellenleiter als auch an die Metallelektroden bzw. elektrisch leitfähigen Leitungsbereich **150** an. Dedizierte Polungselektroden **153** erlauben es, die beiden Teile des Schlitzwellenleiterkerns **121** direkt zu kontaktieren und mit vergleichsweise niedrigen Gleichspannungen eine Polung des elektro-optischen Materials des ersten Mantelbereichs **130** zu erreichen.

Fig. **3-2** zeigt in Subfiguren **3C** und **3D** zwei schematische Felddiagramme gemäß den Ausführungsformen **300A** und **300B** in Subfiguren **3A** und **3B**. Die Bezugszeichen hierin: **121, 130, 140** und **160** in beiden Subfiguren **3A** und **3B** beziehen sich im Folgenden auf die Bereiche bzw. deren physikalischen Eigenschaften gemäß der Ausführungsförmen **300A** und **300B**, d.h. Substrat **160,** erster Mantelbereich **130,** zweiter Mantelbereich **140** und Schlitzwellenleiterkern **121.** Darin wird in Darstellung **300C** von Subfigur **3C** eine simulierte $E_x$ Komponente des optischen Feldes im Schlitzwellenleiterkern **121** gezeigt, dargestellt mittels Isolinien. Ein signifikanter Anteil des Feldes ist im Schlitz konzentriert. In Darstellung **300D** von Subfigur 3D wird eine simulierte $E_x$ Komponente des elektrischen Modulationsfeldes bei 40 GHz gezeigt, dargestellt mittels Isolinien. Das dielektrische Material des zweiten Mantelbereichs **140** mit hoher elektrischer Permittivität erhöht das Feld im Schlitz durch ein Unstetigkeit an der dem Schlitzwellenleiterkern **121** zugewandten Oberfläche und sorgt für einen hohen Überlapp mit dem optischen Modus im nichtlinearen Material. Beide Felder sind stark im Schlitz konzentriert und haben dadurch einen großen Überlapp mit dem elektro-optischen Mantelmaterial des ersten Mantelbereichs **130**. Simulationen ergeben einen Feldinteraktionsfaktor von typischerweise $\Gamma = 0.15$ bis 0.25. Dieser ist vergleichbar mit dem konventioneller SOH Modulatoren (vgl. [5]). Während der Fabrikation müssen organische elektro-optische Materialien durch einen sog. Polungsprozess aktiviert werden (vgl. [5]). Um das dafür erforderliche elektrische Feld zu erzeugen, wird eine Gleichspannung über Elektroden des Phasenmodulators angelegt. In Ausführungsform **300B** wird die Spannung an dedizierte Polungselektroden **153** angelegt. Diese Polungsele'ktroden **153** sind nahe bei dem Strip-to-Slot Konverter **191** zumindest an einen Teil des Schlitzwellenleiterkerns **121** elektrisch leitfähig angebunden, ohne mit dem optischen oder elektrischen Feld zu interagieren, vgl. Subfigur **3B** in Figur **3-1.** Dadurch muss das Polungsfeld nicht über dem dielektrischen Material des zweiten Mantelbereichs **140** angelegt werden und die notwendige Polungsspannung kann deutlich reduziert werden. Da für die Polung die Feldstärke $E_{pol}$ entscheidend ist, welche über $E_{pol} = U_{pol}/d$ sowohl von der angelegten Spannung $U_{pol}$ als auch dem Abstand d zwischen den Elektroden abhängt, kann bei Nutzung der Polungselektroden **153** und dem schwach leitfähigen Schlitzwellenleiter **121** der Abstand d signifikant verringert werden, so dass beispielsweise anstelle einiger 100 V nur einige 10 V Polungsspannung notwendig sind. Der Wellenleiterkern **121** aus Silizium ist dafür leicht elektrisch leitfähig, mit einer sehr geringen Dotierung, die zu keinen signifikanten optischen Verlusten führt. Alternativ kann der Schlitzwellenleiterkern **121** über die weiter entfernten Metallelektroden bzw. elektrisch leitfähige Leitungsbereiche **150** und einer entsprechend erhöhten Spannung gepolt werden. Da für die Polung einmalig bei der Fabrikation diese Spannung benötigt wird, hat dies keinen Einfluss auf die Effizienz des Bauteiles.

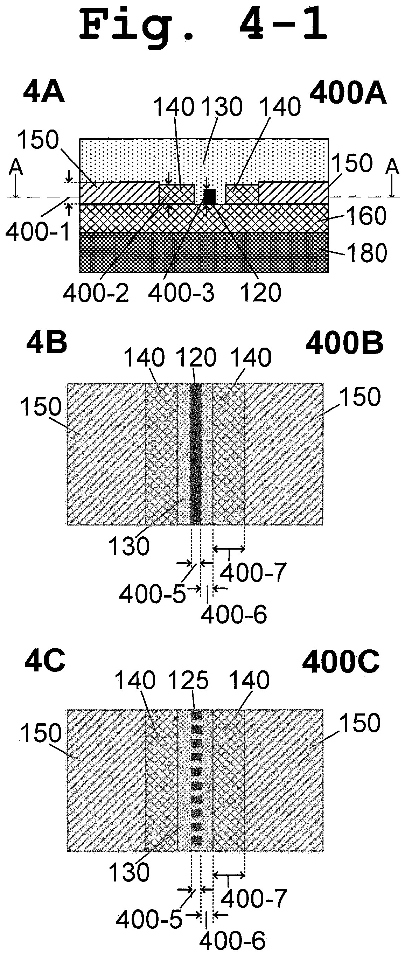

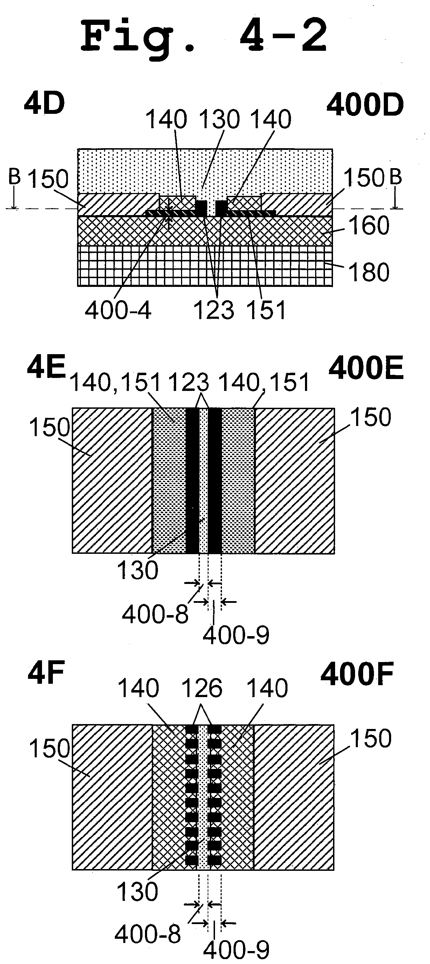

**Fig. 4-1** zeigt in Subfiguren **4A** bis **4C** drei schematische Querschnittsansichten weiterer Ausführungsformen erfindungsgemäßer Vorrichtungen bzw. weitere Ausführungsbeispiele **400A** bzw. **400B** und **400C** eines kapazitiv gekoppelten SOH Modulators auf der SOI Plattform. Subfigur **4A** zeigt einen Querschnitt einer Ausführungsform **400A,** die bspw. auf der zuvor beschriebenen Ausführungsform **200A** aus Subfigur **2A** in Figur **2-2** basiert, wobei diese Anordnung gemäß **200A** auf einen Silizium-Basiswafer bzw. Halbleiterschicht **180** zur Stabilisierung angeordnet ist. Die Ausführungsform **400A** sowie **400B** eines kapazitiv gekoppelten SOH Modulators basiert auf einem Streifenwellenleiterkern. Subfigur **4B** zeigt eine Draufsicht auf den Querschnitt der Ausführungsform **400A** in Subfigur **4A,** gemäß der Schnittrichtung **A-A** in Subfigur **4A,** eines Phasenmodulators mit Streifenwellenleiter und kapazitiv gekoppelten Elektroden mit Streifenwellenleiterkern **120.** Anstelle des Schlitzwellenleiters in Subfigur **3A** der Fig. **3-1** wird ein schmaler Streifenwellenleiter **120** eingesetzt, siehe Subfiguren **4A** und **4B.** Der Streifenwellenleiterkern **120,** der zumindest teilweise aus Silizium gebildet ist bzw. aufweist, wird als Wellenleiterkern genutzt. Das ihn zumindest teilweise umgebende elektro-optische Material des ersten Mantelbereichs **130** bildet einen Wellenleitermantel. Das dielektrische Material des zweiten Mantelbereichs **140** mit hoher Permittivität in einem zuvor definierten Abstand **400-6,** hierin auch mit $w_{gap}$ bezeichnet, zum Wellenleiterkern, konzentriert das elektrische Modulationsfeld, welches durch die Metallelektroden bzw. die elektrisch leitfähigen Leitungsbereiche **150** eingeprägt wird, in der Umgebung des Wellenleiterkerns **120,** ohne dabei die optische Welle zu stören. Das heißt die Metallelektroden sind weit genug vom Wellenleiter entfernt, so dass die Lichtwelle, welche im Wellenleiter geführt ist, nicht wesentlich mit den leitfähigen Metallelektroden wechselwirkt, was zu einer Dämpfung der Lichtwelle führen würde. Die Breite **400-5** (hierin auch als $w_{strip}$ bezeichnet) liegt bspw. bevorzugt in einem Bereich von ungefähr 100 nm bis zu ungefähr 500 nm, besonders bevorzugt liegt bspw. $w_{strip}$ bzw. **400-5** in einem Bereich von ungefähr 200 nm bis zu ungefähr 350 nm. Auch hier hat das optische Feld einen großen Überlapp mit dem elektro-optischen Mantelmaterial des ersten Mantelbereichs **130.** Der Überlapp ist bevorzugt größer 10 % besonders bevorzugt größer 20 % und ganz besonders bevorzugt größer 40 %. Das dielektrische Material mit hoher elektrischer Brechzahl des zweiten Mantelbereichs **140,** welches zumindest eines aus der Gruppe von Materialien aufweist bzw. zumindest teilweise daraus gebildet ist, wobei die Gruppe beispielsweise umfasst: Bariumtitanat, Barium-Strontiumtitanat oder Titandioxid; beginnt in einem definierten Abstand **400-6** zum Wellenleiterkern, so dass das elektrooptische Material des ersten Mantelbereichs **130** den Wellenleitermantel bildet und das elektrische und optische Feld in diesem Bereich konzentriert ist. Der Abstand $w_{gap}$ bzw. **400-6** zwischen Wellenleiterkern **120** und dielektrischem Material des zweiten Mantelbereichs **140** liegt bspw. bevorzugt in einem Bereich von ungefähr 50 nm bis zu ungefähr 1000 nm, besonders bevorzugt bspw. in einem Bereich von ungefähr 100 nm bis zu ungefähr 500 nm. Die Metallelektroden bzw. elektrisch leitfähigen Leitungsbereiche **150** liegen bspw. im Abstand von bevorzugt $w_{gap} + W_{dielectricum} > 1 \ \mu m$ zum Wellenleiterkern platziert.

In Subfigur **4C** ist eine Draufsicht auf eine weitere Ausführungsform **400C** eines kapazitiv gekoppelten SOH Modulators mit einem sogenannten Sub-Wavelength-Grating-Waveguides **125** dargestellt, d.h. mit anderen Worten der Schlitzwellenleiterkern **125** ist als Sub-Wavelength-Grating-Waveguide realisiert. Der Wellenleiterkern kann z.B. auch als Sub-Wavelength Grating (Abk.: SWG) Wellenleiter **125** ausgeführt werden, siehe Subfigur **4C** für eine Aufsicht. In diesem Fall besteht der Wellenleiterkern aus regelmäßig angeordneten Einzelelementen mit Abständen und Abmessungen die deutlich unterhalb der Wellenlänge des optischen Lichtes in den gewählten Materialien liegt. Bei einer Wellenlänge des optischen Lichtes von 1550 nm werden bevorzugt periodische oder quasi-periodische Strukturen mit Perioden von kleiner als 300 nm verwendet.

**Fig. 4-2** zeigt in Subfiguren **4D** bis **4F** drei schematische Querschnittsansichten weiterer Ausführungsformen erfindungsgemäßer Vorrichtungen bzw. weitere Ausführungsbeispiele **400D** bzw. **400E** und **400F,** wobei diese auf einen Silizium-Basiswafer bzw. Halbleiterschicht **180** zur Stabilisierung angeordnet ist. Subfigur **4E** zeigt eine Draufsicht auf einen Querschnitt der Ausführungsform **400D** gemäß Schnittrichtung **B-B** in Subfigur **4D.** Subfigur **4D** und **4E** stellen ein Ausführungsbeispiel eines kapazitiv gekoppelten SOH Modulators mit Schlitzwellenleiter **123,** welcher zumindest teilweise aus Silizium gebildet ist bzw. zumindest teilweise aufweist, welcher mit dünnen, transparenten leitfähigen Bereichen **151** an die Elektroden **150** angekoppelt bzw. verbunden wird. Bei niedrigen Frequenzen fällt die angelegte Spannung vollständig über dem Schlitz ab, der mit elektro-optischen Material **130** gefüllt ist. Bei höheren Frequenzen dominiert die kapazitive Kopplung durch das dielektrische Material **140,** das zwischen Schlitzwellenleiter **123** und Elektroden auf den leitfähigen Bereichen **151** angeordnet ist. Eine weitere Ausführungsform eines kapazitiv gekoppelten SOH Modulators umfasst einen Schlitzwellenleiter **123,** ähnlich bzw. auf der Ausführungsform **300A** basierend in Subfigur **3A** in Fig. **3-1** gezeigten. Zusätzlich wird der Wellenleiterkern **123** mit einem dünnen transparenten leitfähigen Bereich **151** aus Silizium direkt mit den Elektroden **150** elektrisch leitfähig verbunden, siehe Subfiguren **4D** und **4E.** Die Dicke **400-4** bzw. $h_{slab}$ des elektrisch leitfähigen Bereiches **151** liegt bspw. bevorzugt in einem Bereich von ungefähr 10 nm bis zu ungefähr 200 nm, besonders bevorzugt in einem Bereich von ungefähr 20 nm bis zu ungefähr 80 nm. Durch diese resistive Kopplung fällt bei geringen Frequenzen die angelegte Spannung vollständig über dem Schlitz ab, welcher zumindest teilweise mit elektro-optischen Material des ersten Mantelbereichs **130** gefüllt ist. Bei höheren Frequenzen dominiert die kapazitive Kopplung durch das dielektrische Material des zweiten Mantelbereichs **140,** welches zwischen Wellenleiterkern **123** und Elektroden bzw. den elektrisch leitfähigen Leitungsbereichen **150** auf dem transparenten, elektrisch leitfähigen Bereich **151** abgeschieden wird. Da durch die resistive Kopplung auch bei niedrigen Frequenzen die angelegte Spannung hauptsächlich über dem Schlitz abfällt, kann die Erhöhung des elektrischen Feldes über den gesamten Frequenzbereich bis zur Gleichspannung aufrechterhalten werden, auch wenn das elektro-optische Material des ersten Mantelbereichs **130** im Schlitz des Wellenleiterkerns **123** eine geringe elektrische Leitfähigkeit besitzt. Dazu ist es insbesondere nicht notwendig, die transparenten, elektrisch leitfähigen Bereiche **151** mit einer hohen Dotierung zu versehen, die zu optischen Verlusten führt. Weiterhin kann durch die resistive Ankopplung des Schlitzwellenleiters **123** eine effiziente Polung des im Schlitz des Schlitzwellenleiters **123** befindlichen elektro-optischen Materials des ersten Mantelbereichs **130** mit kleinen angelegten Spannungen erreicht werden. Ausführungsbeispiel 400E weist der Schlitz im Schlitzwellenleiter **123** eine zuvor bestimmte Breite **400-8** bzw. $w_{slot}$ auf, der bspw. bevorzugt in einem Bereich von ungefähr 50 nm bis zu ungefähr 300 nm liegt, bzw. bspw. besonders bevorzugt in einem Bereich von ungefähr 80 nm bis zu ungefähr 200 nm liegt. Ausführungsbeispiel 400E weist der Schlitzwellenleiter **123** eine zuvor bestimmte Breite **400-9** bzw. $w_{rail}$ auf, der bspw. bevorzugt in einem Bereich von ungefähr 80 nm bis zu ungefähr 400 liegt, bzw. bspw. besonders bevorzugt in einem Bereich von ungefähr 140 bis zu ungefähr 280 liegt.

Subfigur **4F** zeigt eine Draufsicht eines Ausführungsbeispiel **400F** eines kapazitiv gekoppelten SOH Modulators mit einem als Schlitzwellenleiter ausgeführten sub-wavelength grating Wellenleiter **126.** Weiterhin kann der Schlitzwellenleiter **126,** gemäß Subfigur **3A** aus Fig. **3-1** auch als "sub-wavelength grating" Struktur ausgeführt werden, siehe Subfigur **4F** für eine Draufsicht. Der geschlitzte SWG Wellenleiterkern **126** erlaubt eine starke Interaktion eines darin geführten Lichtes mit dem elektro-optischen Material des ersten Mantelbereichs **130.** Ausführungsbeispiel 400F weist der Schlitz im Schlitzwellenleiter **126** eine zuvor bestimmte Breite **400-8** bzw. $w_{slot}$ auf, der bspw. bevorzugt in einem Bereich von ungefähr 50 nm bis zu ungefähr 300 nm liegt, bzw. bspw. besonders bevorzugt in einem Bereich von ungefähr 80 nm bis zu ungefähr 200 nm liegt. Ausführungsbeispiel **400F** weist der Schlitzwellenleiter **126** eine zuvor bestimmte Breite **400-9** bzw. $w_{rail}$ auf, der bspw. bevorzugt in einem Bereich von ungefähr 80 nm bis zu ungefähr 400 nm liegt, bzw. bspw. besonders bevorzugt in einem Bereich von ungefähr 140 nm bis zu ungefähr 280 nm liegt.

**Literaturverzeichnis**

[1] ......C. Koos, J. Leuthold, and W. Freude, "Elektro-optisches Hochindexkontrast-Wellenleiter-Bauelement", DE 10 2006 045 102 B4, 06-Jan-2011.

[2] ......S. Suzuki, "Electro-optical element," WO 2011 025 051 A1, Mar-2011.

......C. Koos, J. Leuthold, W. Freude, and J. M. Brosi, "Electro-optical high index contrast waveguide device," US 8 081 851 B2, 20-Dec-2011.

......C. Koos, J. Brosi, M. Waldow, W. Freude, and J. Leuthold, "Silicon-on-insulator modulators for next-generation 100 Gbit/s-ethernet," in 33rd European Conference and Exhibition of Optical Communication (ECOC), Berlin, Germany, 2007.

......J. Leuthold et al., "Silicon organic hybrid technology - A platform for practical nonlinear optics," Proc. IEEE, vol. 97, no. 7, pp. 1304-1316, Jul. 2009.

......J. Leuthold et al., "Silicon-organic hybrid electro-optical devices," IEEE J. Sel. Topics Quantum Electron., vol. 19, no. 6, pp. 114-126, Nov. 2013.

[6a] .....D. Korn et al., "Silicon-organic hybrid (SOH) IQ modulator for 16 QAM at 112 Gbit/s", 2013 CONFERENCE ON LASERS & ELECTRO-OPTICS EUROPE & INTERNATIONAL QUANTUM ELECTRONICS CONFERENCE CLEO EUROPE/IQEC, IEEE, Mai 2013, Seite 1.

[6b] .....W. Freude et al., "100 Gbit/s Electro-Optic Modulator and 56 Gbit/s Wavelength Converter for DQPSK Data in Silicon-Organic Hybrid (SOH) Technology", PHOTONICS SO-CIETY SUMMER TOPICAL MEETING SERIES, 2010, IEEE, PISCA-TAWAY, NJ, USA, 19. Juli 2010, Seiten 96-97.

[6c] .....C. Koos et al., "Femtojoule Modulation and Frequency Comb Generation in Silicon-Organic Hybrid(SOH) Devices", 2014 16TH INTERNATIONAL CONFERENCE ON TRANSPARENT OPTICAL NETWORKS (ICTON), IEEE, 6. Juli 2014, Seiten 1-4.

......S. Dogru and N. Dagli, "Ultra-Low Voltage Wide Bandwidth Electro-optic Modulators," in *CLEO: Science and Innovations,* 2014, p. STu1G.1.

......N. Dagli, "Sub-volt drive 100 GHz bandwidth electro-optic modulator," WO 2014 201 269 A1, 18-Dec-2014.

......S. Yokoyama, "Electro-optic element," US 2016 0 313 579 A1, Oct-2016.

.....A. Tsarev, et *al.,* "Polymer electro-optic modulator efficiency enhancement by the high permittivity dielectric strips," *Photonics and Nanostructures - Fundamentals and Applications,* Apr. 2017.

.....R. Palmer et al., "Low-loss silicon strip-to-slot mode converters," *IEEE Photon. J.,* vol. 5, no. 1, pp. 2200409-2200409, Feb. 2013.

**Bezugszeichenliste**

**100A-F** .Ausführungsformen erfindungsgemäßer Vorrichtungen.

**110** ....Optischer Wellenleiter mit zumindest teilweise elektro-optischen Eigenschaften.

**120** ...Einteiliger Wellenleiterkern bevorzugt aus Material mit hohem Brechungsindex.

**121** ...Zweigeteilter Wellenleiterkern (Schlitzwellenleiter), bevorzugt aus Material mit hohem Brechungsindex.

**122** ....Ein- oder mehrteiliger Wellenleiterkern, bevorzugt aus Material mit hohem Brechungsindex, der direkt an den zweiten Mantelbereich des Wellenleiters anschließt.

**123** ....Zweigeteilter Wellenleiterkern (Schlitzwellenleiter), bevorzugt aus Material mit hohem Brechungsindex, der über transparente bzw. transluzente, elektrisch leitfähige Leitungsbereiche an mindestens eine Elektrode angebunden ist.

**124** ....Wellenleiterkern, der über einen oder mehrere transparente bzw. transluzente, elektrisch leitfähige Leitungsbereiche an mindestens eine Elektrode angebunden ist.

**125** ....Streifenwellenleiter mit einem Wellenleiterkern in sub-wavelength grating Konfiguration, bevorzugt aus Material mit hohem Brechungsindex.

**126** ....Zweigeteilter Wellenleiterkern (Schlitzwellenleiter), in sub-wavelength grating Konfiguration, bevorzugt aus Material mit hohem Brechungsindex.

**130** ....Erster Mantelbereich des Wellenleiters der zumindest teilweise elektro-optische Eigenschaften besitzt.

**140** ....Zweiter Mantelbereich, bestehend aus dielektrischem Material mit hoher Permittivität

**150** ....Elektrisch leitfähige Leitungsbereiche, bevorzugt als Metallelektroden realisiert.

**151** ....Transparente, elektrisch leitfähige Leitungsbereiche.

**152** ....Elektrisch leitfähige Leitungsbereiche, bevorzugt als Metallelektroden realisiert.

**153** ...Elektrisch leitfähige Leitungsbereiche, elektrisch leitfähig verbunden mit einem Teil des Wellenleiterkerns, um eine Polungsspannung anzulegen. (Polungselektrode).

**160** ....Unterer Mantelschicht des Wellenleiters, bevorzugt niedrigbrechendes Material auf einem planaren Halbleitersubstrat.

**170** ....Eine oder mehrere Deckschichten.

**180** ....Halbleiterschicht zur mechanischen Stabilisierung des Substrats.

**190** ....Streifenwellenleiter, als Transportwellenleiter zur Ankopplung des Modulators.

**191** ....Konverterstruktur um den optischen Modus des Streifenwellenleiters in den optischen Modus des Schlitzwellenleiters zu wandeln.

**200A-E** .Ausführungsformen kapazitiv gekoppelter Phasenmodulatoren basierend auf einem Schlitzwellenleiter.

**201** ....Modulationsbereich des Phasenmodulators.

**300A/B** .Ausführungsformen kapazitiv gekoppelter SOH-Phasenmodulatoren basierend auf einem Schlitzwellenleiter.

**300C/D** .Graphiken von Simulationen der $E_x$ Komponente des optischen Feldes im Schlitzwellenleiterkern 121 und der $E_x$ Komponente des elektrischen Modulationsfeld bei 40 GHz.

**400A-F** .weitere Ausführungsformen kapazitiv gekoppelter SOH-Modulatoren.

**400-1** ..Höhe $h_{metal}$ des elektrisch leitfähigen Leitungsbereichs bzw. Metallelektroden **150.**

**400-2** ..Höhe $h_{dielectric}$ des zweiten Mantelbereichs **140,** welcher zumindest ein dielektrisches Material aufweist bzw. daraus gebildet ist.

**400-3** ..Höhe $h_{silicon}$ des Wellenleiterkerns **120,** der zumindest teilweise aus Silizium gebildet ist bzw. aufweist.

**400-4** ..Höhe $h_{slab}$ des transparenten, elektrisch leitfähigen Bereichs **151,** der zumindest teilweise eine elektrisch leitfähige Verbindung zwischen einem der beiden elektrisch leitfähigen Leitungsbereiche **150** und dem Schlitzwellenleiterkern **123** bereitstellt.

**400-5** ..Breite $w_{strip}$ des Wellenleiterkerns **120** bzw. **125,** welcher zumindest teilweise Silizium aufweist bzw. daraus gebildet ist.

**400-6** ..Breite $w_{gap}$ des ersten Mantelbereichs **130,** welcher zumindest teilweise ein elektro-optisches Material aufweist bzw. daraus gebildet ist.

**400-7** ..Breite $w_{dielectric}$ des zweiten Mantelbereichs **140,** welcher zumindest teilweise ein dielektrisches Material aufweist bzw. daraus gebildet ist.

**400-8** ..Breite $w_{slot}$ des Schlitzwellenleiterkerns **123** bzw. **126,** wobei der Zwischenraum dieses Schlitzwellenleiterkerns **123** bzw. **126** zumindest teilweise mittels des ersten Mantelbereichs **130** gefüllt ist.

**400-9** ..Breite $w_{rail}$ des Schlitzwellenleiterkerns **123** bzw. **126,**

**Patentansprüche**

1. Wellenleiter-Bauelement **(100A-F, 200A-E, 300A-B, 400A-F),** aufweisend:

   **1.1.** einen Wellenleiter **(110),** der zumindest teilweise gegenüber Licht transparent bzw. transluzent ist und derart eingerichtet ist, dass Licht zumindest teilweise durch den Wellenleiter hindurch leitbar ist, aufweisend:

   **1.1.1.** einen Wellenleiterkern **(120, 121, 122, 123, 124),** wobei der Wellenleiterkern **(120, 121, 122, 123, 124)** aus einem Element oder aus mehreren, räumlich voneinander getrennten Elementen gebildet ist, die zumindest ein Wellenleiterkernmaterial aufweisen oder daraus gebildet sind;
   **1.1.2.** einen ersten Mantelbereich **(130),** der mindestens ein elektro-optisches Material aufweist oder daraus gebildet ist, wobei der erste Mantelbereich **(130)** zumindest teilweise mit im Wellenleiter **(110)** geleitetem Licht in Wechselwirkung steht, und wobei der erste Mantelbereich **(130)** zumindest teilweise um das eine Element oder die mehreren Elemente des Wellenleiterkerns **(120, 121, 122, 123, 124)** angeordnet ist; und
   **1.1.3.** einen zweiten Mantelbereich **(140),** der mindestens ein dielektrisches Material aufweist oder daraus gebildet ist, wobei der zweite Mantelbereich **(140)** zumindest teilweise um den ersten Mantelbereich **(130)** und/oder den Wellenleiterkern **(120, 121, 122, 123, 124)** angeordnet ist;

**1.2.** mindestens zwei Leitungsbereiche **(150, 152),** die zumindest teilweise elektrisch leitfähig sind,

**1.2.1.** wobei zwischen den Leitungsbereichen **(150, 152)** ein elektrisches Modulationssignal angelegt ist,
**1.2.2.** wobei die Leitungsbereiche **(150, 152)** zumindest teilweise derart entlang des optischen Wellenleiters **(110)** angeordnet sind, dass sich die Leitungsbereiche **(150, 152)** gegenüberliegen und der Wellenleiter **(110)** zumindest teilweise zwischen den Leitungsbereichen angeordnet ist;
**1.2.3.** wobei das Modulationssignal ein elektrisches Feld bildet, dessen Feldlinien zumindest teilweise sowohl den zweiten Mantelbereich **(140)** als auch den ersten Mantelbereich **(130)** durchdringen, **dadurch gekennzeichnet, dass**
**1.2.4.** das dielektrische Material des zweiten Mantelbereiches **(140)** im Frequenzbereich des Modulationssignals eine höhere elektrische Brechzahl als das elektro-optische Material des ersten Mantelbereichs **(130)** aufweist.

2. Wellenleiter-Bauelement **(100A-F, 200A-E, 300A-B, 400A-F)** gemäß Anspruch 1, **dadurch gekennzeichnet, dass die** elektrische Brechzahl des dielektrische Materials im zweiten Mantelbereich **(140)** bei einer Frequenz des Modulationssignals von 10 GHz um mehr als einen Faktor 1,8 über der elektrischen Brechzahl des elektro-optischen Materials des ersten Mantelbereichs **(130)** liegt.

3. Wellenleiter-Bauelement **(100A-F, 200A-E, 300A-B, 400A-F)** gemäß Anspruch 1, **dadurch gekennzeichnet, dass** das dielektrische Material des zweiten Mantelbereiches **(140)** eine elektrische Brechzahl von mindestens 3.5, 4.5, 8, 10, 15, 20 oder 25 in einem Frequenzbereich eines Modulationssignals zwischen 5 GHz und 40 GHz aufweist.

4. Wellenleiter-Bauelement **(100A-F, 200A-E, 300A-B, 400A-F)** gemäß einem der zuvor genannten Ansprüche, **dadurch gekennzeichnet, dass** die elektrische Brechzahl des Wellenleiterkerns **(120, 121, 122, 123, 124)** höher ist als die elektrische Brechzahl des ersten Mantelbereiches **(130).**

5. Wellenleiter-Bauelement **(100A-F, 200A-E, 300A-B, 400A-F)** gemäß einem der zuvor genannten Ansprüche, **dadurch gekennzeichnet, dass** die elektrische Brechzahl des Wellenleiterkerns **(120, 121, 122, 123, 124)** mindestens 3 beträgt.

6. Wellenleiter-Bauelement **(100A-F, 200A-E, 300A-B, 400A-F)** gemäß einem der zuvor genannten Ansprüche, **dadurch gekennzeichnet, dass** die elektrische Brechzahl des elektro-optischen Materials im ersten Mantelbereich **(130)** höchstens 9 beträgt.

7. Wellenleiter-Bauelement **(100A-F, 200A-E, 300A-B, 400A-F)** gemäß einem der zuvor genannten Ansprüche, **dadurch gekennzeichnet, dass** das Wellenleiter-Bauelement **(100A-F, 200A-E, 300A-B, 400A-F)** eine laterale Strukturierung aufweist, bei der zunächst der Wellenleiterkern **(120, 121, 122, 123, 124),** die Leitungsbereiche **(150, 152)** und zumindest das dielektrische Material des zweiten Mantelbereiches **(140)** in einer planaren Anordnung gebildet sind, auf welche dann elektro-optisch aktives Material aufgebracht wird.

8. Wellenleiter-Bauelement **(100A-F, 200A-E, 300A-B, 400A-F)** gemäß einem der zuvor genannten Ansprüche, **dadurch gekennzeichnet, dass** der Wellenleiterkern **(120, 121, 122, 123, 124),** der erste Mantelbereich **(130),** der zweite Mantelbereich **(140)** und die Leitungsbereiche **(150, 151)** zumindest teilweise nebeneinander auf einem gemeinsamen Substrat **(160)** angeordnet.

9. Wellenleiter-Bauelement **(100A-F, 200A-E, 300A-B, 400A-F)** gemäß einem der zuvor genannten Ansprüche, **dadurch gekennzeichnet, dass** der Wellenleiterkern **(120, 121, 122, 123, 124)** zumindest teilweise elektro-optische Eigenschaften aufweist.

10. Wellenleiter-Bauelement **(100A-F, 200A-E, 300A-B, 400A-F)** gemäß einem der zuvor genannten Ansprüche, **dadurch gekennzeichnet, dass** der Wellenleiterkern **(120)** als Schlitzwellenleiter **(121, 122, 123)** gebildet ist.

11. Wellenleiter-Bauelement **(100A-F, 2.00A-E, 300A-B, 400A-F)** gemäß Anspruch 10, **dadurch gekennzeichnet, dass** die Differenz zwischen der optischen Brechzahl des Wellenleiterkerns und der des ersten Mantelbereichs im Schlitzwellenleiter **(121, 122, 123)** mehr als 0,5 oder mehr als 1,0 oder mehr als 1,5 beträgt.

12. Wellenleiter-Bauelement (100A-F, 200A-E, 300A-B, 400A-F) gemäß einem der zuvor genannten Ansprüche, **dadurch gekennzeichnet, dass** der zweite Mantelbereich (140) zumindest teilweise direkt an die elektrisch leitfähigen Leitungsbereiche (150) angrenzt.

13. Wellenleiter-Bauelement (100A-F, 200A-E, 300A-B, 400A-F) gemäß einem der zuvor genannten Ansprüche, **dadurch gekennzeichnet, dass** der zweite Mantelbereich (140) zumindest teilweise direkt an den ersten Mantelbereich (130) angrenzt.

14. Wellenleiter-Bauelement (100A-F, 200A-E, 300A-B, 400A-F) gemäß einem der zuvor genannten Ansprüche, **dadurch gekennzeichnet, dass** der zweite Mantelbereich (140) zumindest teilweise direkt an den Wellenleiterkern (120, 121, 122, 123, 124) angrenzt.

15. Wellenleiter-Bauelement (100A-F, 200A-E, 300A-B, 400A-F) gemäß einem der zuvor genannten Ansprüche, **dadurch gekennzeichnet, dass** der Wellenleiterkern (120, 121, 122, 123, 124) zumindest teilweise über den Leitungsbereich (151) mit dem Leitungsbereich (150) elektrisch leitfähig verbunden ist.

16. Wellenleiter-Bauelement (100A-F, 200A-E, 300A-B, 400A-F) gemäß einem der zuvor genannten Ansprüche, **dadurch gekennzeichnet, dass** das Wellenleiter-Bauelement (100A-F, 200A-E, 300A-B, 400A-F) zusätzlich mindestens einen elektrisch leitfähigen Leitungsbereich (153) bzw. Kontakt aufweist, der zumindest teilweise mit dem Wellenleiterkern (120, 121, 122, 123, 124) elektrisch leitfähig verbunden ist.

17. Wellenleiter-Bauelement (100A-F, 200A-E, 300A-B, 400A-F) gemäß einem der zuvor genannten Ansprüche, **dadurch gekennzeichnet, dass** die Konzentration an freien Ladungsträger zumindest im Wellenleiterkern (120, 121, 122, 123, 124) weniger als $10^{19}$ cm$^{-3}$ oder weniger als $10^{18}$ cm$^{-3}$ oder weniger als $10^{17}$ cm$^{-3}$ beträgt.

18. Wellenleiter-Bauelement (100A-F, 200A-E, 300A-B, 400A-F) gemäß einem der zuvor genannten Ansprüche, **dadurch gekennzeichnet, dass** das dielektrische Material im zweiten Mantelbereich (140) transparent oder transluzent gegenüber Licht ist und derart eingerichtet ist, dass Licht zumindest teilweise durch den zweiten Mantelbereich (140) hindurch leitbar ist.

19. Wellenleiter-Bauelement (100A-F, 200A-E, 300A-B, 400A-F) gemäß einem der zuvor genannten Ansprüche, **dadurch gekennzeichnet, dass** das dielektrische Material des zweiten Mantelbereichs (140) zumindest teilweise ein organisches Material aufweist oder daraus gebildet ist.

20. Wellenleiter-Bauelement (100A-F, 200A-E, 300A-B, 400A-F) gemäß einem der zuvor genannten Ansprüche, **dadurch gekennzeichnet, dass** der zweite Mantelbereich (140) zumindest ein Material aus der Gruppe von dielektrischen Materialien aufweist bzw. daraus gebildet ist, wobei die Gruppe von dielektrischen Materialien aufweist: $Al_2O_3$, $ZrO_2$, $ZrSiO_4$, HfO2, $HfSiO_4$, $Pr_2O_3$, $Gd_2O_3$, $Y_2O_3$, $La_2O_3$, $Ta_2O_5$, $TiO_2$, $BaTiO_3$, $SrTiO_3$, oder $BaSrTiO_3$ oder Kombinationen davon.

21. Wellenleiter-Bauelement (100A-F, 200A-E, 300A-B, 400A-F) gemäß einem der zuvor genannten Ansprüche, **dadurch gekennzeichnet, dass** der Wellenleiter (110) zumindest teilweise Silizium aufweist oder daraus gebildet ist.

22. Wellenleiter-Bauelement (100A-F, 200A-E, 300A-B, 400A-F) gemäß einem der zuvor genannten Ansprüche, **dadurch gekennzeichnet, dass** das Wellenleiter-Bauelement (100A-F, 200A-E, 300A-B, 400A-F) zumindest ein Substrat (160) aufweist, welches zumindest teilweise $SiO_2$ aufweist oder daraus gebildet ist.

23. Wellenleiter-Bauelement (100A-F, 200A-E, 300A-B, 400A-F) gemäß einem der zuvor genannten Ansprüche, **dadurch gekennzeichnet, dass** das elektro-optische Material des ersten Mantelbereichs (130) zumindest teilweise ein organisches Material aufweist oder daraus gebildet ist.

24. Wellenleiter-Bauelement (100A-F, 200A-E, 300A-B, 400A-F) gemäß einem der zuvor genannten Ansprüche, **dadurch gekennzeichnet, dass** das elektro-optischen Material des ersten Mantelbereichs (130) zumindest teilweise ein ferroelektrisches Material aufweist oder daraus gebildet ist.

25. Wellenleiter-Bauelement (100A-F, 200A-E, 300A-B, 400A-F) gemäß einem der zuvor genannten Ansprüche, **dadurch gekennzeichnet, dass** der Wellenleiterkern (120, 121, 122, 123, 124) Elemente mit einer maximalen Abmessung unterhalb der Materialwellenlänge oder unterhalb der halben Materialwellenlänge des Wellenleiterkernmaterials aufweist.

26. Wellenleiter-Bauelement **(100A-F, 200A-E, 300A-B, 400A-F)** gemäß einem der zuvor genannten Ansprüche, **dadurch gekennzeichnet, dass** der Wellenleiter **(110)** zumindest teilweise mittels photonischer Kristalle gebildet ist oder solche aufweist.


**Claims**

1. Waveguide component **(100A-F, 200A-E, 300A-B, 400A-F)**, comprising:

    **1.1.** a waveguide **(110),** which is at least partially transparent to light or translucent, and is configured in such a way that light can be conducted at least partially through the waveguide, comprising:

    **1.1.1.** a waveguide core **(120, 121, 122, 123, 124),** wherein the waveguide core **(120, 121, 122, 123, 124)** is formed from one element or from multiple elements spatially separated from one another, which comprise at least one waveguide core material or are formed from this;
    **1.1.2.** a first casing region **(130),** which comprises at least one electro-optical material or is formed from this, wherein the first casing region **(130)** is at least partially in reciprocal effect with light conducted in the waveguide **(110),** and wherein the first casing region **(130)** is arranged at least partially around the one element or the multiple elements of the waveguide core **(120, 121, 122, 123, 124);** and
    **1.1.3.** a second casing region **(140),** which comprises at least one dielectric material or is formed from this, wherein the second casing region **(140)** is arranged partially around the first casing region **(130)** and/or the waveguide core **(120, 121, 122, 123, 124);**

    **1.2.** at least two line regions **(150, 152),** which are at least partially electrically conductive,

    **1.2.1.** wherein an electrical modulation signal is imposed between the line regions **(150, 152),**
    **1.2.2.** wherein the line regions **(150, 152)** are arranged at least partially along the optical waveguide **(110)** in such a way that the line regions **(150, 152)** lie opposite one another and the waveguide **(110)** is arranged at least partially between the line regions;
    **1.2.3.** wherein the modulation signal forms an electrical field, of which the field lines penetrate at least partially both the second casing region **(140)** as well as the first casing region **(130), characterised in that**
    **1.2.4.** The dielectric material of the second casing region **(140)** exhibits in the frequency range of the modulation signal a higher electrical refractive index than the electro-optical material of the first casing region **(130).**

2. Waveguide component **(100A-F, 200A-E, 300A-B, 400A-F)** according to claim 1, **characterised in that** the electrical refractive index of the dielectric material in the second casing region **(140),** at a frequency of the modulation signal of 10 GHz lies at more than a factor of 1.8 above the electrical refractive index of the electro-optical material of the first casing region (130).

3. Waveguide component **(100A-F, 200A-E, 300A-B, 400A-F)** according to claim 1, **characterised in that** the dielectric material of the second casing region **(140)** exhibits an electrical refractive index of at least 3.5, 4.5, 8, 10, 15, 20 or 25 in a frequency range of a modulation signal of between 5 GHz and 40 GHz.

4. Waveguide component **(100A-F, 200A-E, 300A-B, 400A-F)** according to any one of the preceding claims, **characterised in that** the electrical refractive index of the waveguide core **(120, 121, 122, 123, 124)** is higher than the electrical refractive index of the first casing region **(130).**

5. Waveguide component **(100A-F, 200A-E, 300A-B, 400A-F)** according to any one of the preceding claims, **characterised in that** the electrical refractive index of the waveguide core **(120, 121, 122, 123, 124)** amounts to at least 3.

6. Waveguide component **(100A-F, 200A-E, 300A-B, 400A-F)** according to any one of the preceding claims, **characterised in that** the electrical refractive index of the electro-optical material in the first casing region (130) amounts to a maximum of 9.

7. Waveguide component **(100A-F, 200A-E, 300A-B, 400A-F)** according to any one of the preceding claims, **charac-**

**terised in that** the waveguide component **(100A-F, 200A-E, 300A-B, 400A-F)** exhibits a lateral structuring, wherein initially the waveguide core **(120, 121, 122, 123, 124),** the line regions **(150, 152),** and at least the dielectric material of the second casing region **(140)** are formed in a planar arrangement, onto which electro-optical active material is then applied.

8. Waveguide component **(100A-F, 200A-E, 300A-B, 400A-F)** according to any one of the preceding claims, **characterised in that** the waveguide core **(120, 121, 122, 123, 124),** the first casing region **(130),** the second casing region **(140),** and the line regions **(150, 151)** are arranged at least partially next to one another on a common substrate **(160).**

9. Waveguide component **(100A-F, 200A-E, 300A-B, 400A-F)** according to any one of the preceding claims, **characterised in that** the waveguide core **(120, 121, 122, 123, 124)** exhibits at least partially electro-optical properties.

10. Waveguide component **(100A-F, 200A-E, 300A-B, 400A-F)** according to any one of the preceding claims, **characterised in that** the waveguide core **(120)** is formed as a slot-waveguide **(121, 122, 123).**

11. .Waveguide component **(100A-F, 200A-E, 300A-B, 400A-F)** according to claim 10, **characterised in that** the difference between the optical refractive index of the waveguide core and of the first casing region in the slot-waveguide **(121, 122, 123)** amounts to more than 0.5 or more than 1.0 or more than 1.5.

12. Waveguide component **(100A-F, 200A-E, 300A-B, 400A-F)** according to any one of the preceding claims, **characterised in that** the second casing region **(140)** is at least partially directly adjacent to the electrically conductive line regions **(150).**

13. Waveguide component **(100A-F, 200A-E, 300A-B, 400A-F)** according to any one of the preceding claims, **characterised in that** the second casing region **(140)** is at least partially directly adjacent to the first casing region **(130).**

14. Waveguide component **(100A-F, 200A-E, 300A-B, 400A-F)** according to any one of the preceding claims, **characterised in that** the second casing region **(140)** is at least partially directly adjacent to the waveguide core **(120, 121, 122, 123, 124).**

15. Waveguide component **(100A-F, 200A-E, 300A-B, 400A-F)** according to any one of the preceding claims, **characterised in that** the waveguide core (120, **121, 122, 123, 124)** is connected in an electrically conductive manner, at least partially by way of the line region **(151),** to the line region **(150).**

16. Waveguide component **(100A-F, 200A-E, 300A-B, 400A-F)** according to any one of the preceding claims, **characterised in that** the waveguide component **(100A-F, 200A-E, 300A-B, 400A-F)** additionally comprises at least one electrically conductive casing region **(153)** or contact, which is at least partially connected in an electrically conductive manner to the waveguide **(120, 121, 122, 123, 124).**

17. Waveguide component **(100A-F, 200A-E, 300A-B, 400A-F)** according to any one of the preceding claims, **characterised in that** the concentration of free charge carriers at least in the waveguide core **(120, 121, 122, 123, 124)** amounts to less than $10^{19}$ cm$^{-3}$ or less than $10^{18}$ cm$^{-3}$ or less than $10^{17}$ cm$^{-3}$.

18. Waveguide component **(100A-F, 200A-E, 300A-B, 400A-F)** according to any one of the preceding claims, **characterised in that** the electrical material in the second casing region **(140)** is transparent or translucent to light, and is configured in such a way that light can be conducted at least partially through the second casing region **(140).**

19. Waveguide component **(100A-F, 200A-E, 300A-B, 400A-F)** according to any one of the preceding claims, **characterised in that** the dielectric material of the second casing region **(140)** comprises at least partially an organic material or is formed from this.

20. Waveguide component **(100A-F, 200A-E, 300A-B, 400A-F)** according to any one of the preceding claims, **characterised in that** the second casing region **(140)** comprises at least one material from a group of dielectric materials or is formed from this, wherein the group of dielectric materials comprises: $Al_2O_3$, $ZrO_2$, $ZrSiO_4$, HfO2, $HfsiO_4$, $Pr_2O_3$, $Gd_2O_3$, $Y_2O_3$, $La_2O_3$, $Ta_2O_5$, $TiO_2$, $BaTiO_3$, $SrTiO_3$, or $BaSrTiO_3$, or combinations of these.

21. Waveguide component **(100A-F, 200A-E, 300A-B, 400A-F)** according to any one of the preceding claims, **characterised in that** the waveguide **(110)** comprises at least part silicone or is formed from this.

**22.** Waveguide component **(100A-F, 200A-E, 300A-B, 400A-F)** according to any one of the preceding claims, **characterised in that** the waveguide component **(100A-F, 200A-E, 300A-B, 400A-F)** comprises at least one substrate **(160)** which comprises at least partially SiO$_2$ or is formed from it.

**23.** Waveguide component **(100A-F, 200A-E, 300A-B, 400A-F)** according to any one of the preceding claims, **characterised in that** the electro-optical material of the first casing region **(130)** comprises at least partially an organic material or is formed from this.

**24.** Waveguide component **(100A-F, 200A-E, 300A-B, 400A-F)** according to any one of the preceding claims, **characterised in that** the electro-optical material of the first casing region **(130)** comprises at least partially a ferro-electrical material or is formed from this.

**25.** Waveguide component **(100A-F, 200A-E, 300A-B, 400A-F)** according to any one of the preceding claims, **characterised in that** the waveguide core **(120, 121, 122, 123, 124)** comprises elements with maximum dimensions below the material wavelength or below half the material wavelength of the waveguide core material.

**26.** Waveguide component **(100A-F, 200A-E, 300A-B, 400A-F)** according to any one of the preceding claims, **characterised in that** the waveguide **(110)** is formed at least partially by photonic crystals or comprises such.

**Revendications**

**1.** Composant guide d'ondes (100A-F, 200A-E, 300A-B, 400A-F), comprenant :

1.1 un guide d'ondes (110) qui est au moins partiellement transparent ou translucide à la lumière et installé de façon que la lumière puisse être conduite au moins partiellement à travers le guide d'ondes, comprenant :

1.1.1. un noyau de guide d'ondes (120, 121, 122, 123, 124), ce noyau de guide d'ondes (120, 121, 122, 123, 124) étant en un élément ou plusieurs éléments séparés les uns des autres dans l'espace et qui ont au moins un matériau de noyau de guide d'ondes ou sont réalisés avec celui-ci;
1.1.2. une première zone enveloppe (130) ayant au moins une matière électro-optique ou étant réalisée avec celle-ci, cette première zone enveloppe (130) coopérant au moins en partie avec la lumière guidée dans le guide d'ondes (110) et la première zone enveloppe (130) entourant au moins en partie l'élément ou plusieurs éléments du noyau de guide d'ondes (120, 121, 122, 123, 124) ; et
1.1.3. une seconde zone-enveloppe (140) ayant au moins une matière diélectrique ou étant réalisée avec celle-ci, la seconde zone-enveloppe (140) entourant au moins partiellement la première zone-enveloppe (130) et/ou le noyau de guide d'ondes (120, 121, 122, 123, 124);

1.2 au moins deux zones de guidage (150, 152) qui sont au moins partiellement électro-conductrices,

1.2.1. on applique un signal de modulation électrique entre les zones conductrices (150, 152),
1.2.2 les zones conductrices (150, 152) étant prévues au moins en partie le long du guide d'ondes optique (110) pour que les zones conductrices (150, 152) puissent être face à face et que le guide d'ondes (110) se trouve au moins en partie entre les zones conductrices ;
1.2.3 dans lequel

le signal de modulation forme un champ électrique dont les lignes de champ traversent au moins en partie à la fois la seconde zone-enveloppe (140) et la première zone-enveloppe (130),
**caractérisé en ce que**

1.2.4 la matière diélectrique de la seconde zone enveloppe (140) présente un indice de réfraction électrique plus élevé dans la plage de fréquences du signal de modulation que la matière électro-optique de la première zone enveloppe (130).

**2.** Composant guide d'ondes (100A-F, 200A-E, 300A-B, 400A-F), selon la revendication 1,
**caractérisé en ce que**
l'indice de réfraction électrique de la matière diélectrique dans la seconde plage enveloppe (140) pour une fréquence du signal de modulation de 10 GHz, dépasse de plus d'un coefficient 1, 8 l'indice de réfraction électrique de la matière électro-optique de la première plage enveloppe (130).

3. Composant guide d'ondes (100A-F, 200A-E, 300A-B, 400A-F), selon la revendication 1,
   **caractérisé en ce que**
   la matière diélectrique de la seconde zone enveloppe (140) a un second indice de réfraction électrique d'au moins 3,5 ; 4,5 ; 8 ; 10 ; 15 ; 20 ou 25 dans une plage de fréquences d'un signal de modulation comprises entre 5 GHz et 40 GHz.

4. Composant guide d'ondes (100A-F, 200A-E, 300A-B, 400A-F), selon l'une des revendications précédentes,
   **caractérisé en ce que**
   l'indice de réfraction électrique du noyau de guide d'ondes (120, 121, 122, 123, 124) est supérieur à l'indice de réfraction électrique de la première zone enveloppe (130).

5. Composant guide d'ondes (100-A-F, 200A-E, 300A-B, 400A-F) selon l'une des revendications précédentes,
   **caractérisé en ce que**
   l'indice de réfraction électrique du noyau de guide d'ondes (120, 121, 122, 123, 124) est au moins égal à 3.

6. Composant guide d'ondes (100-A-F, 200A-E, 300A-B, 400A-F) selon l'une des revendications précédentes,
   **caractérisé en ce que**
   l'indice de réfraction électrique de la matière électro-optique de la première zone enveloppe (130) est au plus égal à 9.

7. Composant guide d'ondes (100-A-F, 200A-E, 300A-B, 400A-F) selon l'une des revendications précédentes,
   **caractérisé en ce que**
   le composant guide d'ondes (100-A-F, 200A-E, 300A-B, 400A-F) a une structure latérale dont tout d'abord le noyau de guide d'ondes (120, 121, 122, 123, 124), les zones conductrices (150, 152) et au moins la matière diélectrique de la seconde zone enveloppe (140) sont dans une disposition planaire sur laquelle on applique une matière électro-optique active.

8. Composant guide d'ondes (100-A-F, 200A-E, 300A-B, 400A-F) selon l'une des revendications précédentes,
   **caractérisé en ce que**
   le noyau de guide d'ondes (120, 121, 122, 123, 124), la première zone enveloppe (130), la seconde zone enveloppe (140) et les zones de conduction (150, 151) sont au moins en partie juxtaposées sur un substrat commun (160).

9. Composant guide d'ondes (100-A-F, 200A-E, 300A-B, 400A-F) selon l'une des revendications précédentes,
   **caractérisé en ce que**
   le noyau de guide d'ondes (120, 121, 122, 123, 124) a au moins en partie des propriétés électro-acoustiques.

10. Composant guide d'ondes (100-A-F, 200A-E, 300A-B, 400A-F) selon l'une des revendications précédentes,
    **caractérisé en ce que**
    le noyau de guide d'ondes (120) est réalisé sous la forme d'un guide d'ondes à fentes (121, 122, 123).

11. Composant guide d'ondes (100-A-F, 200A-E, 300A-B, 400A-F) selon la revendication 10,
    **caractérisé en ce que**
    la différence entre l'indice de réfraction optique du noyau de guide d'ondes et la première zone enveloppe du guide d'ondes à fentes (121, 122, 123) est supérieure à 0,5 ou supérieure à 1,0 ou supérieure à 1,5.

12. Composant guide d'ondes (100-A-F, 200A-E, 300A-B, 400A-F) selon l'une des revendications précédentes,
    **caractérisé en ce que**
    la seconde zone enveloppe (140) est au moins en partie directement adjacente aux zones de conduction électro-conductrices (150).

13. Composant guide d'ondes (100-A-F, 200A-E, 300A-B, 400A-F) selon l'une quelconque des revendications précédentes,
    **caractérisé en ce que**
    la seconde zone enveloppe (140) est au moins en partie directement adjacente à la première zone enveloppe (130).

14. Composant guide d'ondes (100-A-F, 200A-E, 300A-B, 400A-F) selon l'une des revendications précédentes,
    **caractérisé en ce que**

la seconde zone enveloppe (140) est au moins en partie directement adjacente au noyau de guide d'ondes (120, 121, 122, 123, 124).

15. Composant guide d'ondes (100-A-F, 200A-E, 300A-B, 400A-F) selon l'une des revendications précédentes, **caractérisé en ce que**
le noyau de guide d'ondes (120, 121, 122, 123, 124) est relié au moins partiellement par la zone de conduction (151) à la zone de conduction (150) par une liaison électro-conductrice.

16. Composant guide d'ondes (100-A-F, 200A-E, 300A-B, 400A-F) selon l'une des revendications précédentes, **caractérisé en ce que**
le composant de guide d'ondes (100-A-F, 200A-E, 300A-B, 400A-F) comprend en plus au moins une zone de conduction électro-conductrice (153) ou un contact relié au moins en partie au noyau de guide d'ondes (120, 121, 122, 123, 124) par une liaison électro-conductrice.

17. Composant guide d'ondes (100-A-F, 200A-E, 300A-B, 400A-F) selon l'une des revendications précédentes, **caractérisé en ce que**
la concentration dans le support de charges libre au moins dans le noyau de guide d'ondes (120, 121, 122, 123, 124) est inférieure à $10^{19}$ cm$^{-3}$ ou inférieure à $0^{18}$ cm$^{-3}$ ou inférieure à $10^{17}$ cm$^{-3}$.

18. Composant guide d'ondes (100-A-F, 200A-E, 300A-B, 400A-F) selon l'une des revendications précédentes, **caractérisé en ce que**
la matière diélectrique dans la seconde zone enveloppe (140) est transparente ou translucide à la lumière et elle est installée de façon que la lumière soit guidée au moins en partie à travers la seconde zone enveloppe (140).

19. Composant guide d'ondes (100-A-F, 200A-E, 300A-B, 400A-F) selon l'une des revendications précédentes, **caractérisé en ce que**
la matière diélectrique de la seconde zone enveloppe (140) comporte au moins en partie une matière organique ou est réalisée avec celle-ci.

20. Composant guide d'ondes (100-A-F, 200A-E, 300A-B, 400A-F) selon l'une des revendications précédentes, **caractérisé en ce que**
la seconde zone enveloppe (140) comprend au moins une matière du groupe des matières diélectriques ou est réalisée avec celles-ci, ce groupe des matières diélectriques comprenant : $Al_2O_3$, $ZrO_2$, $ZrSiO_4$, $HfO_2$, $HfSiO_4$, $Pr_2O_3$, $Gd_2O_3$, $Y_2O_3$, $La_2O_3$, $Ta_2O_5$, $TiO_2$, $BaTiO_3$, $SrTiO_3$, $BaSrTiO_3$ ou des combinaisons de celles-ci.

21. Composant guide d'ondes (100-A-F, 200A-E, 300A-B, 400A-F) selon l'une des revendications précédentes, **caractérisé en ce que**
le guide d'ondes (110) comporte au moins en partie du silicium ou est réalisé avec celui-ci.

22. Composant guide d'ondes (100-A-F, 200A-E, 300A-B, 400A-F) selon l'une des revendications précédentes, **caractérisé en ce que**
le composant de guide d'ondes (100-A-F, 200A-E, 300A-B, 400A-F) comporte au moins un substrat (160) qui comporte au moins en partie $SiO_2$ ou est réalisé avec $SiO_2$.

23. Composant guide d'ondes (100-A-F, 200A-E, 300A-B, 400A-F) selon l'une des revendications précédentes, **caractérisé en ce que**
la matière électro-optique de la première zone enveloppe (130) comporte au moins en partie une matière organique ou est réalisée avec celle-ci.

24. Composant guide d'ondes (100-A-F, 200A-E, 300A-B, 400A-F) selon l'une des revendications précédentes, **caractérisé en ce que**
la matière électro-optique de la première zone enveloppe (130) comporte au moins en partie une matière ferroélectrique ou est réalisée avec celle-ci.

25. Composant guide d'ondes (100-A-F, 200A-E, 300A-B, 400A-F) selon l'une des revendications précédentes, **caractérisé en ce que**
le noyau de guide d'ondes (120, 121, 122, 123, 124) comporte des éléments de dimensions maximales inférieures à la longueur d'onde de la matière ou inférieures à la demi-longueur d'onde de la matière du noyau de guide d'ondes.

26. Composant guide d'ondes (100-A-F, 200A-E, 300A-B, 400A-F) selon l'une des revendications précédentes, **caractérisé en ce que**
le guide d'ondes (110) est formé au moins en partie avec des cristaux photoniques ou comporte de tels cristaux.

# Fig. 1-1

**1A**　　　　　　　　　　　　　　**100A**

**1B**

**100B**

# Fig. 1-2

**1C**     **100C**

150
130
140
110
150
121

**1D**     **100D**

150
140
130
110
122
150

**1E**     **100E**

151
150
130
140
110
123    151    150

**1F**     **100F**

152
130
140
110
124    151    150

# Fig. 2-1

## 2A · <u>200A</u>

140 170 130 140

150

150

160

120

## 2B · <u>200B</u>

140 170 130 140

150

150

160

121

# Fig. 2-2

**2C**        <u>200C</u>

140   170   130   140

150

150

160

122

**2D**        <u>200D</u>

140   160   130   140

150

160

150

151    123    151

**2E**        <u>200E</u>

140      152    130

150

150

160

124      151

# Fig. 3-1

**3A**　　　　　　　　　　　　　　　　**300A**

140　　130　　140

150

150

160

180

121

**3B**　　　　　　　　　　　　　　　　**300B**

153

150

140

130

190

190

191

190

191　121

140

200

150

153

201

# Fig. 3-2

**3C**    130    **300C**

140

140    160    121

**3D**    **300D**    130

140

140    160    121

# Fig. 4-1

**4A**                                    **400A**

140 130 140

150

A                                        150   A

400-1

160

180

400-2  400-3  120

**4B**                                    **400B**

140 120 140

150                                      150

130

400-7

400-5

400-6

**4C**                                    **400C**

140 125 140

150                                      150

130

400-7

400-5

400-6

# Fig. 4-2

**4D** 140 130 140 **400D**

B 150                                      150 B

— 160

— 180

400-4      123 151

**4E** 140,151 123 140,151 **400E**

150                                     150

130

400-8

400-9

**4F** 140 126 140 **400F**

150                                     150

130

400-8

400-9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006045102 B4
- WO 2011025051 A1
- US 8081851 B2
- WO 2014201269 A1
- US 20160313579 A1


**In der Beschreibung aufgeführte Nicht-Patentliteratur**

- **C. KOOS ; J. BROSI ; M. WALDOW ; W. FREUDE ; J. LEUTHOLD.** Silicon-on-insulator modulators for next-generation 100 Gbit/s-ethernet. *33rd European Conference and Exhibition of Optical Communication (ECOC),* 2007
- **J. LEUTHOLD et al.** Silicon organic hybrid technology - A platform for practical nonlinear optics. *Proc. IEEE,* Juli 2009, vol. 97 (7), 1304-1316
- **J. LEUTHOLD et al.** Silicon-organic hybrid electro-optical devices. *IEEE J. Sel. Topics Quantum Electron.,* November 2013, vol. 19 (6), 114-126
- **D. KORN et al.** Silicon-organic hybrid (SOH) IQ modulator for 16 QAM at 112 Gbit/s. *2013 CONFERENCE ON LASERS & ELECTRO-OPTICS EUROPE & INTERNATIONAL QUANTUM ELECTRONICS CONFERENCE CLEO EUROPE/IQEC,* Mai 2013, 1